(19) Europäisches Patentamt
European Patent Office
Office européen des brevets

(11) EP 0 893 245 A1

(12) **EUROPEAN PATENT APPLICATION**
published in accordance with Art. 158(3) EPC

(43) Date of publication:
**27.01.1999 Bulletin 1999/04**

(21) Application number: **98900680.4**

(22) Date of filing: **21.01.1998**

(51) Int. Cl.$^6$: **B32B 25/14**, B32B 27/28, C08J 7/04

(86) International application number:
**PCT/JP98/00215**

(87) International publication number:
**WO 98/31540 (23.07.1998 Gazette 1998/29)**

(84) Designated Contracting States:
**DE FR GB IT NL**

(30) Priority: **21.01.1997 JP 8885/97**
**21.01.1997 JP 8886/97**
**30.01.1997 JP 16875/97**
**08.12.1997 JP 356253/97**
**08.12.1997 JP 356254/97**
**08.12.1997 JP 356259/97**

(71) Applicant:
**Mitsui Chemicals, Inc.**
**Tokyo 100 (JP)**

(72) Inventors:
- **KAWASAKI, Masaaki**
**Ichihara-shi Chiba 299-01 (JP)**
- **TOJO, Tetsuo**
**Ichihara-shi Chiba 299-01 (JP)**
- **OKADA, Keiji,**
**Mitsui Chemicals, Inc.**
**Waki-cho Kuga-gun Yamaguchi 740 (JP)**
- **MORIZONO, Kenichi,**
**Mitsui Chemicals, Inc.**
**Waki-cho Kuga-gun Yamaguchi 740 (JP)**
- **TAKIMOTO, Kazuyuki,**
**Mitsui Chemicals, Inc.**
**Waki-cho Kuga-gun Yamaguchi 740 (JP)**

(74) Representative:
**Cresswell, Thomas Anthony**
**J.A. KEMP & CO.**
**14 South Square**
**Gray's Inn**
**London WC1R 5LX (GB)**

# (54) VULCANIZED MOLDING HAVING SURFACE DECORATIVE LAYER, PAINTED THERMOPLASTIC RESIN COMPOSITION, AND PAINTED ELASTOMER COMPOSITION

(57) Disclosed is a vulcanized molded product having a surface decorative layer, comprising a vulcanized product of an unsaturated olefin copolymer (A) and a decorative layer provided on a surface of the vulcanized product, or comprising a vulcanized product of an olefin elastomer composition and a decorative layer provided on a surface of the vulcanized product, said olefin elastomer composition comprising an unsaturated olefin copolymer (A) and an ethylene/α-olefin copolymer rubber (E). The unsaturated olefin copolymer (A) is obtained from (i) ethylene, (ii) an aromatic vinyl compound, (iii) a non-conjugated polyene, and optionally, (iv) an α-olefin of 3 to 20 carbon atoms. Since the vulcanized molded product having a surface layer has excellent adhesion properties between the molded product and the surface decorative layer and shows excellent mechanical strength, it can be widely used for automotive industrial parts and building materials. Also disclosed is a coated molded product of a thermoplastic resin composition, comprising a molded product of a thermoplastic resin composition and a coating film formed on the molded product, said thermoplastic resin composition comprising an ethylene/aromatic vinyl compound random copolymer and another thermoplastic resin. Further disclosed is a coated molded product of an elastomer composition, comprising a molded product of an elastomer composition and a coating film formed on the molded product, said elastomer composition comprising an ethylene/aromatic vinyl compound random copolymer and an elastomer. Since the coated molded products have excellent adhesion properties between the molded product and the coating film, they can be widely used for industrial materials and medical appliances which need to have coating films.

EP 0 893 245 A1

## Description

### TECHNICAL FIELD

The present invention relates to vulcanized molded products having surface decorative layer, and more particularly to vulcanized molded products having surface decorative layer, which have excellent adhesion properties between the molded product and the surface decorative layer such as a coating film and show excellent mechanical strength.

The present invention also relates to coated molded products of thermoplastic resin compositions and coated molded products of elastomer compositions, and more particularly to coated molded products of thermoplastic resin compositions and coated molded products of elastomer compositions, which can be favorably used as, for example, automotive interior and exterior trim materials.

### BACKGROUND ART

Ethylene/propylene copolymer rubbers (EPR) and ethylene/propylene/diene copolymer rubbers (EPDM) are widely used for automotive parts, electric wire materials, electric and electronic parts, building and civil engineering materials, industrial parts, etc., because they have no unsaturated bond in the molecular main chain and are superior to general-purpose conjugated diene rubbers in heat resistance, weathering resistance and ozone resistance. In these uses, the surfaces of the molded products of the rubbers are subjected to urethane coating or the molded products are combined with other members such as metals or resins using adhesives, to improve designing effects or surface slip properties. The EPR and EPDM, however, have insufficient affinity for other resins because they have no polar group in the molecule, and therefore, prior to the surface decoration such as coating of the surface of the molded product or adhesion bonding of other members, the molded product of EPR or EPDM needs to be subjected to pretreatment such as surface roughening, surface washing with organic solvent or primer coating to improve affinity of the surface of the molded product for other resins. The pretreatments, however, bring about various problems. For example, the pretreating equipment costs much, the process for producing rubber products become complicated, and the production cost becomes high because the pretreatment needs a considerably long period of time. Further, it is difficult to carry out the surface roughening treatment in case of products of complicated shapes.

To cope with the problems, Japanese Patent Laid-Open Publication No. 306223/1994 proposes that a tackifier of polar resin type is added to an ethylene/propylene rubber composition as an improver for improving adhesion to a surface decorative layer. However, the addition of the tackifier to the ethylene/propylene rubber composition causes problems, for example, lowering of strength of the resulting vulcanized rubber.

Accordingly, there has been desired development of rubber molded products which have excellent mechanical strength and show excellent adhesion properties to surface decorative layers even if surface treatment such as surface roughening, surface washing with organic solvent or primer coating is not carried out.

In the uses of thermoplastic resins or elastomers for automobiles, molded products thereof are frequently coated to improve surface appearance of the manufactured articles or to improve various properties such as weathering resistance, surface hardness and chemical resistance. Some of the thermoplastic resins and elastomers, however, show poor adhesion to coating films, and therefore they are desired to be improved in the adhesion properties.

The present invention is intended to solve such problems associated with the prior art as described above, and an object of the invention is to provide a vulcanized molded product having a surface decorative layer, which has excellent mechanical strength and shows excellent adhesion properties between the molded product and the surface decorative layer even if surface treatment such as surface roughening, surface washing with organic solvent or primer coating is not carried out.

In general, coatings do not adhere to, particularly, polyolefin resins or polyolefin elastomers when the resins or the elastomers are used as they are. Therefore, if molded products of the polyolefin resins or the polyolefin elastomers are coated with, for example, urethane resin coatings, the molded products need to be subjected in advance to surface treatment such as electrical treatment, e.g., corona discharge treatment, mechanical surface roughening treatment, flame treatment, oxygen treatment or ozone treatment, to improve affinity of the surfaces of the molded products for other resins. In order to carry out such surface treatments, the surfaces of the molded products are generally subjected in advance to washing with solvents such as alcohols and aromatic hydrocarbons or washing with vapors of solvents such as trichlene, perchloroethylene, pentachloroethylene and toluene. For carrying out the surface treatments, treating apparatuses are necessary, and this is disadvantageous from the viewpoint of equipment cost. Moreover, these treatments take a considerably long period of time.

Besides the above coating method after the pretreatment, a method comprising undercoating a molded product with a primer which is adherable to the polyolefin resin and then coating the primer layer with a coating such as an urethane resin coating is also utilized. In this method, however, the coating process needs a long period of time because primer coating and final coating are both necessary, and the cost of the final product becomes high because the coating

film has a two-layer structure.

The coated molded product of a thermoplastic resin composition and the coated molded product of an elastomer composition according to the present invention are made under such circumstances as described above, and another object of the invention is to provide a coated molded product of a thermoplastic resin composition and a coated molded product of an elastomer composition, each of which has excellent adhesion properties between the molded product and the coating film. A further object of the invention is to provide a coated molded product of a thermoplastic resin composition and a coated molded product of an elastomer composition, each of which has excellent mechanical strength. A still further object of the invention is to provide a coated molded product of a thermoplastic resin composition and a coated molded product of an elastomer composition, each of which has excellent surface appearance.

## DISCLOSURE OF INVENTION

One embodiment of the vulcanized molded product having a surface decorative layer according to the present invention comprises a vulcanized product of (A) an unsaturated olefin copolymer and a decorative layer provided on a surface of the vulcanized product, said unsaturated olefin copolymer (A) being obtained from:

(i) ethylene,
(ii) an aromatic vinyl compound represented by the following formula (I),
(iii) a non-conjugated polyene,
and optionally
(iv) an $\alpha$-olefin of 3 to 20 carbon atoms;

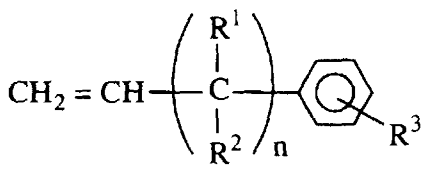

(I)

wherein $R^1$, $R^2$ and $R^3$ may be the same or different and are each a hydrogen atom or an alkyl group of 1 to 8 carbon atoms, and n is an integer of 0 to 5. The vulcanized product may be a vulcanized product of an unsaturated olefin copolymer composition comprising the above-mentioned unsaturated olefin copolymer (A) and at least one compounding ingredient selected from (B) a vulcanizing agent, (C) a reinforcing agent and (D) a liquid softening agent.

In the present invention, the non-conjugated polyene (iii) is, for example, at least one non-conjugated triene or tetraene selected from compounds which are represented by the following formula (II-a) and from which constituent units represented by the following formula (II-b) are derived and compounds which are represented by the following formula (III-a) and from which constituent units represented by the following formula (III-b) are derived.

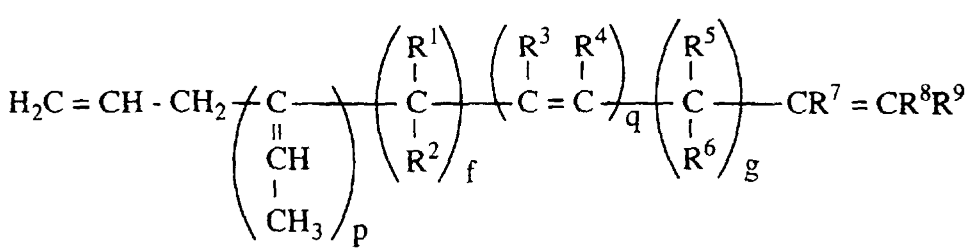

(II-a)

wherein p and q may be the same as or different from each other, and are each 0 or 1, with the proviso that each of p and q is not 0 at the same time; f is an integer of 0 to 5, with the proviso that f is not 0 when p and q are each 1; g is an integer of 1 to 6; $R^1$, $R^2$, $R^3$, $R^4$, $R^5$, $R^6$ and $R^7$ may be the same or different and are each a hydrogen atom or an alkyl group of 1 to 5 carbon atoms; $R^8$ is a hydeogen atom or an alkyl group of 1 to 5 carbon atoms; and $R^9$ is a hydrogen atom, an alkyl group of 1 to 5 carbon atoms or a group represented by $-(CH_2)_n-CR^{10}=CR^{11}R^{12}$ (n is an integer of 1 to

5, $R^{10}$ and $R^{11}$ may be the same or different and are each a hydrogen atom or an alkyl group of 1 to 5 carbon atoms, and $R^{12}$ is an alkyl group of 1 to 5 carbon atoms), with the proviso that when p and q are each 1, $R^9$ is a hydrogen atom or an alkyl group of 1 to 5 carbon atoms.

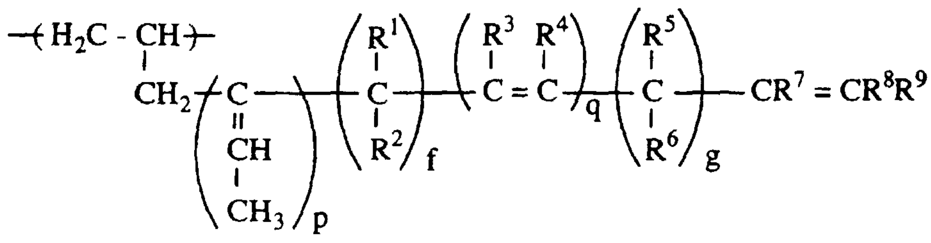

(II-b)

wherein p, q, f, g, and $R^1$ to $R^9$ have the same meanings as in the formula (II-a).

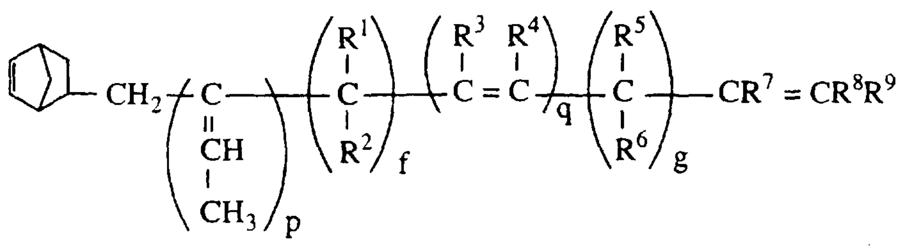

(III-a)

wherein p, q, f, g, and $R^1$ to $R^9$ have the same meanings as in the formula (II-a).

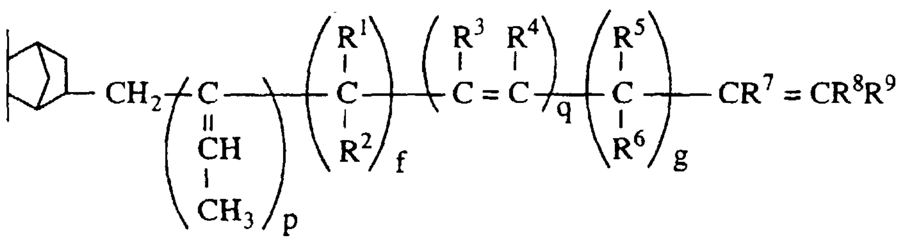

(III-b)

wherein p, q, f, g, and $R^1$ to $R^9$ have the same meanings as in the formula (II-a).

The non-conjugated triene or tetraene represented by the formula (II-a) is preferably a compound which is represented by the following formula (IV-a) and from which constituent units represented by the following formula (IV-b) are derived. The non-conjugated triene or tetraene represented by the formula (III-a) is preferably a compound which is represented by the following formula (V-a) and from which constituent units represented by the following formula (V-b) are derived.

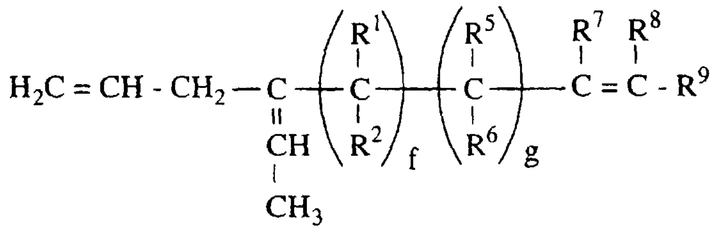

(IV-a)

wherein f is an integer of 0 to 5; g is an integer of 1 to 6; $R^1$, $R^2$, $R^5$, $R^6$ and $R^7$ may be the same or different and are each a hydrogen atom or an alkyl group of 1 to 5 carbon atoms; $R^8$ is a hydrogen atom or an alkyl group of 1 to 5 carbon atoms; and $R^9$ is a hydrogen atom, an alkyl group of 1 to 5 carbon atoms or a group represented by $-(CH_2)_n-CR^{10}=CR^{11}R^{12}$ (n is an integer of 1 to 5, $R^{10}$ and $R^{11}$ may be the same as or different from each other and are each a hydrogen atom or an alkyl group of 1 to 5 carbon atoms, and $R^{12}$ is an alkyl group of 1 to 5 carbon atoms).

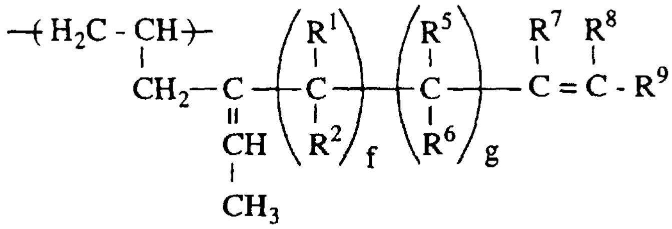

(IV-b)

wherein f, g, $R^1$, $R^2$, and $R^5$ to $R^9$ have the same meanings as in the formula (IV-a).

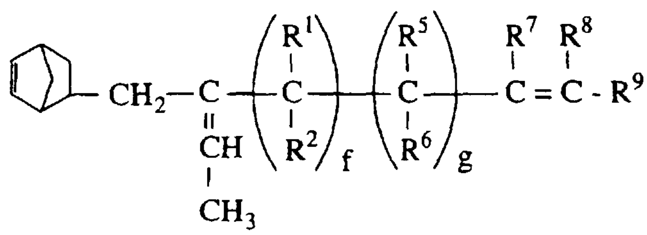

(V-a)

wherein f, g, $R^1$, $R^2$, and $R^5$ to $R^9$ have the same meanings as in the formula (IV-a).

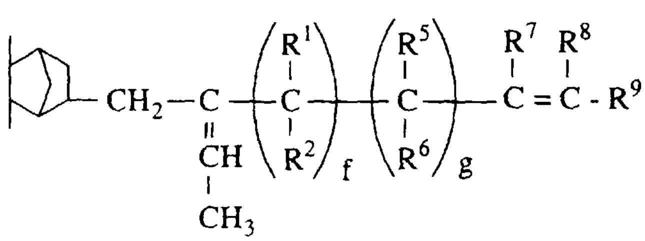

(V-b)

wherein f, g, $R^1$, $R^2$, and $R^5$ to $R^9$ have the same meanings as in the formula (IV-a).

In the present invention, the non-conjugated polyene (iii) is preferably at least one non-conjugated triene or tetraene selected from the compounds which are represented by the formula (II-a) and from which constituent units represented by the formula (II-b) are derived, and is particularly preferably at least one non-conjugated triene or tetraene

selected from the compounds which are represented by the formula (IV-a) and from which constituent units represented by the formula (IV-b) are derived.

In the unsaturated olefin copolymer, it is preferable that the molar ratio of constituent units derived from ethylene (i) to constituent units derived from the α-olefin of 3 to 20 carbon atoms (iv) is in the range of 100/0 (ethylene/α-olefin) to 40/60 and that the molar ratio of the total of constituent units derived from ethylene (i) and constituent units derived from the α-olefin of 3 to 20 carbon atoms (iv) to constituent units derived from the aromatic vinyl compound (ii) is in the range of 99.5/0.5 (ethylene+α-olefin/aromatic vinyl compound) to 60/40.

The unsaturated olefin copolymer (A) preferably has an intrinsic viscosity [η], as measured in decalin at 135 °C, of 0.8 to 5.0 dl/g.

Further, the unsaturated olefin copolymer preferably has an iodine value of 1 to 50.

In the present invention, the decorative layer is, for example, a coating film formed from a coating selected from an acrylic resin coating, an epoxy resin coating, a polyester resin coating, an urethane resin coating and an alkyd resin coating.

The vulcanized molded product having a surface decorative layer according to the invention has excellent mechanical strength and shows excellent adhesion properties between the molded product and the surface decorative layer even if surface treatment such as surface roughening, surface washing with organic solvent or primer coating is not carried out.

Another embodiment of the vulcanized molded product having a surface decorative layer according to the present invention comprises a vulcanized product of an olefin elastomer composition and a decorative layer provided on a surface of the vulcanized product, said olefin elastomer composition comprising (A) an unsaturated olefin copolymer and (E) an ethylene/α-olefin copolymer rubber, said unsaturated olefin copolymer (A) being obtained from:

(i) ethylene,
(ii) an aromatic vinyl compound represented by the above formula (I),
(iii) a non-conjugated polyene,
and optionally
(iv) an α-olefin of 3 to 20 carbon atoms;
the weight ratio of said unsaturated olefin copolymer (A) to said ethylene/α-olefin copolymer rubber (E) being in the range of 1/99 ((A)/(E)) to 99/1.

In the present invention, the olefin elastomer composition may further comprise at least one compounding ingredient selected from (B) a vulcanizing agent, (C) a reinforcing agent and (D) a liquid softening agent, in addition to the unsaturated olefin copolymer (A) and the ethylene/α-olefin copolymer rubber (E).

In the present invention, the non-conjugated polyene (iii) is, for example, at least one non-conjugated triene or tetraene selected from compounds which are represented by the above formula (II-a) and from which constituent units represented by the above formula (II-b) are derived and compounds which are represented by the above formula (III-a) and from which constituent units represented by the above formula (III-b) are derived.

The non-conjugated triene or tetraene represented by the formula (II-a) is preferably a compound which is represented by the above formula (IV-a) and from which constituent units represented by the above formula (IV-b) are derived. The non-conjugated triene or tetraene represented by the formula (III-a) is preferably a compound which is represented by the above formula (V-a) and from which constituent units represented by the above formula (V-b) are derived.

In the present invention, the non-conjugated polyene (iii) is preferably at least one non-conjugated triene or tetraene selected from the compounds which are represented by the formula (II-a) and from which constituent units represented by the formula (II-b) are derived, and is particularly preferably at least one non-conjugated triene or tetraene selected from the compounds which are represented by the formula (IV-a) and from which constituent units represented by the formula (IV-b) are derived.

In the unsaturated olefin copolymer, it is preferable that the molar ratio of constituent units derived from ethylene (i) to constituent units derived from the α-olefin of 3 to 20 carbon atoms (iv) is in the range of 100/0 (ethylene/α-olefin) to 40/60 and that the molar ratio of the total of constituent units derived from ethylene (i) and constituent units derived from the α-olefin of 3 to 20 carbon atoms (iv) to constituent units derived from the aromatic vinyl compound (ii) is in the range of 99.5/0.5 (ethylene+α-olefin/aromatic vinyl compound) to 60/40.

The unsaturated olefin copolymer (A) preferably has an intrinsic viscosity [η], as measured in decalin at 135 °C, of 0.8 to 5.0 dl/g.

Further, the unsaturated olefin copolymer (A) preferably has an iodine value of 1 to 50.

In the present invention, the decorative layer is, for example, a coating film formed from a coating selected from an acrylic resin coating, an epoxy resin coating, a polyester resin coating, an urethane resin coating and an alkyd resin coating.

The vulcanized molded product having a surface decorative layer according to the invention has excellent mechanical strength and shows excellent adhesion properties between the molded product and the surface decorative layer even if surface treatment such as surface roughening, surface washing with organic solvent or primer coating is not carried out.

The coated molded product of a thermoplastic resin composition according to the present invention comprises a molded product of a thermoplastic resin composition and a coating film formed on the molded product, said thermoplastic resin composition comprising an ethylene/aromatic vinyl compound random copolymer and another thermoplastic resin.

In the present invention, the ethylene/aromatic vinyl compound random copolymer preferably has an aromatic vinyl compound content of 1 to 50 % by mol. In the ethylene/aromatic vinyl compound random copolymer, a small amount of an α-olefin may be further copolymerized.

In the present invention, the thermoplastic resin is preferably a polyolefin resin, more preferably a polypropylene resin which contains propylene as its main component.

The thermoplastic resin composition for use in the invention preferably comprises the ethylene/aromatic vinyl compound random copolymer, a polypropylene resin, an ethylene/α-olefin copolymer rubber and talc.

In the present invention, the thermoplastic resin composition may further comprise a polymer which contains styrene as its main component.

The coating film is a coating film formed from, for example, an urethane resin coating.

The coated molded product of an elastomer composition according to the present invention comprises a molded product of an elastomer composition and a coating film formed on the molded product, said elastomer composition comprising an ethylene/aromatic vinyl compound random copolymer and an elastomer.

In the present invention, the ethylene/aromatic vinyl compound random copolymer preferably has an aromatic vinyl compound content of 1 to 50 % by mol. In the ethylene/aromatic vinyl compound random copolymer, a small amount of an α-olefin may be further copolymerized.

In the present invention, the elastomer is preferably a polyolefin elastomer.

The elastomer composition for use in the invention preferably comprises the ethylene/aromatic vinyl compound random copolymer, an ethylene/α-olefin copolymer rubber and a polypropylene resin.

The elastomer composition may be a partially crosslinked elastomer composition.

In the present invention, the elastomer composition may further comprise a polymer which contains styrene as its main component.

The coating film is a coating film formed from, for example, an urethane resin coating.

The coated molded product of a thermoplastic resin composition and the coated molded product of an elastomer composition according to the invention have excellent adhesion properties between the molded product and the coating film and show excellent mechanical strength.

## BEST MODE FOR CARRYING OUT THE INVENTION

The vulcanized molded product having a surface decorative layer, the coated molded product of a thermoplastic resin composition and the coated molded product of an elastomer composition according to the invention are described in detail hereinafter.

One embodiment of the vulcanized molded product having a surface decorative layer according to the invention is a molded product comprising a vulcanized product of (A) a specific unsaturated olefin copolymer and a decorative layer provided on a surface of the vulcanized product, or a molded product comprising a vulcanized product of an unsaturated olefin copolymer composition and a decorative layer provided on a surface of the vulcanized product, said unsaturated olefin copolymer composition comprising (A) a specific unsaturated olefin copolymer and at least one compounding ingredient selected from (B) a vulcanizing agent, (C) a reinforcing agent and (D) a liquid softening agent.

First, the components used for forming the vulcanized molded product having a surface decorative layer according to the invention are described.

### (A) Unsaturated olefin copolymer

The unsaturated olefin copolymer (A) is a random copolymer of (i) ethylene, (ii) an aromatic vinyl compound represented by the following formula (I) and (iii) a non-conjugated polyene, or a random copolymer of (i) ethylene, (ii) an aromatic vinyl compound represented by the following formula (I), (iii) a non-conjugated polyene and (iv) an α-olefin of 3 to 20 carbon atoms.

The aromatic vinyl compound (ii) used herein is a compound represented by the following formula (I):

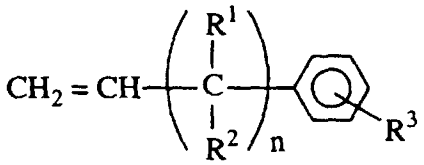

(I)

wherein $R^1$, $R^2$ and $R^3$ may be the same as or different from each other and are each a hydrogen atom or an alkyl group of 1 to 8 carbon atoms, preferably a hydrogen atom or an alkyl group of 1 to 3 carbon atoms, and

n is an integer of 0 to 5, preferably 0 or an integer of 1 to 3.

Examples of the aromatic vinyl compounds include styrene; mono- or polyalkylstyrenes, such as methylstyrene, dimethylstyrene and ethylstyrene; functional group-containing styrene derivatives, such as methoxystyrene, ethoxystyrene, vinylbenzoic acid, methyl vinylbenzoate, vinylbenzyl acetate, hydroxystyrene, chlorostyrene and divinylbenzene; and phenyl-substituted alkenes, such as allylbenzene, 4-phenyl-1-butene, 3-phenyl-1-butene, 4-(4-methylphenyl)-1-butene, 4-(3-methylphenyl)-1-butene, 4-(2-methylphenyl)-1-butene, 4-(4-ethylphenyl)-1-butene, 4-(4-butylphenyl)-1-butene, 5-phenyl-1-pentene, 4-phenyl-1-pentene, 3-phenyl-1-pentene, 5-(4-methylphenyl)-1-pentene, 4-(2-methylphenyl)-1-pentene, 3-(4-methylphenyl)-1-pentene, 6-phenyl-1-hexene, 5-phenyl-1-hexene, 4-phenyl-1-hexene, 3-phenyl-1-hexene, 6-(4-methylphenyl)-1-hexene, 5-(2-methylphenyl)-1-hexene, 4-(4-methylphenyl)-1-hexene, 3-(2-methylphenyl)-1-hexene, 7-phenyl-1-heptene, 6-phenyl-1-heptene, 5-phenyl-1-heptene, 4-phenyl-1-heptene, 8-phenyl-1-octene, 7-phenyl-1-octene, 6-phenyl-1-octene, 5-phenyl-1-octene, 4-phenyl-1-octene, 3-phenyl-1-octene and 10-phenyl-1-decene.

Of the aromatic vinyl compounds, preferably used are styrene, allylbenzene and 4-phenyl-1-butene, and particularly preferably used is styrene. The aromatic vinyl compounds can be used singly or in combination of two or more kinds

Examples of the non-conjugated polyenes (iii) include diene compounds, such as dicyclopentadiene, 1,4-hexadiene, cyclooctadiene, methylene norbornene, ethylidene norbornene, vinyl norbornene and 7-methyl-1,6-octadiene; non-conjugated trienes or tetraenes having one vinyl group in one molecule; and non-conjugated trienes or tetraenes having one 5-norbornene-2-yl group in one molecule. In general, the total number of carbon atoms per molecule (or average number of carbon atoms when two or more non-conjugated trienes or tetraenes are contained) of the non-conjugated trienes or tetraenes is not specifically limited, but it is preferably 9 to 30, more preferably 10 to 25, particularly preferably 10 to 22. The non-conjugated triene or tetraene having the carbon atom number of this range is advantageous because handling thereof such as purification is easily made. The term "triene" used herein means a hydrocarbon compound having three carbon-to-carbon double bonds (C=C) in one molecule, and the term "tetraene" used herein means a hydrocarbon compound having four carbon-to-carbon double bonds (C=C) in one molecule. The carbon-to-carbon double bond includes a carbon-to-carbon double bond of the vinyl group and a carbon-to-carbon double bond of the 5-norbornene-2-yl group.

The non-conjugated triene or tetraene contains three (in case of triene) or four (in case of tetraene) carbon-to-carbon double bonds (C=C) including that of the vinyl group or that of the 5-norbornene-2-yl group, and there is no specific limitation on the total number of hydrogen atoms directly bonded to the carbon atoms adjacent to all the carbon-to-carbon double bonds contained in one molecule of the non-conjugated triene or tetraene, but the total number thereof is preferably 9 to 33, more preferably 12 to 33, particularly preferably 14 to 33. The non-conjugated triene or tetraene having the total number of hydrogen atoms in this range is preferable because a copolymer having a high crosslinking reaction rate can be obtained. When a mixture of two or more kinds of the non-conjugated trienes or tetraenes is used, the number of hydrogen atoms means an average of the numbers of hydrogen atoms.

Of the non-conjugated trienes or tetraenes, preferably used in the invention are non-conjugated trienes or tetraenes whose vinyl group or 5-norbornene-2-yl group is bonded to the methylene group ($-CH_2-$).

Of such non-conjugated trienes or tetraenes, compounds represented by the following formula (II-a) or (III-a) are preferable.

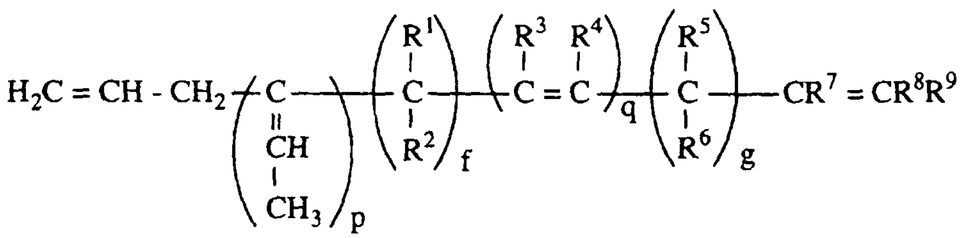

(II-a)

In the above formula, p and q may be the same as or different from each other, and are each 0 or 1, with the proviso that each of p and q is not 0 at the same time.

f is an integer of 0 to 5, preferably 0 or an integer of 1 or 2, with the proviso that f is not 0 when p and q are each 1.

g is an integer of 1 to 6, preferably an integer of 1 to 3.

$R^1$, $R^2$, $R^3$, $R^4$, $R^5$, $R^6$ and $R^7$ may be the same as or different from each other, and they are each a hydrogen atom or an alkyl group of 1 to 5 carbon atoms, preferably they are each a hydrogen atom or an alkyl group of 1 to 3 carbon atoms, and more preferably $R^1$, $R^2$, $R^3$, $R^4$, $R^5$ and $R^6$ are each a hydrogen atom and $R^7$ is a hydrogen atom or an alkyl group of 1 to 3 carbon atoms.

$R^8$ is a hydrogen atom or an alkyl group of 1 to 5 carbon atoms, preferably a hydrogen atom or an alkyl group of 1 to 3 carbon atoms, more preferably an alkyl group of 1 to 3 carbon atoms.

$R^9$ is a hydrogen atom, an alkyl group of 1 to 5 carbon atoms or a group represented by $-(CH_2)_n-CR^{10}=CR^{11}R^{12}$ (n is an integer of 1 to 5, $R^{10}$ and $R^{11}$ may be the same as or different from each other and are each a hydrogen atom or an alkyl group of 1 to 5 carbon atoms, and $R^{12}$ is an alkyl group of 1 to 5 carbon atoms), preferably a hydrogen atom, an alkyl group of 1 to 3 carbon atoms or a group represented by $-(CH_2)_n-CR^{10}=CR^{11}R^{12}$ (n is an integer of 1 to 3, $R^{10}$ and $R^{11}$ may be the same as or different from each other and are each a hydrogen atom or an alkyl group of 1 to 3 carbon atoms, and $R^{12}$ is an alkyl group of 1 to 3 carbon atoms), with the proviso that when p and q are each 1, $R^9$ is a hydrogen atom or an alkyl group of 1 to 5 carbon atoms.

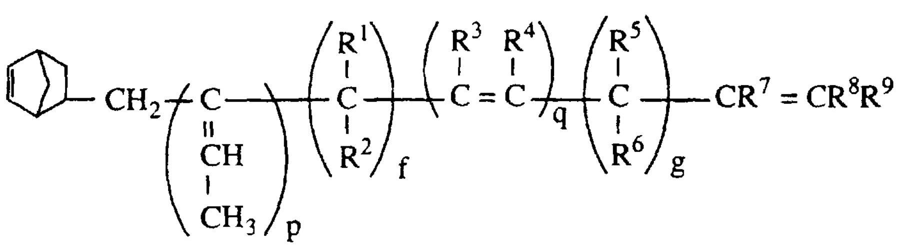

(III-a)

wherein p, q, f, g, and $R^1$ to $R^9$ have the same meanings as in the above formula (II-a).

When the non-conjugated polyene (iii) is the non-conjugated triene or tetraene represented by the formula (II-a) or (III-a), the vulcanization rate is high and the resulting vulcanized product has excellent strength properties.

Examples of the non-conjugated trienes or tetraenes represented by the formula (II-a) are given below.

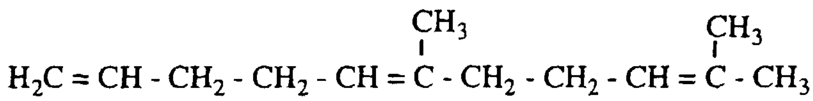

6,10-dimethyl-1,5,9-undecatriene (DMUT)

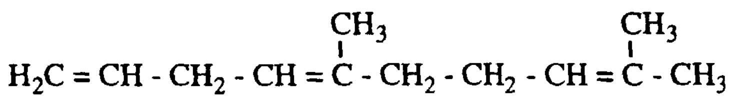

5,9-dimethyl-1,4,8-decatriene (DMDT)

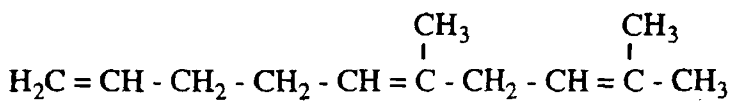

6,9-dimethyl-1,5,8-decatriene

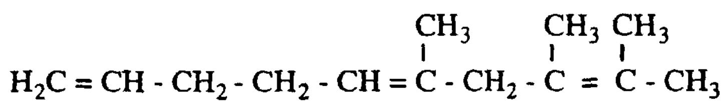

6,8,9-trimethyl-1,5,8-decatriene

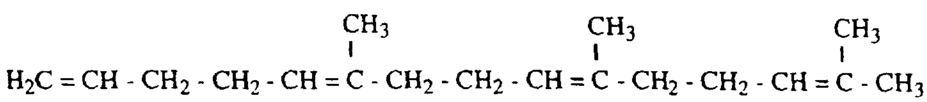

6,10,14-trimethyl-1,5,9,13-pentadecatetraene

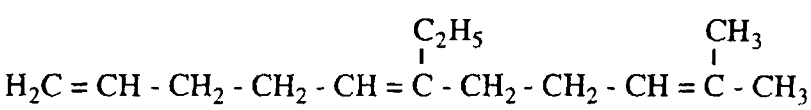

6-ethyl-10-methyl-1,5,9-undecatriene

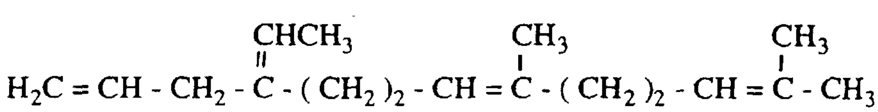

4-ethylidene-8,12-dimethyl-1,7,11-tridecatriene (EDT)

Examples of the non-conjugated trienes or tetraenes represented by the formula (III-a) include compounds wherein the vinyl group is replaced with a 5-norbornene-2-yl group in the compounds exemplified as the non-conjugated trienes or tetraenes represented by the formula (II-a).

Of the non-conjugated trienes or tetraenes represented by the formula (II-a), preferable are non-conjugated trienes or tetraenes represented by the following formula (IV-a). The non-conjugated trienes or tetraenes represented by the

formula (IV-a) correspond to the non-conjugated trienes or tetraenes represented by the formula (II-a) wherein p is 1 and q is 0.

Of the non-conjugated trienes or tetraenes represented by the formula (III-a), preferable are non-conjugated trienes or tetraenes represented by the following formula (V-a). The non-conjugated trienes or tetraenes represented by the formula (V-a) correspond to the non-conjugated trienes or tetraenes represented by the formula (III-a) wherein p is 1 and q is 0.

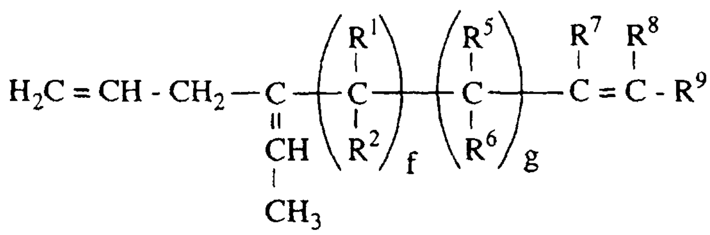

(IV-a)

In the above formula, f is an integer of 0 to 5, preferably 0 or an integer of 1 or 2.

g is an integer of 1 to 6, preferably an integer of 1 to 3.

$R^1$, $R^2$, $R^5$, $R^6$ and $R^7$ may be the same or different, and they are each the same as in the formula (II-a), preferably they are each a hydrogen atom or an alkyl group of 1 to 3 carbon atoms, and more preferably $R^1$, $R^2$, $R^5$ and $R^6$ are each a hydrogen atom and $R^7$ is a hydrogen atom or an alkyl group of 1 to 3 carbon atoms.

$R^8$ is the same as in the formula (II-a), preferably a hydrogen atom or an alkyl group of 1 to 3 carbon atoms, more preferably an alkyl group of 1 to 3 carbon atoms.

$R^9$ is the same as in the formula (II-a), preferably a hydrogen atom or an alkyl group of 1 to 3 carbon atoms.

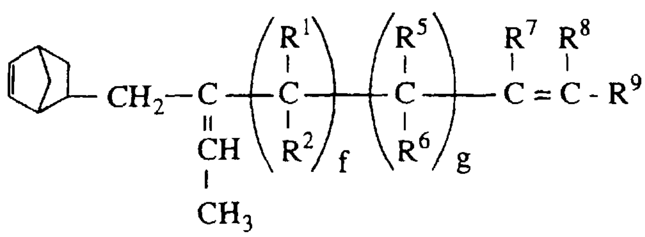

(V-a)

In the above formula, f, g, $R^1$, $R^2$, and $R^5$ to $R^9$ have the same meanings as in the formula (IV-a).

When the non-conjugated polyene (iii) is the non-conjugated triene or tetraene represented by the formula (IV-a) or (V-a), the vulcanization rate is high and the resulting vulcanized product has excellent strength properties.

Examples of the non-conjugated trienes or tetraenes represented by the formula (IV-a) are given below.

(1)

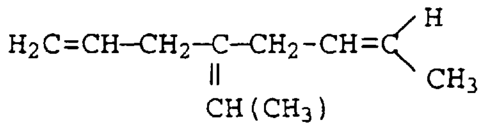

4-ethylidene-1,6-octadiene

(2)

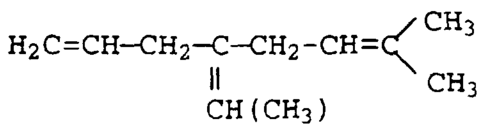

7-methyl-4-ethylidene-1,6-octadiene

(3)

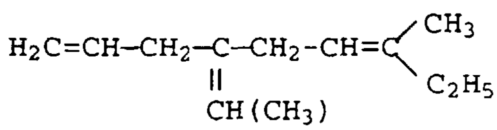

7-methyl-4-ethylidene-1,6-nonadiene

(4)

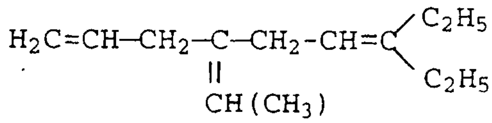

7-ethyl-4-ethylidene-1,6-nonadiene

(5)

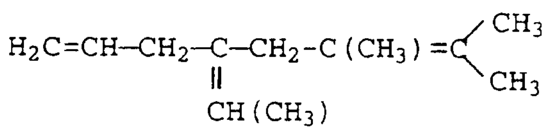

6,7-dimethyl-4-ethylidene-1,6-octadiene

(6)

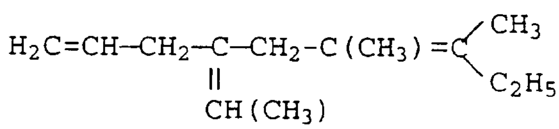

6,7-dimethyl-4-ethylidene-1,6-nonadiene

(7)

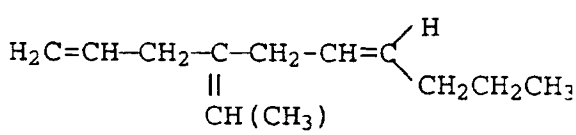

4-ethylidene-1,6-decadiene

(8)

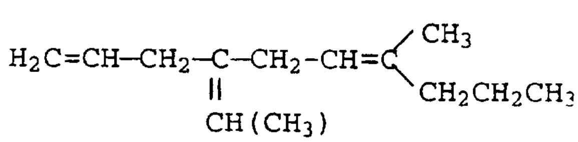

7-methyl-4-ethylidene-1,6-decadiene

(9)

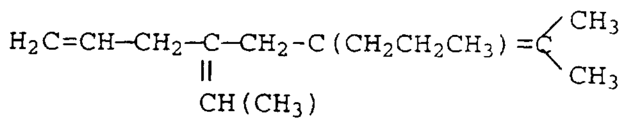

7-methyl-6-propyl-4-ethylidene-1,6-octadiene

(10)

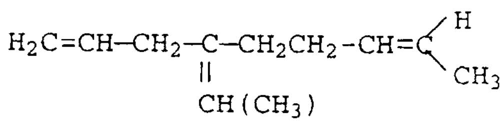

4-ethylidene-1,7-nonadiene

(11)

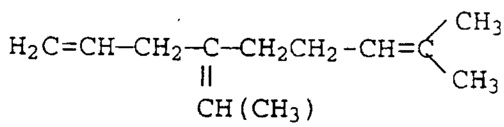

8-methyl-4-ethylidene-1,7-nonadiene (EMN)

(12)

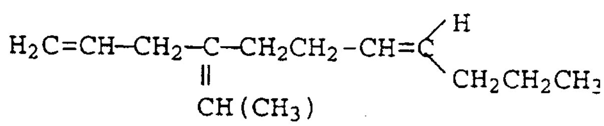

4-ethylidene-1,7-undecadiene

(13)

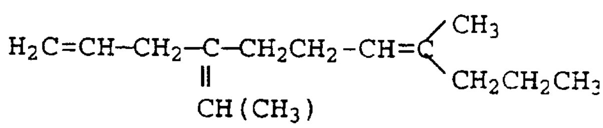

8-methyl-4-ethylidene-1,7-undecadiene

(14)

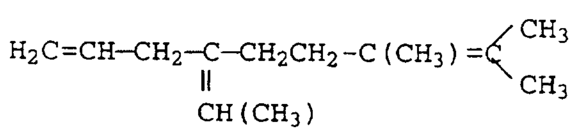

7,8-dimethyl-4-ethylidene-1,7-nonadiene

(15)

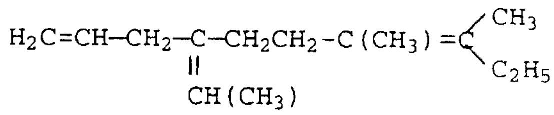

7,8-dimethyl-4-ethylidene-1,7-decadiene

(16)

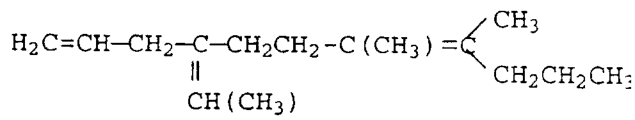

7,8-dimethyl-4-ethylidene-1,7-undecadiene,

(17)

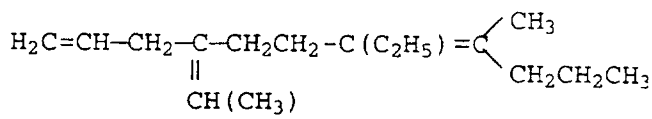

8-methyl-7-ethyl-4-ethylidene-1,7-undecadiene

(18)

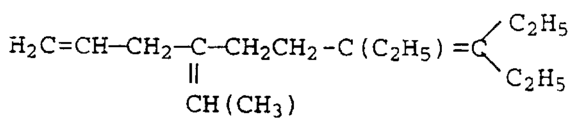

7,8-dimethyl-4-ethylidene-1,7-decadiene

(19)

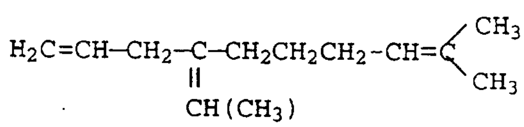

9-methyl-4-ethylidene-1,8-decadiene

(20)

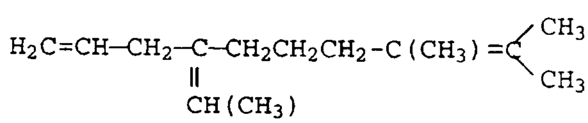

8,9-dimethyl-4-ethylidene-1,8-decadiene

(21)

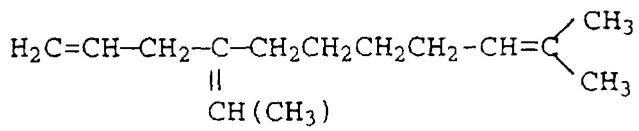

10-methyl-4-ethylidene-1,9-undecadiene,

(22)

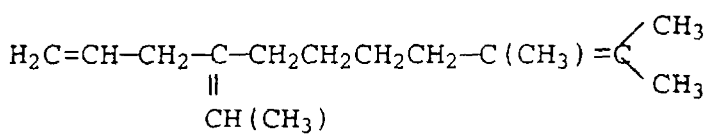

9,10-dimethyl-4-ethylidene-1,9-undecadiene

(23)

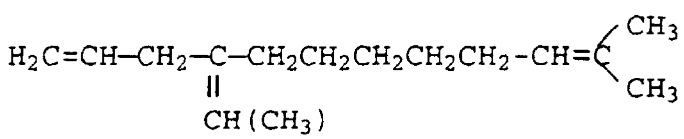

11-methyl-4-ethylidene-1,10-dodecadiene

(24)

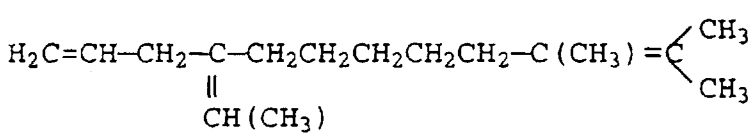

10,11-dimethyl-4-ethylidene-1,10-dodecadiene

Examples of the non-conjugated trienes or tetraenes represented by the formula (V-a) include compounds wherein the vinyl group is replaced with a 5-norbornene-2-yl group in the compounds exemplified as the non-conjugated trienes or tetraenes represented by the formula (IV-a).

In the present invention, the non-conjugated polyene (iii) is more preferably a compound represented by the formula (II-a), particularly preferably a compound represented by the formula (IV-a).

When the non-conjugated polyene (iii) is the non-conjugated triene or tetraene represented by the formula (II-a), the vulcanization rate is high and the resulting vulcanized product has excellent strength properties.

When the non-conjugated polyene (iii) is the non-conjugated triene or tetraene represented by the formula (IV-a), the resulting vulcanized product has excellent low-temperature resistance, low-temperature properties and strength.

Each of the non-conjugated trienes or tetraenes mentioned above may be either a mixture of a trans form and a cis form, a trans form only or a cis form only.

The non-conjugated polyenes (iii) mentioned above can be used singly or in combination of two or more kinds.

The non-conjugated trienes or tetraenes represented by the formula (II-a) or (III-a) can be prepared in accordance with conventionally known processes such as those described in, for example, EP 0691354A1 and WO 96/20150.

Examples of the α-olefins of 3 to 20 carbon atoms (iv) include propylene, 1-butene, 1-pentene, 1-hexene, 3-methyl-1-butene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene, 3-ethyl-1-hexene, 1-octene, 1-decene, 1-dodecene, 1-tetradecene, 1-hexadecene, 1-octadecene and 1-eicosene. Of these, preferable are α-olefins of 4 or more carbon atoms, and particularly

preferable are 1-butene, 1-hexene, 1-octene and 1-decene. These α-olefins can be used singly or in combination of two or more kinds.

The unsaturated olefin copolymer (A) is a copolymer wherein the constituent units derived from ethylene (i), the constituent units derived from the aromatic vinyl compound (ii) and the constituent units derived from the non-conjugated polyene (iii) are arranged at random, a branched structure derived from the non-conjugated polyene (iii) is present, and the main chain has a substantially linear structure; or a copolymer wherein the constituent units derived from ethylene (i), the constituent units derived from the aromatic vinyl compound (ii), the constituent units derived from the non-conjugated polyene (iii) and the constituent units derived from the α-olefin of 3 to 20 carbon atoms (iv) are arranged at random, a branched structure derived from the non-conjugated polyene (iii) is present, and the main chain has a substantially linear structure. The substantially linear and substantially gel-free structure of the copolymer can be confirmed by the fact that the copolymer is dissolved in an organic solvent and substantially contains no insoluble component. For example, it can be confirmed by the fact the copolymer is completely dissolved in decalin at 135 °C in the measurement of the intrinsic viscosity [η].

In the unsaturated olefin copolymer (A), it is desired that the molar ratio of the constituent units derived from ethylene (i) to the constituent units derived from the α-olefin of 3 to 20 carbon atoms (iv) is in the range of 100/0 (ethylene/α-olefin) to 40/60, preferably 95/5 to 55/45, more preferably 90/10 to 60/40, still more preferably 80/20 to 60/40, and that the molar ratio of the total of the constituent units derived from ethylene (i) and the constituent units derived from the α-olefin of 3 to 20 carbon atoms (iv) to the constituent units derived from the aromatic vinyl compound (ii) is in the range of 99.5/0.5 (ethylene+α-olefin/aromatic vinyl compound) to 60/40, preferably 99/1 to 70/30, more preferably 98/2 to 80/20.

When the molar ratio of the constituent units derived from ethylene (i) to the constituent units derived from the α-olefin of 3 to 20 carbon atoms (iv) is in the range of 95/5 (ethylene/α-olefin) to 55/45, the resulting vulcanized product has excellent mechanical properties. When the proportion of the constituent units derived from the aromatic vinyl compound (ii) is in the above range, the resulting vulcanized product has excellent coating properties (adhesion to coating film), mechanical properties and low-temperature properties.

In the unsaturated olefin copolymer (A), the constituent units derived from the non-conjugated polyene (iii) are desirably contained in amounts of usually 0.01 to 30 % by mol, preferably 0.05 to 25 % by mol, more preferably 0.1 to 20 % by mol.

The unsaturated olefin copolymer (A) desirably has an iodine value of usually 5 to 35, preferably 10 to 30, more preferably 10 to 25. When the iodine value of the unsaturated olefin copolymer (A) is in this range, the vulcanization rate is high and the resulting vulcanized product has excellent coating properties, adhesion properties to coating film, mechanical properties and low-temperature properties.

The unsaturated olefin copolymer (A) desirably has an intrinsic viscosity [η], as measured in decalin at 135 °C, of usually 0.1 to 6.0 dl/g, preferably 0.8 to 5.0 dl/g, more preferably 1.5 to 4.0 dl/g. When the intrinsic viscosity [η] of the unsaturated olefin copolymer (A) is in this range, the copolymer has excellent compatibility with the compounding ingredients.

In the present invention, it is preferable that the unsaturated olefin copolymer (A) satisfies at least one of the conditions of the molar ratio between the constituent units, the intrinsic viscosity [η] and the iodine value mentioned above; it is more preferable that the copolymer (A) satisfies two or more of the above conditions; and it is particularly preferable that the copolymer (A) satisfies all of the above conditions.

When the non-conjugated polyene (iii) in the unsaturated olefin copolymer (A) is the non-conjugated triene or tetraene represented by the formula (II-a), the constituent units derived from the non-conjugated triene or tetraene are represented by the following formula (II-b):

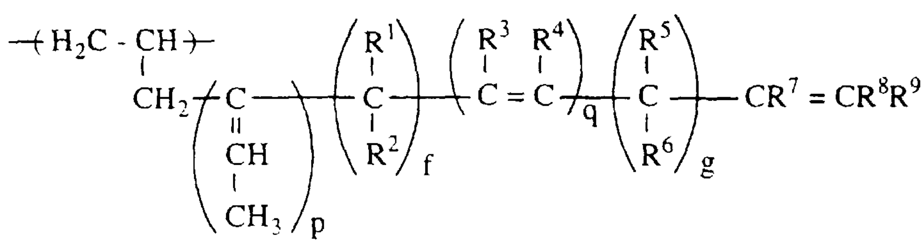

(II-b)

wherein p, q, f, g, and $R^1$ to $R^9$ have the same meanings as in the formula (II-a).

When the non-conjugated polyene (iii) in the unsaturated olefin copolymer (A) is the non-conjugated triene or tetraene represented by the formula (III-a), the constituent units derived from the non-conjugated triene or tetraene are

represented by the following formula (III-b):

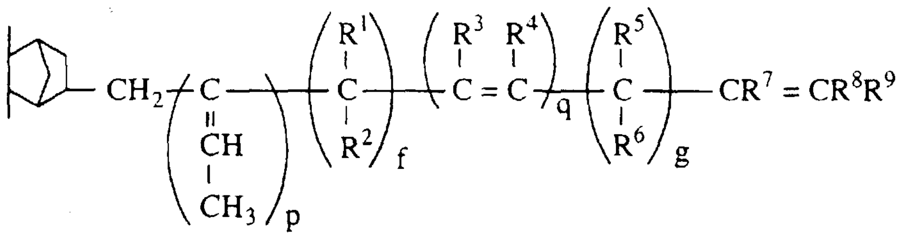

(III-b)

wherein p, q, f, g, and $R^1$ to $R^9$ have the same meanings as in the formula (II-a).

When the non-conjugated polyene (iii) in the unsaturated olefin copolymer (A) is the non-conjugated triene or tetraene represented by the formula (IV-a), the constituent units derived from the non-conjugated triene or tetraene are represented by the following formula (IV-b):

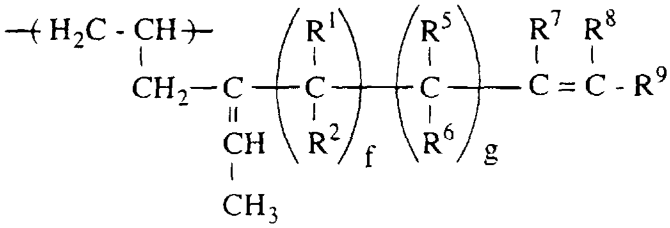

(IV-b)

wherein f, g, $R^1$, $R^2$, and $R^5$ to $R^9$ have the same meanings as in the formula (IV-a).

When the non-conjugated polyene (iii) in the unsaturated olefin copolymer (A) is the non-conjugated triene or tetraene represented by the formula (V-a), the constituent units derived from the non-conjugated triene or tetraene are represented by the following formula (V-b):

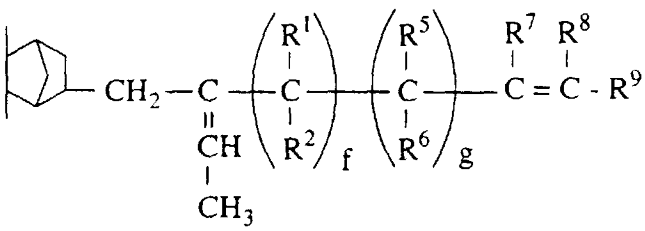

(V-b)

wherein f, g, $R^1$, $R^2$, and $R^5$ to $R^9$ have the same meanings as in the formula (IV-a).

Each of the above-mentioned structures of the constituent units derived from the non-conjugated polyene (iii) in the unsaturated olefin copolymer (A) can be confirmed by measuring a $^{13}C$-NMR spectrum of the copolymer.

Preparation of unsaturated olefin copolymer (A)

The unsaturated olefin copolymer (A) can be obtained by copolymerizing ethylene (i), the aromatic vinyl compound (ii), the non-conjugated polyene (iii), and optionally, the $\alpha$-olefin of 3 to 20 carbon atoms (iv) in the presence of an olefin polymerization catalyst.

The olefin polymerization catalyst employable herein is, for example, a catalyst comprising (a) a compound of a transition metal such as vanadium, zirconium or titanium, and (b) an organoaluminum compound (organoaluminum oxy-compound) and/or an ionizing ionic compound. Examples of such olefin polymerization catalysts include (1) a titanium catalyst comprising a solid titanium catalyst component and an organoaluminum compound, (2) a vanadium catalyst comprising a soluble vanadium compound and an organoaluminum compound, and (3) a metallocene catalyst comprising a metallocene compound of a transition metal selected from Group 4 of the periodic table and an organoaluminum oxy-compound and/or an ionizing ionic compound. Of these, the metallocene catalyst is preferable.

The metallocene compound of a transition metal selected from Group 4 of the periodic table, for forming the metallocene catalyst, is specifically represented by the following formula (VI):

$$M^1L^1_x \qquad (VI)$$

wherein $M^1$ is a transition metal selected from Group 4 of the periodic table, specifically zirconium, titanium or hafnium, and x is a valence of the transition metal $M^1$ and is a number of ligands $L^1$ coordinated to the transition metal.

$L^1$ is a ligand coordinated to the transition metal. At least one of the ligands $L^1$ is a ligand having cyclopentadienyl skeleton, such as a cyclopentadienyl group, an indenyl group, a 4,5,6,7-tetrahydroindenyl group or a fluorenyl group. The ligand having cyclopentadienyl skeleton may have a substituent such as an alkyl group, a cycloalkyl group, a trialkylsilyl group or a halogen atom.

When the metallocene compound contains two or more groups having cyclopentadienyl skeleton as the ligands $L^1$, two of the groups having cyclopentadienyl skeleton may be linked through a linking group such as an alkylene group, a substituted alkylene group, a silylene group or a substituted silylene group to form a metallocene compound of bridge type.

Examples of the ligands $L^1$ other than the ligands having cyclopentadienyl skeleton include a hydrocarbon group of 1 to 12 carbon atoms, an alkoxy group, an aryloxy group, a sulfonic acid-containing group ($-SO_3R^a$ wherein $R^a$ is an alkyl group, an alkyl group substituted with a halogen atom, an aryl group, an aryl group substituted with a halogen atom, or an aryl group substituted with an alkyl group), a halogen atom and a hydrogen atom.

Listed below are examples of the metallocene compounds having zirconium as $M^1$ and containing two ligands having cyclopentadienyl skeleton.

Bis(cyclopentadienyl)zirconium monochloride monohydride,
Bis(cyclopentadienyl)zirconium dichloride,
Bis(1-methyl-3-butylcyclopentadienyl)zirconium-bis(trifluoromethanesulfonato),
Bis(1,3-dimethylcyclopencadienyl)zirconium dichloride,
Ethylene-bis(indenyl)dimethyl zirconium,
Ethylene-bis(indenyl)zirconium dichloride,
Isopropylidene(cyclopentadienylfluorenyl)zirconium dichloride,
Diphenylsilylene-bis(indenyl)zirconium dichloride,
Methylphenylsilylene-bis(indenyl)zirconium dichloride,
rac-Ethylene-bis(2-methyl-1-indenyl)zirconium dichloride,
rac-Dimethylsilylene-bis(2-methyl-1-indenyl)zirconium dichloride,
rac-Dimethylsilylene-bis(4,7-dimethyl-1-indenyl)zirconium dichloride,
rac-Dimethylsilylene-bis(2,4,7-trimethyl-1-indenyl)zirconium dichloride,
rac-Dimethylsilylene-bis(2,4,6-trimethyl-1-indenyl)zirconium dichloride,
rac-Dimethylsilylene-bis(4-phenyl-1-indenyl)zirconium dichloride,
rac-Dimethylsilylene-bis(2-methyl-4-phenyl-1-indenyl)zirconium dichloride,
rac-Dimethylsilylene-bis(2-methyl-4-(α-naphthyl)-1-indenyl)zirconium dichloride,
rac-Dimethylsilylene-bis(2-methyl-4-(β-naphthyl)-1-indenyl)zirconium dichloride, and
rac-Dimethylsilylene-bis(2-methyl-4-(1-anthryl)-1-indenyl)zirconium dichloride.

Also usable are metallocene compounds wherein the zirconium metal is replaced with a titanium metal or a hafnium metal in the above-exemplified compounds.

Further, a bridge type metallocen compound represented by the following formula (A):

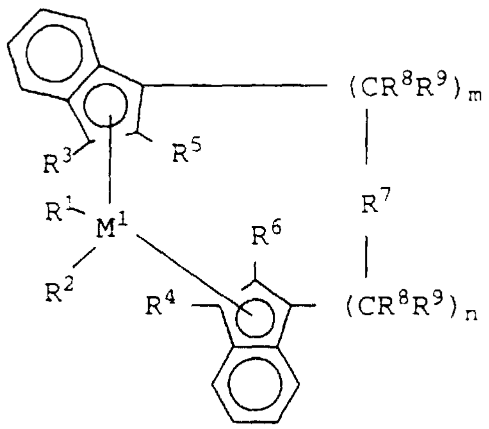

(A)

is also employable.

In the above formula (A), $M^1$ is a metal of Group 4 of the periodic table, specifically, for example, titanium, zirconium or hafnium.

$R^1$ and $R^2$ may be the same or different, and are each hydrogen, an alkyl group of 1 to 10, preferably 1 to 3 carbon atoms, an alkoxy group of 1 to 10, preferably 1 to 3 carbon atoms, an aryl group of 6 to 10, preferably 6 to 8 carbon atoms, an aryloxy group of 6 to 10, preferably 6 to 8 carbon atoms, an alkenyl group of 2 to 10, preferably 2 to 4 carbon atoms, an arylalkyl group of 7 to 40, preferably 7 to 10 carbon atoms, an alkylaryl group of 7 to 40, preferably 7 to 12 carbon atoms, an arylalkenyl group of 8 to 40, preferably 8 to 12 carbon atoms, or a halogen atom, preferably chlorine.

$R^3$ and $R^4$ may be the same or different, and are each hydrogen, a halogen atom, preferably fluorine, chlorine or bromine, an alkyl group of 1 to 10, preferably 1 to 4 carbon atoms which may be halogenated, an aryl group of 6 to 10, preferably 6 to 8 carbon atoms, or a group of $-NR^{10}_2$, $-SR^{10}$, $-OSiR^{10}_3$, $-SiR^{10}_3$ or $-PR^{10}_2$, where $R^{10}$ is a halogen atom, preferably chlorine, an alkyl group of 1 to 10, preferably 1 to 3 carbon atoms, or an aryl group of 6 to 10, preferably 6 to 8 carbon atoms.

$R^3$ and $R^4$ are each particularly preferably hydrogen.

$R^5$ and $R^6$ may be the same or different, preferably the same, and have the same meanings as described for $R^3$ and $R^4$ with the proviso that each of $R^5$ and $R^6$ is not hydrogen. $R^5$ and $R^6$ are each preferably an alkyl group of 1 to 4 carbon atoms which may be halogenated, for example, methyl, ethyl, propyl, isopropyl, butyl, isobutyl or trifluoromethyl, preferably methyl.

$R^7$ is

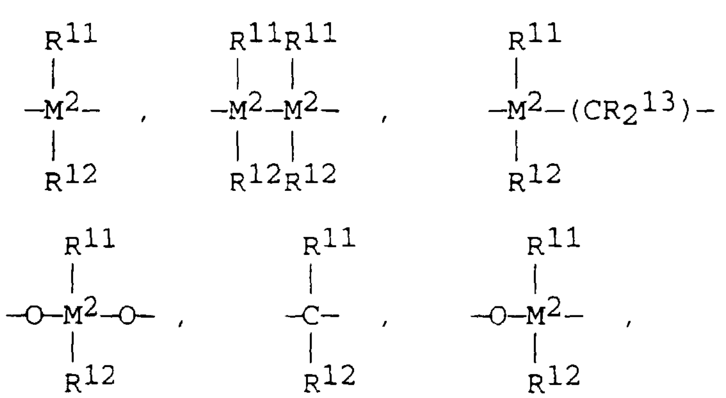

$=BR^{11}$, $=AlR^{11}$, -Ge-, -Sn-, -O-, -S-, =SO, $=SO_2$, $=NR^{11}$, =CO, $=PR^{11}$ or $=P(O)R^{11}$, where $R^{11}$, $R^{12}$ and $R^{13}$ may be the same or different, and are each hydrogen, a halogen atom, an alkyl group of 1 to 10, preferably 1 to 4 carbon atoms, more preferably methyl, a fluoroalkyl group of 1 to 10 carbon atoms, preferably $CF_3$, an aryl group of 6 to 10, preferably 6 to 8 carbon atoms, a fluoroaryl group of 6 to 10 carbon atoms, preferably pentafluorophenyl, an alkoxy group of 1 to 10, preferably 1 to 4 carbon atoms, particularly preferably methoxy, an alkenyl group of 2 to 10, preferably 2 to 4 carbon

atoms, an arylalkyl group of 7 to 40, preferably 7 to 10 carbon atoms, an arylalkenyl group of 8 to 40, preferably 8 to 12 carbon atoms, or an alkylaryl group of 7 to 40, preferably 7 to 12 carbon atoms, or $R^{11}$ and $R^{12}$, or $R^{11}$ and $R^{13}$ may form together with the carbon atoms to which they are bonded a ring.

$M^2$ is silicon, germanium or tin, preferably silicon or germanium.

$R^7$ is preferably $=CR^{11}R^{12}$, $=SiR^{11}R^{12}$, $=GeR^{11}R^{12}$, -O-, -S-, =SO, $=PR^{11}$ or $=P(O)R^{11}$.

$R^8$ and $R^9$ may be the same or different, and have the same meaning as described for $R^{11}$.

m and n may be the same or different, and are each 0, 1 or 2, preferably 0 or 1, and m+n is 0, 1 or 2, preferably 0 or 1.

Particularly preferred metallocene compounds satisfying the above conditions are compounds represented by the following formulas (i) to (iii).

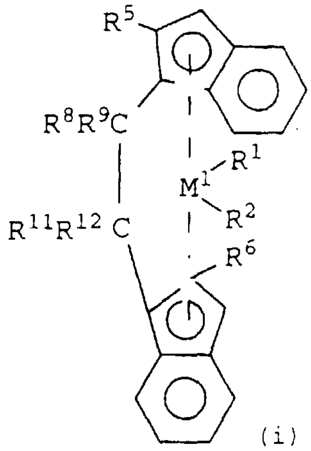
(i)

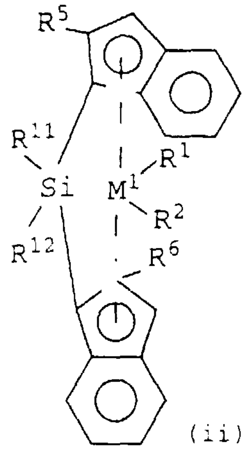
(ii)

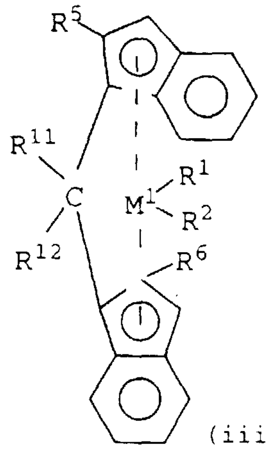
(iii)

In the above formulas (i), (ii) and (iii), $M^1$ is Zr or Hf, $R^1$ and $R^2$ are each methyl or chlorine, $R^5$ and $R^6$ are each methyl, ethyl or trifluoromethyl, and $R^8$, $R^9$, $R^{10}$ and $R^{12}$ have the same meanings as described above.

Of the compounds represented by the formulas (i), (ii) and (iii), particularly preferred are the following compounds:

rac-dimethylmethylene-bis(indenyl)zirconium dichloride,
rac-dimethylmethylene-bis(2-methyl-1-indenyl)zirconium dichloride,
rac-diphenylmethylene-bis(2-methyl-1-indenyl)zirconium dichloride,
rac-ethylene-bis(2-methyl-1-indenyl)zirconium dichloride,
rac-dimethylsilylene-bis(2-methyl-1-indenyl)zirconium dichloride,
rac-dimethylsilylene-bis(2-methyl-1-indenyl)zirconium dimethyl,
rac-ethylene-bis(2-methyl-1-indenyl)zirconium dimethyl,
rac-phenyl(methyl)silylene-bis(2-methyl-1-indenyl)zirconium dichloride,
rac-diphenyl-silylene-bis(2-methyl-1-indenyl)zirconium dichloride,
rac-methylethylene-bis(2-methyl-1-indenyl)zirconium dichloride, and
rac-dimethylsilylene-bis(2-ethyl-1-indenyl)zirconium dichloride. These metallocene compounds can be prepared by conventionally known processes (see, for example, Japanese Patent Laid-Open Publication No. 268307/1992).

In the present invention, a bridge type transition metal compound (metallocene compound) represented by the following formula (B) is also employable.

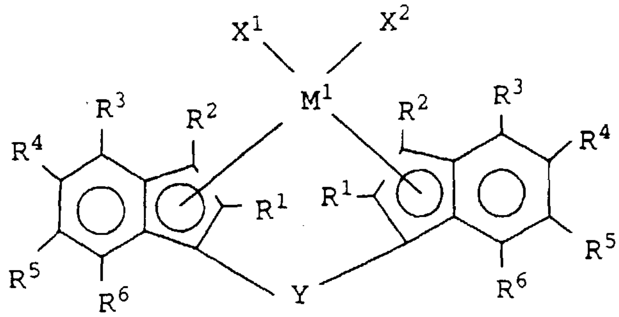

... (B)

In the formula (B), $M^1$ is a transition metal atom of Group 4 of the periodic table, specifically, titanium, zirconium or hafnium.

$R^1$ and $R^2$ may be the same or different, and are each hydrogen, a halogen atom, a hydrocarbon group of 1 to 20 carbon atoms, a halogenated hydrocarbon group of 1 to 20 carbon atoms, a silicon-containing group, an oxygen-containing group, a sulfur-containing group, a nitrogen-containing group or a phosphorus-containing group.

Examples of the halogen atoms include fluorine, chlorine, bromine and iodine.

Examples of the hydrocarbon groups of 1 to 20 carbon atoms include alkyl groups, such as methyl, ethyl, propyl, butyl, hexyl, cyclohexyl, octyl, nonyl, dodecyl, eicosyl, norbornyl and adamantyl; alkenyl groups, such as vinyl, propenyl and cyclohexenyl; arylalkyl groups, such as benzyl, phenylethyl and phenylpropyl; and aryl groups, such as phenyl, tolyl, dimethylphenyl, trimethylphenyl, ethylphenyl, propylphenyl, biphenyl, naphthyl, methylnaphthyl, anthracenyl and phenanthryl.

Examples of the halogenated hydrocarbon groups include the above-exemplified hydrocarbon groups which are substituted with halogen atoms.

Examples of the silicon-containing groups include monohydrocarbon-substituted silyls, such as methylsilyl and phenylsilyl; dihydrocarbon-substituted silyls, such as dimethylsilyl and diphenylsilyl; trihydrocarbon-substituted silyls, such as trimethylsilyl, triethylsilyl, tripropylsilyl, tricyclohexylsilyl, triphenylsilyl, dimethylphenylsilyl, methyldiphenylsilyl, tritolylsilyl and trinaphthylsilyl; silyl ethers of hydrocarbon-substituted silyls, such as trimethylsilyl ether; silicon-substituted alkyl groups, such as trimethylsilylmethyl; and silicon-substituted aryl groups, such as trimethylsililphenyl.

Examples of the oxygen-containing groups include hydroxy groups; alkoxy groups, such as methoxy, ethoxy, propoxy and butoxy; aryloxy groups, such as phenoxy, methylphenoxy, dimethylphenoxy and naphthoxy; and arylalkoxy groups, such as phenylmethoxy and phenylethoxy.

Examples of the sulfur-containing groups include those wherein oxygen is replaced with sulfur in the above-exemplified oxygen-containing group.

Examples of the nitrogen-containing groups include amino group; alkylamino groups, such as methylamino, dimethylamino, diethylamino, dipropylamino, dibutylamino and dicyclohexylamino; and arylamino or alkylarylamino groups, such as phenylamino, diphenylamino, ditolylamino, dinaphthylamino and methylphenylamino.

Examples of the phosphorus-containing groups include phosphino groups, such as dimethylphosphino and diphenylphosphino.

Of these, $R^1$ is preferably a hydrocarbon group, particularly preferably a hydrocarbon group of 1 to 3 carbon atoms (methyl, ethyl or propyl). $R^2$ is preferably hydrogen or a hydrocarbon group, particularly preferably hydrogen or a hydrocarbon group of 1 to 3 carbon atoms (methyl, ethyl or propyl).

$R^3$, $R^4$, $R^5$ and $R^6$ may be the same or different, and are each hydrogen, a halogen atom, a hydrocarbon group of 1 to 20 carbon atoms or a halogenated hydrocarbon group of 1 to 20 carbon atoms. Of these, preferred is hydrogen, the hydrocarbon group or the halogenated hydrocarbon group. At least one combination of $R^3$ and $R^4$, $R^4$ and $R^5$, or $R^5$ and $R^6$ may form together with the carbon atoms to which they are bonded a monocyclic aromatic ring.

When there are two or more hydrocarbon groups or halogenated hydrocarbon groups, excluding the groups for forming the aromatic ring, they may be bonded to each other to form a ring. When $R^6$ is a substituent other than the aromatic group, it is preferably hydrogen.

Examples of the halogen atoms, the hydrocarbon groups of 1 to 20 carbon atoms and the halogenated hydrocarbon groups of 1 to 20 carbon atoms are those described for $R^1$ and $R^2$.

As the ligand which contains a monocyclic aromatic ring formed by at least one combination of $R^3$ and $R^4$, $R^4$ and $R^5$, or $R^5$ and $R^6$, as mentioned above, and is coordinated to $M^1$, there can be mentioned the following ones.

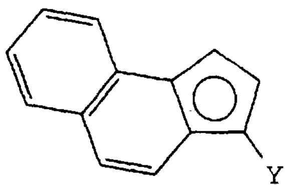
(1)

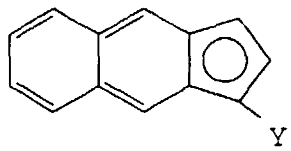
(2)

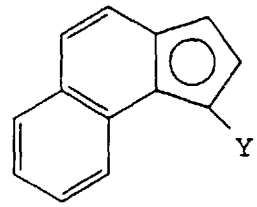
(3)

Of these, preferred is the ligand represented by the formula (1).

The aromatic ring mentioned above may be substituted with a halogen atom, a hydrocarbon group of 1 to 20 carbon atoms or a halogenated hydrocarbon group of 1 to 20 carbon atoms.

Examples of the halogen atoms, the hydrocarbon groups of 1 to 20 carbon atoms and the halogenated hydrocarbon groups of 1 to 20 carbon atoms for substituting the aromatic ring are those described for $R^1$ and $R^2$.

$X^1$ and $X^2$ may be the same or different, and are each hydrogen, a halogen atom, a hydrocarbon group of 1 to 20 carbon atoms, a halogenated hydrocarbon group of 1 to 20 carbon atoms, an oxygen-containing group or a sulfur-containing group.

Examples of the halogen atoms, the hydrocarbon groups of 1 to 20 carbon atoms, the halogenated hydrocarbon groups of 1 to 20 carbon atoms and the oxygen-containing groups are those described for $R^1$ and $R^2$.

Examples of the sulfur-containing groups include those described for $R^1$ and $R^2$; and further sulfonato groups, such as methylsulfonato, trifluoromethanesulfonato, phenylsulfonato, benzylsulfonato, p-toluenesulfonato, trimethylbenzenesulfonato, triisobutylbenzenesulfonato, p-chlorobenzenesulfonato and pentafluorobenzenesulfonato; and sulfinato groups, such as methylsulfinato, phenylsulfinato, benzylsulfinato, p-toluenesulfinato, trimethylbenzenesulfinato and pentafluorobenzenesulfinato.

Y is a divalent hydrocarbon group of 1 to 20 carbon atoms, a divalent halogenated hydrocarbon group of 1 to 20 carbon atoms, a divalent silicon-containing group, a divalent germanium-containing group, a divalent tin-containing group, -O-, -CO-, -S-, -SO-, $-SO_2-$, $-NR^7-$, $-P(R^7)-$, $-P(O)(R^7)-$, $-BR^7-$ or $-AlR^7-$, where $R^7$ is hydrogen, a halogen atom, a hydrocarbon group of 1 to 20 carbon atoms or a halogenated hydrocarbon group of 1 to 20 carbon atoms.

Examples of the divalent hydrocarbon groups of 1 to 20 carbon atoms include alkylene groups, such as methylene, dimethylmethylene, 1,2-ethylene, dimethyl-1,2-ethylene, 1,3-trimethylene, 1,4-tetramethylene, 1,2-cyclohexylene and 1,4-cyclohexylene, and arylalkylene groups, such as diphenylmethylene and diphenyl-1,2-ethylene.

Examples of the divalent halogenated hydrocarbon groups include the above-mentioned divalent hydrocarbon groups of 1 to 20 carbon atoms, which are halogenated, such as chloromethylene.

Examples of the divalent silicon-containing groups include alkylsilylene, alkylarylsilylene and arylsilylene groups, such as methylsilylene, dimethylsilylene, diethylsilylene, di(n-propyl)silylene, di(i-propyl) silylene, di(cyclohexyl)silylene, methylphenylsilylene, diphenylsilylene, di(p-tolyl)silylene and di(p-chlorophenyl)silylene; and alkyldisilylene, alkylaryldisilylene and aryldisilylene groups, such as tetramethyl-1,2-disilylene and tetraphenyl-1,2-disilylene.

Examples of the divalent germanium-containing groups include those wherein silicon is replaced with germanium in the above-mentioned divalent silicon-containing groups.

Examples of the divalent tin-containing groups include those wherein silicon is replaced with tin in the above-mentioned divalent silicon-containing groups.

$R^7$ is a halogen atom, a hydrocarbon group of 1 to 20 carbon atoms or a halogenated hydrocarbon group of 1 to 20 carbon atoms, examples of which are those described for $R^1$ and $R^2$.

Of the above groups, preferred are divalent silicon-containing groups, divalent germanium-containing groups and divalent tin-containing group, and more preferred are divalent silicon-containing groups. Of these, particularly preferred are alkylsilylene, alkylarylsilylene and arylsilylene.

Listed below are examples of the transition metal compounds represented by the formula (B).

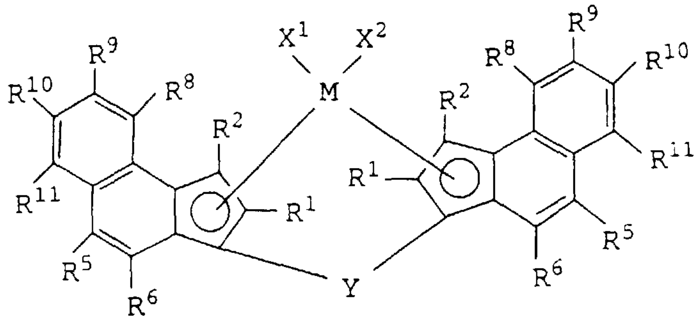

| $R^1$ | $R^2$ | $R^5$ | $R^6$ | $R^8$ | $R^9$ | $R^{10}$ | $R^{11}$ | Y | $X^1$ | $X^2$ | M |
|---|---|---|---|---|---|---|---|---|---|---|---|
| H | H | H | H | H | H | H | H | $SiMe_2$ | Cl | Cl | Zr |
| $CH_3$ | H | H | H | H | H | H | H | $SiMe_2$ | Cl | Cl | Zr |
| $CH_3$ | H | H | H | H | H | H | H | SiMePh | Cl | Cl | Zr |
| $CH_3$ | H | H | H | H | H | H | H | $SiPh_2$ | Cl | Cl | Zr |
| $CH_3$ | H | H | H | H | H | H | H | $Si(p\text{-tolyl})_2$ | Cl | Cl | Zr |
| $CH_3$ | H | H | H | H | H | H | H | $Si(pClPh)_2$ | Cl | Cl | Zr |
| $CH_3$ | H | H | H | H | H | H | H | $C_2H_5$ | Cl | Cl | Zr |
| $CH_3$ | H | H | H | H | H | H | H | $GeMe_2$ | Cl | Cl | Zr |
| $CH_3$ | H | H | H | H | H | H | H | $SnMe_2$ | Cl | Cl | Zr |
| $CH_3$ | H | H | H | H | H | H | H | $SiMe_2$ | Br | Br | Zr |
| $CH_3$ | H | H | H | H | H | H | H | $SiMe_2$ | Cl | $OSO_2CH_3$ | Zr |
| $CH_3$ | H | H | H | H | H | H | H | $SiMe_2$ | Cl | $SO_2CH_3$ | Zr |
| $CH_3$ | H | H | H | H | H | H | H | $SiMe_2$ | Cl | Cl | Ti |
| $CH_3$ | H | H | H | H | H | H | H | $SiMe_2$ | Cl | Cl | Hf |
| $C_2H_5$ | H | H | H | H | H | H | H | $SiMe_2$ | Cl | Cl | Zr |
| $nC_3H_7$ | H | H | H | H | H | H | H | $SiMe_2$ | Cl | Cl | Zr |
| Ph | H | H | H | H | H | H | H | $SiMe_2$ | Cl | Cl | Zr |
| $CH_3$ | $CH_3$ | H | H | H | H | H | H | $SiMe_2$ | Cl | Cl | Zr |
| $CH_3$ | $CH_3$ | H | H | H | H | H | H | $SiPh_2$ | Cl | Cl | Zr |
| $CH_3$ | $CH_3$ | $CH_3$ | H | H | H | H | H | $SiMe_2$ | Cl | Cl | Zr |
| $CH_3$ | H | Cl | H | H | H | H | H | $SiMe_2$ | Cl | Cl | Zr |
| $CH_3$ | H | $CH_3$ | H | H | H | H | H | $SiMe_2$ | Cl | Cl | Zr |
| $CH_3$ | H | $C_2H_5$ | H | H | H | H | H | $SiMe_2$ | Cl | Cl | Zr |
| $CH_3$ | H | Ph | H | H | H | H | H | $SiMe_2$ | Cl | Cl | Zr |
| $CH_3$ | H | H | $CH_3$ | H | H | H | H | $SiMe_2$ | Cl | Cl | Zr |
| $CH_3$ | H | $CH_3$ | $CH_3$ | H | H | H | H | $SiMe_2$ | Cl | Cl | Zr |
| $CH_3$ | H | $CH_2$*1 | $CH_3$ | H | H | H | $CH_2$*1 | $SiMe_2$ | Cl | Cl | Zr |
| $CH_3$ | H | H | H | H | H | H | Ph | $SiMe_2$ | Cl | Cl | Zr |

*1: $R^5$ and $R^{11}$ are bonded to each other to form a five-membered ring.
Me: methyl; Et: ethyl; Ph: phenyl.

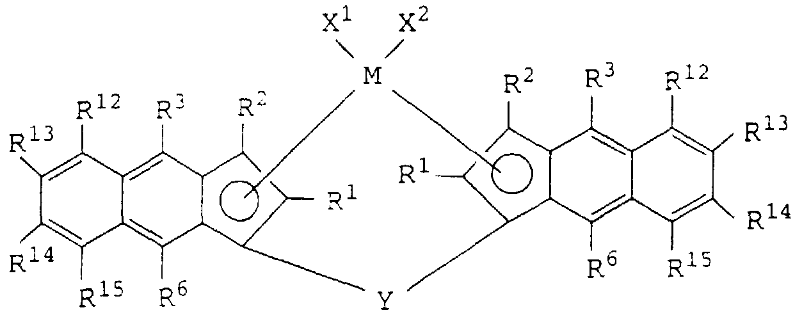

| $R^1$ | $R^2$ | $R^3$ | $R^6$ | $R^{12}$ | $R^{13}$ | $R^{14}$ | $R^{15}$ | Y | $X^1$ | $X^2$ | M |
|---|---|---|---|---|---|---|---|---|---|---|---|
| H | H | H | H | H | H | H | H | $SiMe_2$ | Cl | Cl | Zr |
| $CH_3$ | H | H | H | H | H | H | H | $SiMe_2$ | Cl | Cl | Zr |
| $CH_3$ | H | H | H | H | H | H | H | $SiPh_2$ | Cl | Cl | Zr |
| $CH_3$ | $CH_3$ | H | H | H | H | H | H | $SiMe_2$ | Cl | Cl | Zr |
| $CH_3$ | H | $CH_3$ | H | H | H | H | H | $SiMe_2$ | Cl | Cl | Zr |
| $CH_3$ | H | $CH_3$ | $CH_3$ | H | H | H | H | $SiMe_2$ | Cl | Cl | Zr |
| $CH_3$ | H | $CH_2$*2 | $CH_2$*2 | $CH_2$*2 | H | H | $CH_2$*2 | $SiMe_2$ | Cl | Cl | Zr |
| $CH_3$ | H | $CH_3$ | $CH_3$ | $CH_3$ | H | H | $CH_3$ | $SiMe_2$ | Cl | Cl | Zr |

*2: $R^3$ and $R^{12}$, and $R^6$ and $R^{15}$ are bonded to each other to form a five-memebered ring, respectively.

Me: methyl; Ph: phenyl

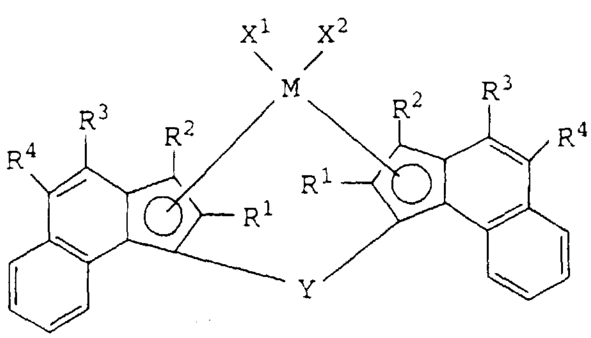

| $R^1$ | $R^2$ | $R^3$ | $R^4$ | Y | $X^1$ | $X^2$ | M |
|---|---|---|---|---|---|---|---|
| H | H | H | H | $SiMe_2$ | Cl | Cl | Zr |
| H | $CH_3$ | H | H | $SiMe_2$ | Cl | Cl | Zr |
| H | $CH_3$ | H | $CH_3$ | $SiMe_2$ | Cl | Cl | Zr |
| H | $CH_3$ | $CH_3$ | $CH_3$ | $SiMe_2$ | Cl | Cl | Zr |
| $CH_3$ | $CH_3$ | H | H | $SiMe_2$ | Cl | Cl | Zr |
| $CH_3$ | $CH_3$ | H | $CH_3$ | $SiMe_2$ | Cl | Cl | Zr |
| $CH_3$ | $CH_3$ | $CH_3$ | $CH_3$ | $SiMe_2$ | Cl | Cl | Zr |

Me: metyl.

Also employable in the invention are transition metal compounds wherein zirconium is replaced with titanium or hafnium in the above-mentioned compounds.

The transition metal compounds mentioned above are used generally in the form of racemic modification as the olefin polymerization catalyst component, but they can be used also in the form of R type or S type.

The indene derivative ligands for the transition metal compounds can be synthesized in accordance with ordinary organic synthesis through, for example, the reaction route described below.

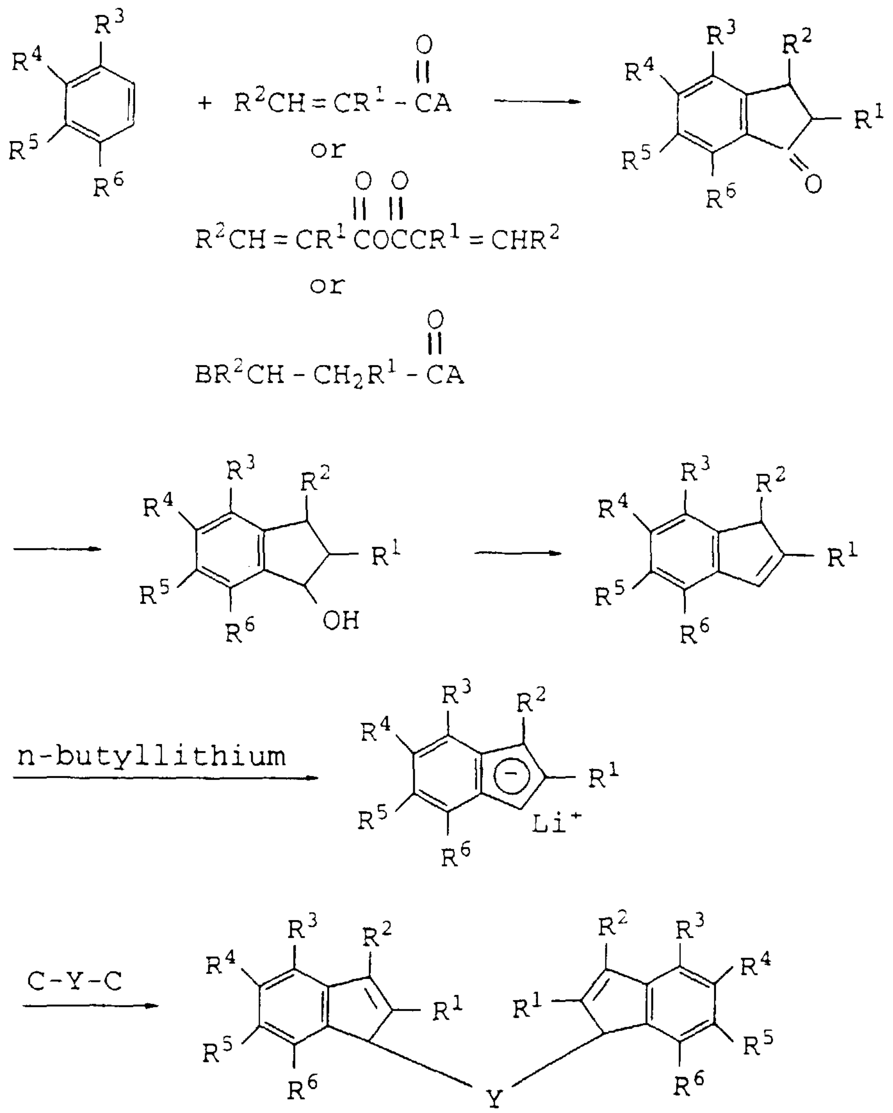


wherein A, B, C are each halogen.

The transition metal compounds used in the invention can be synthesized from these indene derivatives in accordance with conventionally known processes, for example, described in Japanese Patent Laid-Open Publication No. 268307/1992.

In the present invention, a bridge type transition metal compound (metallocene compound) represented by the following formula (C) is also employable.

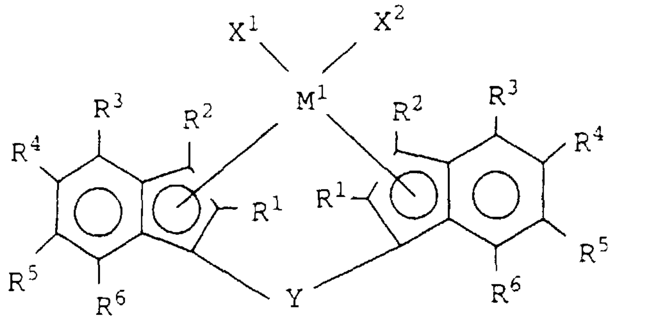

... (C)

In the formula (C), M, $R^1$, $R^2$, $R^3$, $R^4$, $R^5$ and $R^6$ have the same meanings described for those in the aforesaid formula (B).

Of $R^3$, $R^4$, $R^5$ and $R^6$, at least two groups including $R^3$ are preferably alkyl groups, and it is more preferred that $R^3$ and $R^5$, or $R^3$ and $R^6$ are alkyl groups. These alkyl groups are preferably secondary or tertiary alkyl groups, and may be substituted with halogen atoms or silicon-containing groups. As the halogen atoms and the silicon-containing groups, there can be mentioned those substituents as described for $R^1$ and $R^2$.

Of the groups $R^3$, $R^4$, $R^5$ and $R^6$, other groups than the alkyl groups are each preferably hydrogen.

Examples of the hydrocarbon groups of 1 to 20 carbon atoms include straight chain and branched chain alkyl groups and cyclic alkyl groups, such as methyl, ethyl, n-propyl, i-propyl, n-butyl, i-butyl, sec-butyl, tert-butyl, pentyl, hexyl, cyclohexyl, heptyl, octyl, nonyl, dodecyl, eicosyl, norbornyl and adamantyl; and arylalkyl groups, such as benzyl, phenylethyl, phenylpropyl and tolylmethyl. These groups may contain a double bond or a triple bond.

Two groups selected from $R^3$, $R^4$, $R^5$ and $R^6$ may be bonded to each other to form a monocyclic or polycyclic hydrocarbon ring other than the aromatic ring.

Examples of the halogen atoms are those described for $R^1$ and $R^2$.

$X^1$, $X^2$, Y and $R^7$ have the same meanings described for those in the aforesaid formula (B).

Listed below are examples of the metallocene compounds (transition metal compounds) represented by the formula (C).

rac-Dimethylsilylene-bis(4,7-dimethyl-1-indenyl)zirconium dichloride,

rac-Dimethylsilylene-bis(2,4,7-trimethyl-1-indenyl)zirconium dichloride,

rac-Dimethylsilylene-bis(2,4,6-trimethyl-1-indenyl)zirconium dichloride,

rac-Dimethylsilylene-bis(2,5,6-trimethyl-1-indenyl)zirconium dichloride,

rac-Dimethylsilylene-bis(2,4,5,6-tetramethyl-1-indenyl)zirconium dichloride,

rac-Dimethylsilylene-bis(2,4,5,6,7-pentamethyl-1-indenyl)zirconium dichloride,

rac-Dimethylsilylene-bis(2-methyl-4-n-propyl-7-methyl-1-indenyl)zirconium dichloride,

rac-Dimethylsilylene-bis(4-i-propyl-7-methyl-1-indenyl)zirconium dichloride,

rac-Dimethylsilylene-bis(2-methyl-4-i-propyl-7-methyl-1-indenyl)zirconium dichloride,

rac-Dimethylsilylene-bis(2-methyl-4-i-propyl-6-methyl-1-indenyl)zirconium dichloride,

rac-Dimethylsilylene-bis(2-methyl-4-methyl-6-i-propyl-1-indenyl)zirconium dichloride,

rac-Dimethylsilylene-bis(2-methyl-4-i-propyl-5-methyl-1-indenyl)zirconium dichloride,

rac-Dimethylsilylene-bis(2-methyl-4,6-di(i-propyl)-1-indenyl)zirconium dichloride,

rac-Dimethylsilylene-bis(2-methyl-4,6-di(i-propyl)-7-methyl-1-indenyl)zirconium dichloride,

rac-Dimethylsilylene-bis(2-methyl-4-i-butyl-7-methyl-1-indenyl)zirconium dichloride,

rac-Dimethylsilylene-bis(2-methyl-4-sec-butyl-7-methyl-1-indenyl)zirconium dichloride,

rac-Dimethylsilylene-bis(2-methyl-4,6-di(sec-butyl)-1-indenyl)zirconium dichloride,

rac-Dimethylsilylene-bis(2-methyl-4-tert-butyl-7-methyl-1-indenyl)zirconium dichloride,

rac-Dimethylsilylene-bis(2-methyl-4-cyclohexyl-7-methyl-1-indenyl)zirconium dichloride,

rac-Dimethylsilylene-bis(2-methyl-4-benzyl-7-methyl-1-indenyl)zirconium dichloride,

rac-Dimethylsilylene-bis(2-methyl-4-phenylethyl-7-methyl-1-indenyl)zirconium dichloride,

rac-Dimethylsilylene-bis(2-methyl-4-phenyldichloromethyl-7-methyl-1-indenyl)zirconium dichloride,

rac-Dimethylsilylene-bis(2-methyl-4-chloromethyl-7-methyl-1-indenyl)zirconium dichloride,

rac-Dimethylsilylene-bis(2-methyl-4-trimethylsilylmethyl-7-methyl-1-indenyl)zirconium dichloride,

rac-Dimethylsilylene-bis(2-methyl-4-trimethylsiloxymethyl-7-methyl-1-indenyl)zirconium dichloride,

rac-Diethylsilylene-bis(2-methyl-4-i-propyl-7-methyl-1-indenyl)zirconium dichloride,

rac-Di(i-propyl)silylene-bis(2-methyl-4-i-propyl-7-methyl-1-indenyl)zirconium dichloride,

rac-Di(n-butyl)silylene-bis(2-methyl-4-i-propyl-7-methyl-1-indenyl)zirconium dichloride,

rac-Di(cyclohexyl)silylene-bis(2-methyl-4-i-propyl-7-methyl-1-indenyl)zirconium dichloride,

rac-Methylphenylsilylene-bis(2-methyl-4-i-propyl-7-methyl-1-indenyl)zirconium dichloride,

rac-Diphenylsilylene-bis(2-methyl-4-i-propyl-7-methyl-1-indenyl)zirconium dichloride,

rac-Diphenylsilylene-bis(2-methyl-4-di(i-propyl)-1-indenyl)zirconium dichloride,

rac-Di(p-tolyl)silylene-bis(2-methyl-4-i-propyl-7-methyl-1-indenyl)zirconium dichloride,

rac-Di(p-chlorophenyl)silylene-bis(2-methyl-4-i-propyl-7-methyl-1-indenyl)zirconium dichloride,

rac-Dimethylsilylene-bis(2-methyl-4-i-propyl-7-methyl-1-indenyl)zirconium dibromide,

rac-Dimethylsilylene-bis(2-methyl-4-i-propyl-7-methyl-1-indenyl)zirconium dimethyl,

rac-Dimethylsilylene-bis(2-methyl-4-i-propyl-7-methyl-1-indenyl)zirconium methylchloride,

rac-Dimethylsilylene-bis(2-methyl-4-i-propyl-7-methyl-1-indenyl)zirconium-bis(methanesulfonato),

rac-Dimethylsilylene-bis(2-methyl-4-i-propyl-7-methyl-1-indenyl)zirconium-bis(p-phenylsulfinato),

rac-Dimethylsilylene-bis(2-methyl-3-methyl-4-i-propyl-6-methyl-1-indenyl)zirconium dichloride,

rac-Dimethylsilylene-bis(2-ethyl-4-i-propyl-6-methyl-1-indenyl)zirconium dichloride, and

rac-Dimethylsilylene-bis(2-phenyl-4-i-propyl-6-methyl-1-indenyl)zirconium dichloride.

Also employable in the invention are transition metal compounds wherein zirconium is replaced with titanium metal or hafnium metal in the above-mentioned compounds.

The transition metal compounds mentioned above are used generally in the form of racemic modification, but they can be used also in the form of R type or S type.

The indene derivative ligands for the transition metal compounds can be synthesized in accordance with ordinary organic synthesis through, for example, the aforementioned reaction route.

The transition metal compounds (metallocene compounds) represented by the formula (C) can be synthesized from these indene derivatives in accordance with conventionally known processes, for example, described in Japanese Patent Laid-Open Publication No. 268307/1992.

In the present invention, a bridge type transition metal compound (metallocene compound) represented by the following formula (D) is also employable.

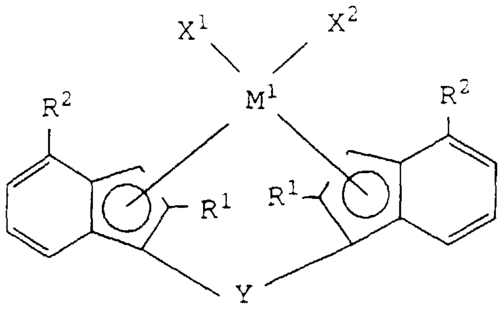

... (D)

In the formula (D), M, $R^1$, $X^1$, $X^2$ and Y have the same meanings as described for those in the aforesaid formula (B) or (C).

$R^1$ is preferably a hydrocarbon group, more preferably a hydrocarbon group of 1 to 4 carbon atoms, e.g., methyl, ethyl, propyl and butyl.

$X^1$ and $X^2$ are each preferably a halogen atom or a hydrocarbon group of 1 to 20 carbon atoms.

$R^2$ is an aryl group of 6 to 16 carbon atoms, for example, phenyl, α-naphthyl, β-naphthyl, anthracenyl, phenanthryl, pyrenyl, acenaphthyl, phenalenyl (perinaphthenyl) or aceanthrylenyl. Of these, phenyl or naphthyl is preferred. These aryl groups may be substituted with halogen atoms, hydrocarbon groups of 1 to 20 carbon atoms or halogenated hydrocarbon groups of 1 to 20 carbon atoms such as described for $R^1$.

Listed below are examples of the transition metal compounds (metallocene compounds) represented by the formula (D).

rac-Dimethylsilylene-bis(4-phenyl-1-indenyl)zirconium dichloride,

rac-Dimethylsilylene-bis(2-methyl-4-phenyl-1-indenyl)zirconium dichloride,

rac-Dimethylsilylene-bis(2-methyl-4-(α-naphthyl)-1-indenyl)zirconium dichloride,

rac-Dimethylsilylene-bis(2-methyl-4-(β-naphthyl)-1-indenyl)zirconium dichloride,

rac-Dimethylsilylene-bis(2-methyl-4-(1-anthracenyl)-1-indenyl)zirconium dichloride,

rac-Dimethylsilylene-bis(2-methyl-4-(2-anthracenyl)-1-indenyl)zirconium dichloride,

rac-Dimethylsilylene-bis(2-methyl-4-(9-anthracenyl)-1-indenyl)zirconium dichloride,

rac-Dimethylsilylene-bis(2-methyl-4-(9-phenanthryl)-1-indenyl)zirconium dichloride,

rac-Dimethylsilylene-bis(2-methyl-4-(p-fluorophenyl)-1-indenyl)zirconium dichloride,

rac-Dimethylsilylene-bis(2-methyl-4-(pentafluorophenyl)-1-indenyl)zirconium dichloride,

rac-Dimethylsilylene-bis(2-methyl-4-(p-chlorophenyl)-1-indenyl)zirconium dichloride,

rac-Dimethylsilylene-bis(2-methyl-4-(m-chlorophenyl)-1-indenyl)zirconium dichloride,

rac-Dimethylsilylene-bis(2-methyl-4-(p-chlorophenyl)-1-indenyl)zirconium dichloride,

rac-Dimethylsilylene-bis(2-methyl-4-(o,p-dichlorophenyl)phenyl-1-indenyl)zirconium dichloride,

rac-Dimethylsilylene-bis(2-methyl-4-(p-bromophenyl)-1-indenyl)zirconium dichloride,

rac-Dimethylsilylene-bis(2-methyl-4-(p-tolyl)-1-indenyl)zirconium dichloride,

rac-Dimethylsilylene-bis(2-methyl-4-(m-tolyl)-1-indenyl)zirconium dichloride,

rac-Dimethylsilylene-bis(2-methyl-4-(o-tolyl)-1-indenyl)zirconium dichloride,

rac-Dimethylsilylene-bis(2-methyl-4-(o,o'-dimethylphenyl)-1-indenyl)zirconium dichloride,

rac-Dimethylsilylene-bis(2-methyl-4-(p-ethylphenyl)-1-indenyl)zirconium dichloride,

rac-Dimethylsilylene-bis(2-methyl-4-(p-i-propylphenyl)-1-indenyl)zirconium dichloride,

rac-Dimethylsilylene-bis(2-methyl-4-(p-benzylphenyl)-1-indenyl)zirconium dichloride,

rac-Dimethylsilylene-bis(2-methyl-4-(p-biphenyl)-1-indenyl)zirconium dichloride,

rac-Dimethylsilylene-bis(2-methyl-4-(m-biphenyl)-1-indenyl)zirconium dichloride,

rac-Dimethylsilylene-bis(2-methyl-4-(p-trimethylsilylphenyl)-1-indenyl)zirconium dichloride,

rac-Dimethylsilylene-bis(2-methyl-4-(m-trimethylsilylphenyl)-1-indenyl)zirconium dichloride,

rac-Dimethylsilylene-bis(2-ethyl-4-phenyl-1-indenyl)zirconium dichloride,

rac-Diphenylsilylene-bis(2-ethyl-4-phenyl-1-indenyl)zirconium dichloride,

rac-Dimethylsilylene-bis(2-phenyl-4-phenyl-1-indenyl)zirconium dichloride,

rac-Dimethylsilylene-bis(2-n-propyl-4-phenyl-1-indenyl)zirconium dichloride,

rac-Diethylsilylene-bis(2-methyl-4-phenyl-1-indenyl)zirconium dichloride,

rac-Di-(i-propyl)silylene-bis(2-methyl-4-phenyl-1-indenyl)zirconium dichloride,

rac-Di-(n-butyl)silylene-bis(2-methyl-4-phenyl-1-indenyl)zirconium dichloride,

rac-Dicyclohexylsilylene-bis(2-methyl-4-phenyl-1-indenyl)zirconium dichloride,

rac-Methylphenylsilylene-bis(2-methyl-4-phenyl-1-indenyl)zirconium dichloride,

rac-Diphenylsilylene-bis(2-methyl-4-phenyl-1-indenyl)zirconium dichloride,

rac-Di(p-tolyl)silylene-bis(2-methyl-4-phenyl-1-indenyl)zirconium dichloride,

rac-Di(p-chlorophenyl)silylene-bis(2-methyl-4-phenyl-1-indenyl)zirconium dichloride,

rac-Methylene-bis(2-methyl-4-phenyl-1-indenyl)zirconium dichloride,

rac-Ethylene-bis(2-methyl-4-phenyl-1-indenyl)zirconium dichloride,

rac-Dimethylgermylene-bis(2-methyl-4-phenyl-1-indenyl)zirconium dichloride,

rac-Dimethylstannylene-bis(2-methyl-4-phenyl-1-indenyl)zirconium dichloride,

rac-Dimethylsilylene-bis(2-methyl-4-phenyl-1-indenyl)zirconium dibromide,

rac-Dimethylsilylene-bis(2-methyl-4-phenyl-1-indenyl)zirconium dimethyl,

rac-Dimethylsilylene-bis(2-methyl-4-phenyl-1-indenyl)zirconium methylchloride,

rac-Dimethylsilylene-bis(2-methyl-4-phenyl-1-indenyl)zirconium chloride $SO_2Me$, and

rac-Dimethylsilylene-bis(2-methyl-4-phenyl-1-indenyl)zirconium chloride $OSO_2Me$.

Also employable in the invention are transition metal compounds wherein zirconium is replaced with titanium metal or hafnium metal in the above-mentioned compounds.

The transition metal compounds represented by the formula (D) can be prepared in accordance with "Journal of Organometallic Chem.", 288(1985), pp. 63-67, and European Patent Publication No. 0,320,762 (specification and examples), for example, in the following manner.

$$2H_2R^a + 2\text{-butyl-Li} \longrightarrow 2HR^aLi \xrightarrow{Z-Y-Z}$$

$$HR^a{-}Y{-}R^aH \xrightarrow{2\text{-butyl-Li}}$$

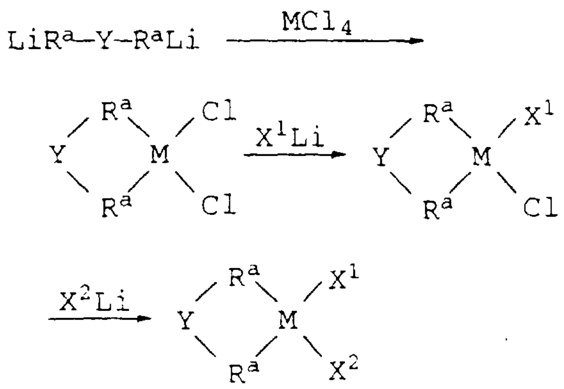


wherein Z is Cl, Br, I or o-tosyl, and
$H_2R^a$ is

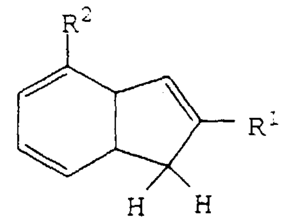

The transition metal compounds (D) are used generally in the form of racemic modification, but they can be used also in the form of R type or S type.

In the present invention, a compound represented by the following formula (VII) can be also employed as the metallocene compound.

$$L^aM^3X_2 \qquad (VII)$$

wherein, $M^3$ is a metal of Group 4 of the periodic table or a metal of lanthanide series;

$L^a$ is a derivative of delocalization π bond group and imparts restraint geometrical shape to the metal $M^3$ active site; and
the X's may be the same or different, and are each hydrogen, halogen, a hydrocarbon group of 20 or less carbon, silicon or germanium atoms, a silyl group or a germyl group.

Of the compounds of the formula (VII), preferred are compounds represented by the following formula (VII').

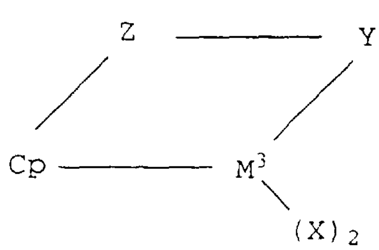
... (VII')

wherein $M^3$ is titanium, zirconium or hafnium; X is the same as described above;

Cp is a substituted cyclopentadienyl group which is π-bonded to $M^3$ and has a substituent Z;
Z is oxygen, sulfur, boron or an element of Group 14 of the periodic table (e.g., silicon, germanium or tin);
Y is a ligand containing nitrogen, phosphorus, oxygen or sulfur; and
Z and Y may form together a condensed ring.

Examples of the compounds represented by the formula (VII') include (dimethyl(t-butylamide)(tetramethyl-$\eta^5$-cyclopentadienyl)silane)titanium dichloride and

((t-butylamide)(tetramethyl-$\eta^5$-cyclopentadienyl)-1,2-ethanediyl)titanium dichloride.

The metallocene compounds mentioned above can be used singly or in combination.

The metallocene compound can be used by being supported on a particulate carrier.

Examples of the particulate carriers include inorganic carriers, such as $SiO_2$, $Al_2O_3$, $B_2O_3$, MgO, $ZrO_2$, CaO, $TiO_2$, ZnO, $SnO_2$, BaO and ThO; and organic carriers, such as polyethylene, polypropylene, poly-1-butene, poly-4-methyl-1-pentene and a styrene/divinylbenzene copolymer. These particulate carriers can be used singly or in combination.

Next, the organoaluminum oxy-compound (b) and the ionizing conic compound which form the metallocene catalysts are described.

The organoaluminum oxy-compound (b) may be either aluminoxane conventionally known or a benzene-insoluble organoaluminum oxy-compound exemplified in Japanese Patent Laid-Open Publication No. 78687/1990.

The conventionally known aluminoxane is specifically represented by the following formula:

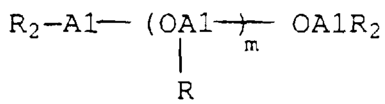

... (1)

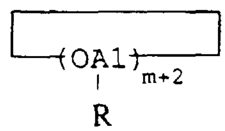

... (2)

wherein R is a hydrocarbon group, such as methyl, ethyl, propyl or butyl, preferably methyl or ethyl, particularly preferably methyl; and

m is an integer of 2 or more, preferably an integer of 5 to 40.

The aluminoxane may be formed from mixed alkyloxyaluminum units consisting of alkyloxyaluminum units represented by the formula ($OAl(R^1)$) and alkyloxyaluminum units represented by the formula ($OAl(R^2)$) (wherein $R^1$ and $R^2$ are each the same hydrocarbon group as described for R, and $R^1$ and $R^2$ are different from each other).

The organoaluminum oxy-compound may contain a small amount of an organic compound of other metal than aluminum.

Examples of the ionizing ionic compounds includes Lewis acid, ionic compounds, borane compounds and carborane compounds.

The Lewis acid is, for example, a compound represented by the formula $BR_3$ (where each R is a phenyl group which may have a substituent such as fluorine, methyl or trifluoromethyl, or a fluorine atom). Examples of such compounds include trifluoroboron, triphenylboron, tris(4-fluorophenyl)boron, tris(3,5-difluorophenyl)boron, tris(4-fluoromethylphenyl)boron, tris(pentafluorophenyl)boron, tris(p-tolyl)boron, tris(o-tolyl)boron and tris(3,5-dimethylphenyl)boron.

Examples of the ionic compounds include trialkyl-substituted ammonium salts, N,N,-dialkylanilinium salts, dialkylammonium salts and triarylphosphonium salts. Particular examples of the trialkyl-substituted ammonium salts include triethylammoniumtetra(phenyl)boron, tripropylammoniumtetra(phenyl)boron and tri(n-butyl)ammoniumtetra(phenyl)boron. Particular examples of the dialkylammonium salts include di(1-propyl)ammoniumtetra(pentafluorophenyl)boron and dicyclohexylammoniumtetra(phenyl)boron. Also employable as the ionic compounds are triphenylcarbeniumtetrakis(pentafluorophenyl)borate, N,N-dimethylaniliniumtetrakis(pentafluorophenyl)borate and ferroceniumtetrakis(pentafluorophenyl)borate.

Examples of the borane compounds include decaborane(14), bis[tri(n-butyl)ammonium]nonaborate, bis[tri(n-butyl)ammonium]decaborate, and salts of metallic borane anions such as bis[tri(n-butyl)ammonium]bis(dodecahydridododecaborate)-nickelate(III).

Examples of the carborane compounds include 4-carbanonaborane(14), 1,3-dicarbanonaborane(13), and salts of metallic carborane anions such as bis[tri(n-butyl)ammonium]bis(undecahydrido-7-carbaundecaborate)nickelate(IV).

The ionizing ionic compounds mentioned above can be used singly or in combination.

The organoaluminum oxy-compound or the ionizing ionic compound can be used by being supported on the aforesaid particulate carrier.

In the preparation of the catalyst, the following organoaluminum compound may be used together with the organoaluminum oxy-compound or the ionizing ionic compound.

As the organoaluminum compound, a compound having at least one Al-C bond in the molecule can be employed. For example, such an organoaluminum compound is represented by the following formula:

$$(R^1)_mAl(O(R^2))_nH_pX_q$$

wherein $R^1$ and $R^2$ may be the same or different and are each a hydrocarbon group of usually 1 to 15 carbon atoms, preferably 1 to 4 carbon atoms; X is a halogen atom; and m, n, p and q are numbers satisfying the conditions of $0 < m \leq 3$, $n \leq n < 3$, $0 \leq p < 3$, $0 \leq q < 3$, and $m+n+p+q = 3$ .

In the present invention, ethylene (i), the aromatic vinyl compound (ii), the non-conjugated polyene (iii), and optionally, the α-olefin (iv) are copolymerized in the presence of the olefin polymerization catalyst, usually in a liquid phase. In the copolymerization, a hydrocarbon is generally used as a solvent, but an α-olefin may be used as a solvent. The copolymerization can be carried out by any of batchwise and continuous processes.

When the copolymerization is carried out batchwise in the presence of the metallocene catalyst, the metallocene compound is used in an amount of usually 0.00005 to 0.1 mmol, preferably 0.0001 to 0.05 mmol, based on 1 liter of the polymerization volume. The organoaluminum oxy-compound is used in such an amount that the molar ratio (Al/M) of the aluminum atom (Al) in the organoaluminum oxy-compound to the transition metal atom (M) in the metallocene compound is in the range of 1 to 10,000, preferably 10 to 5,000.

The ionizing ionic compound is used in such an amount that the molar ratio of the ionizing ionic compound to the metallocene compound (ionizing ionic compound/metallocene compound) is in the range of 0.5 to 20, preferably 1 to 10.

The organoaluminum compound is used in an amount of usually about 0 to 5 mmol, preferably about 0 to 2 mmol, based on 1 liter of the polymerization volume.

The copolymerization reaction is carried out under the conditions of a temperature of usually -20 to 150 °C, preferably 0 to 120 °C, more preferably 0 to 100 °C, and a pressure of usually more than 0 and not more than 80 kg/$cm^2$, preferably more than 0 and not more than 50 kg/$cm^2$.

Ethylene (i), the aromatic vinyl compound (ii), the non-conjugated polyene (iii), and optionally, the α-olefin (iv) are fed to the polymerization system in such amounts that the unsaturated olefin copolymer (A) having the aforesaid specific monomer composition can be obtained. In the copolymerization, a molecular weight modifier such as hydrogen can be employed.

When ethylene (i), the aromatic vinyl compound (ii), the non-conjugated polyene (iii), and optionally, the α-olefin (iv) are copolymerized as described above, the unsaturated olefin copolymer is generally obtained as a polymerization solution containing it. The polymerization solution is treated in a conventional manner, whereby the unsaturated olefin copolymer (A) is obtained.

(B) Vulcanizing agent

The vulcanizing agent (B) is, for example, sulfur or a sulfur compound.

Examples of sulfur include powdered sulfur, precipitated sulfur, colloidal sulfur, surface-treated sulfur and insoluble sulfur.

Examples of the sulfur compounds include sulfur chloride, sulfur dichloride and high-molecular polysulfides. Also employable are sulfur compounds which release active sulfur at the vulcanizing temperature to vulcanize the composition, such as morpholine disulfide, alkylphenol disulfide, tetramethylthiuram disulfide and dipentamethylenethiuram tetrasulfide.

Of these, powdered sulfur is preferably employed.

An organic peroxide is also employable as the vulcanizing agent (B). Examples of the organic peroxides include alkyl peroxides, such as dicumyl peroxide, di-tert-butyl peroxide, di-tert-butylperoxy-3,3,5-trimethylcyclohexane, tert-butyldicumyl peroxide, di-tert-amyl peroxide, 2,5-dimethyl-2,5-di(tert-butylperoxy)hexyne-3, 2,5-dimethyl-2,5-di(benzoylperoxy)hexane, 2,5-dimethyl-2,5-di(tert-butylperoxy)hexane, α,α-bis(tert-butylperoxy-m-isopropyl)benzene and tert-butyl hydroperoxide; peroxy esters, such as tert-butyl peroxyacetate, tert-butyl peroxyisobutyrate, tert-butyl peroxypivalate, tert-butyl peroxymaleate, tert-butyl peroxyneodecanoate, tert-butyl peroxybenzoate and di-tert-butyl peroxyphthalate; and ketone peroxides, such as dicyclohexanone peroxide. These organic peroxides can be used singly or in combination.

Of these, preferred are organic peroxides having a temperature, at which the half-life period thereof is one minute, of 130 to 200 °C, for example, dicumyl peroxide, di-tert-butyl peroxide, di-tert-butylperoxy-3,3,5-trimethylcyclohexane, tert-butyldicumyl peroxide, di-tert-amyl peroxide and tert-butyl hydroperoxide.

Of the various vulcanizing agents mentioned above, sulfur or the sulfur compound, especially sulfer, is preferable as the vulcanizing agent (B), because a rubber composition having excellent properties can be obtained.

(C) Reinforcing agent

Examples of the reinforcing agents include carbon black, such as SRF, GPF, FEF, MAF, HAF, ISAF, SAF, FT and MT; carbon black surface-treated with a silane coupling agent or the like; silica; activated calcium carbonate; finely powdered talc; and finely powdered silicic acid.

When the reinforcing agent is used, a vulcanized product excellent in mechanical properties such as tensile strength, tear strength and abrasion resistance can be obtained.

(D) Liquid softening agent

As the liquid softening agents, those conventionally added to rubbers can be widely used, and examples thereof include petroleum type softening agents, such as process oil, lubricating oil, paraffin, liquid paraffin, petroleum asphalt and vaseline; coal tar type softening agents, such as coal tar and coal tar pitch; fatty oil type softening agents, such as castor oil, linseed oil, rapeseed oil and coconut oil; tall oil; factice; waxes, such as beeswax, carnauba wax and lanolin; fatty acids and fatty acid salts, such as ricinoleic acid, palmitic acid, barium stearate, calcium stearate and zinc laurate; and synthetic polymer materials, such as petroleum resins, atactic polypropylene and coumarone-indene resin. Of these, prefered are petroleum type softening agents, and particularly prefered is process oil.

Vulcanized product

The vulcanized product for forming the vulcanized molded product having a surface decorative layer according to the invention can be obtained by vulcanizing the unsaturated olefin copolymer or vulcanizing the unsaturated olefin copolymer composition comprising the unsaturated olefin copolymer (A) and at least one compounding ingredient selected from the vulcanizing agent (B), the reinforcing agent (C) and the liquid softening agent (D).

In the unsaturated olefin copolymer composition,

the vulcanizing agent (B), when it is sulfur or a sulfur compound, can be used in an amount of usually 0.1 to 10 parts by weight, preferably 0.5 to 5 parts by weight, based on 100 parts by weight of the unsaturated olefin copolymer (A); or

the vulcanizing agent (B), when it is an organic peroxide, can be used in an amount of 0.05 to 15 parts by weight, preferably 0.15 to 5 parts by weight, based on 100 parts by weight of the unsaturated olefin copolymer (A);

the reinforcing agent (C) can be used in an amount of usually not more than 300 parts by weight, preferably 10 to 300 parts by weight, more preferably 10 to 200 parts by weight, based on 100 parts by weight of the unsaturated olefin copolymer (A); and

the liquid softening agent (D) can be used in an amount of usually not more than 200 parts by weight, preferably 5 to 200 parts by weight, more preferably 10 to 150 parts by weight, still more preferably 10 to 100 parts by weight, based on 100 parts by weight of the unsaturated olefin copolymer (A).

The unsaturated olefin copolymer composition can be prepared by blending the unsaturated olefin copolymer (A) with at least one compounding ingredient selected from the vulcanizing agent (B), the reinforcing agent (C) and the liquid softening agent (D) and kneading them by a conventional method, e.g., using an internal mixer such as a Banbury mixer, a kneader or an intermixer.

For preparing a vulcanized product from the unsaturated olefin copolymer or the unsaturated olefin copolymer composition not containing the vulcanizing agent (B), an unvulcanized compounded rubber is first prepared, then the compounded rubber is molded into a desired shape, and the molded product is vulcanized, similarly to a conventional manner for vulcanizing common rubbers. In order to vulcanize the molded product, irradiation with electron rays can be used.

For preparing a vulcanized product from the unsaturated olefin copolymer composition containing the vulcanizing agent (B), an unvulcanized compounded rubber is first prepared, then the compounded rubber is molded into a desired shape, and the molded product is vulcanized, similarly to a conventional manner for vulcanizing common rubbers.

In the present invention, to the unvulcanized compounded rubber can be added rubber compounding ingredients, such as vulcanization accelerators, vulcanization aids, fillers, tackifiers, anti-aging agents, foaming agents, processing aids, heat stabilizers, weathering stabilizers, antistatic agents, colorants, lubricants, flame retardants and anti-blooming agents, adhesion improvers to improve adhesion to the surface decorative layer, etc., in addition to the unsaturated olefin copolymer (A), the vulcanizing agent (B), the reinforcing agent (C) and the liquid softening agent (D), within limits not prejudicial to the objects of the present invention.

Examples of the vulcanization accelerators include thiazole compounds, such as N-cyclohexyl-2-benzothiazole sulfenamide, N-oxydiethylene-2-benzothiazole sulfenamide (OBS), N,N-diisopropyl-2-benzothiazole sulfenamide, 2-mercaptobenzothiazole, 2-(2,4-dinitrophenyl)mercaptobenzothiazole, 2-(2,6-diethyl-4-morpholinothio)benzothiazole and dibenzothiazyl disulfide; guanidine compounds, such as diphenylguanidine, triphenylguanidine, diorthonitrileguanidine, orthonitrile biguanide and diphenylguanidine phthalate; aldehyde amine compounds or aldehyde ammonia compounds, such as acetaldehyde-aniline condensate, butylaldehyde-aniline condensate, hexamethylenetetramine and acetaldehyde ammonia; imidazoline compounds, such as 2-mercaptoimidazoline; thiourea compounds, such as thiocarbanilide, diethylthiourea, dibutylthiourea, trimethylthiourea and diorthotolylthiourea; thiuram compounds, such as tetramethylthiuram monosulfide, tetramethylthiuram disulfide, tetraethylthiuram disulfide, tetrabutylthiuram disulfide and pentamethylenethiuram tetrasulfide; dithio acid salt compounds, such as zinc dimethyldithiocarbamate, zinc diethyldithiocarbamate, zinc di-n-butyldithiocarbamate, zinc ethylphenyldithiocarbamate, zinc butylphenyldithiocarbamate, sodium dimethyldithiocarbamate, selenium dimethyldithiocarbamate and tellurium dimethyldithiocarbamate; xanthate compounds, such as zinc dibutylxanthate; and other compounds, such as zinc white. The vulcanization accelerator can be used in an amount of 1 to 20 parts by weight, preferably 2 to 10 parts by weight, based on 100 parts by weight of the unsaturated olefin copolymer (A).

Examples of the fillers include calcium carbonate light, calcium carbonate heavy, talc and clay. The filler can be used in an amount of usually not more than 300 parts by weight, preferably 10 to 300 parts by weight, more preferably 10 to 200 parts by weight, based on 100 parts by weight of the unsaturated olefin copolymer (A).

As the foaming agents, those generally used for foam-molding of rubbers can be widely employed. Examples of the foaming agents include inorganic foaming agents, such as sodium bicarbonate, sodium carbonate, ammonium bicarbonate, ammonium carbonate and ammonium nitrite; nitroso compounds, such as N,N'-dimethyl-N,N'-dinitrosoterephthalamide and N,N'-dinitrosopentamethylenetetramine; azo compounds, such as azodicarbonamide, azobisisobutyronitrile, azocyclohexylnitrile, azodiaminobenzene and barium azodicarboxylate; sulfonylhydrazide compounds, such as benzenesulfonylhydrazide, toluenesulfonylhydrazide, p,p'-oxybis(benzenesulfonylhydrazide) and diphenylsulfone-3,3'-disulfonylhydrazide; and azide compounds, such as calcium azide, 4,4-diphenyldisulfonylazide and p-toluenesulfonylazide. Of these, preferable are nitroso compounds, azo compounds and azide compounds. The foaming agent can be used in an amount of 0.5 to 30 parts by weight, preferably 1 to 20 parts by weight, based on 100 parts by weight of the unsaturated olefin copolymer (A). From the unsaturated olefin copolymer composition containing the foaming agent in this amount, a foamed product having an apparent specific gravity of 0.03 to 0.8 g/cm$^3$ can be obtained.

In combination with the foaming agent, a foaming aid can be used. When the foaming aid is used in combination, various effects such as lowering of decomposition temperature of the foaming agent, acceleration of decomposition thereof and uniformity of the resulting foam can be obtained.

Examples of the foaming aids include organic acids, such as salicylic acid, phthalic acid, stearic acid and oxalic acid; and urea or its derivatives. The foaming aid can be used in an amount of 0.01 to 10 parts by weight, preferably 0.1 to 5 parts by weight, based on 100 parts by weight of the unsaturated olefin copolymer (A).

As the processing aids, those generally added to rubbers can be widely employed. Examples of the processing aids include higher fatty acids, such as ricinoleic acid, stearic acid, palmitic acid and lauric acid; salts of higher fatty acids, such as barium stearate, zinc stearate and calcium stearate; and esters of higher fatty acids. The processing aid can be used in an amount of not more than 10 parts by weight, preferably not more than 5 parts by weight, based on 100 parts by weight of the unsaturated olefin copolymer (A).

The adhesion improver serves to improve adhesion properties of the vulcanized product to the decorative layer such as a coating film, and is, for example, an organotin compound, a tertiary amine compound, a hydroxyl group-containing (co)polymer or a metallic hydroxide.

Examples of organotin compounds include dialkyltin dicarboxylates, such as dibutyltin diacetate, dibutyltin dioctanoate, dibutyltin dilaurate and dioctyltin dilaurate; dialkyltin maleates, such as dibutyltin dimethylmaleate, dibutyltin dioctylmaleate, dibutyltin dioleylmaleate, dibutyltin dimethoxymethylmaleate and dibutyltin laurate methylmaleate; dialkyltin dithioglycolates, such as dibutyltin dioctylthioglycolate and dioctyltin dioctylthioglycolate; dialkyltin dimercaptides, such as dibutyltin dilaurylmercaptide and dioctyltin dilaurylmercaptide; dialkyltin dithiocarboxylates, such as dibutyltin dithioacetate, dibutyltin dithiooctanoate, dibutyltin dithiolaurate and dioctyltin dithiolaurate; dialkyltin dimercaptocarboxylates, such as dibutyltin dimercaptopropionate; dialkylhydroxytin chlorides, such as dibutylhydroxytin chloride; dialkyltin mercaptates, such as dibutyltin mercaptate; alkyltin trilaurates, such as butyltin trilaurate and octyltin

trilaurate; alkyltin trimaleates, such as butyltin trimethylmaleate and butyltin trioctylmaleate; alkylhydroxytin dichlorides, such as butylhydroxytin dichloride; triaralkyltin maleates, such as tribenzyltin octylmaleate and tribenzyltin methylmaleate; and dialkyltin maleate polymers such as a dioctyltin maleate polymer. The organotin compound can be used in an amount of 0.01 to 10 parts by weight, preferably 0.1 to 5 parts by weight, based on 100 parts by weight of the unsaturated olefin copolymer (A).

The tertiary amine compound is, for example, a low-molecular tertiary amine compound. Examples of such compounds include monoamines, such as triethylamine, dimethylpropylamine, diethylpropylamine and N,N-dimethylcyclohexamine; diamines, such as triethylenediamine, N,N,N',N'-tetramethylethylenediamine, N,N,N',N'-tetramethylpropane-1,3-diamine and N,N,N',N'-tetramethylhexane-1,6-diamine; triamines, such as N,N,N',N',N",N"-hexamethyldiethylenetriamine, N,N,N',N',N",N"-hexamethyldipropylenetriamine and tetramethylguanidine; cyclic amines, such as N,N'-dimethylpiperazine, N-methyl-N'-(2-dimethylamino)-ethylpiperazine, N-methylmorpholine, N-(N',N'-dimethylaminoethyl)-morpholine, 1,2-dimethylimidazole, 1,4-diazabicyclo-[2.2.2]-octane and 1,8-diazabicyclo-[5.4.0]-7-undecene; alcohol amines, such as dimethylaminoethanol, methylaminodiethanol, dimethylaminoethoxyethanol, N,N,N'-trimethylaminoethylethanolamine, N-methyl-N'-(2-hydroxyethyl)-piperazine and N-(2-hydroxyethyl)morpholine; phenol amines, such as tris(dimethylamino)methylphenol; ether amines, such as bis(2-dimethylaminoethyl) ether and ethylene glycol bis(3-dimethyl)aminopropyl ether; and tertiary amino group-containing unsaturated compounds, such as 2-(dimethylamino)ethyl acrylate, 2-(diethylamino)ethyl acrylate, 2-(dimethylamino)ethyl methacrylate, 2-(diethylamino)ethyl methacrylate, 2-(dibutylamino)ethyl acrylate, 2-(dibutylamino)ethyl methacrylate, 2-(dimethylamino)propylacrylamide and 2-(dimethylamino)propylmethacylamide. Also employable as the tertiary amine compound is a high-molecular compound such as a tertiary amino group-containing olefin (co)polymer. The tertiary amino group-containing olefin (co)polymer has a structure wherein the tertiary amino group-containing unsaturated compound is regularly or irregularly copolymerized in the branched or linear carbon chain, or a structure wherein a tertiary amino side chain is grafted, both structures containing the tertiary amino group-containing unsaturated compound in an amount of 0.1 to 50 % by weight. The tertiary amino group-containing olefin (co)polymer can be prepared by a known method, for example, by copolymerizing the tertiary amino group-containing unsaturated compound with an olefin or by graft polymerizing a polyolefin with the tertiary amino group-containing unsaturated compound. Of the tertiary amine compounds mentioned above, 1,4-diazabicyclo-[2.2.2]-octane is preferably employed. The tertiary amine compound may be used in an amount of 0.01 to 10 parts by weight, preferably 0.05 to 5 parts by weight, based on 100 parts by weight of the unsaturated olefin copolymer (A).

Examples of the hydroxyl group-containing (co)polymers include a saponified product of an ethylene/vinyl acetate copolymer; conjugated diene polymers having a hydroxyl group at the end of molecule, such as polybutadiene having a hydroxyl group at the end of molecule and polyisoprene having a hydroxyl group at the end of molecule; hydrogenated product of conjugated diene polymers having a hydroxyl group at the end of molecule, such as a hydrogenated product of polybutadiene having a hydroxyl group at the end of molecule and a hydrogenated product of polyisoprene having a hydroxyl group at the end of molecule; copolymers of ethylene and hydroxyl group-containing unsaturated compounds, such as an ethylene/hydroxyethyl acrylate copolymer, an ethylene/hydroxyethyl methacrylate copolymer, an ethylene/hydroxyoctyl acrylate copolymer and an ethylene/hydorxyoctyl methacrylate copolymer; and graft-modified olefin (co)polymers, such as polyethylene, polypropylene ethylene/$\alpha$-olefin copolymers and ethylene/$\alpha$-olefin/polyene copolymers all of which have been graft-modified with hydroxyl group-containing unsaturated compounds (e.g., hydroxyethyl acrylate, hydroxyethyl methacrylate, hydroxyoctyl acrylate and hydroxyoctyl methacrylate). Of these, preferable are a hydrogenated product of polybutadiene having a hydroxyl group at the end of molecule and a hydrogenated product of polyisoprene having a hydroxyl group at the end of molecule. When the hydroxyl group-containing (co)polymer is added, adhesion properties between the vulcanized product and a coating film of an urethane coating can be improved. The hydroxyl group-containing (co)polymer can be used in an amount of 0.5 to 20 parts by weight, preferably 1 to 15 parts by weight, based on 100 parts by weight of the unsaturated olefin copolymer (A).

Examples of the metallic hydroxides include aluminum hydroxide, magnesium hydroxide, calcium hydroxide, iron hydroxide and nickel hydroxide, Of these, preferable are aluminum hydroxide and magnesium hydroxide, and particularly preferable is magnesium hydroxide. the metallic hydroxide can be used in an amount of 20 to 200 parts by weight, preferably 20 to 150 parts by weight, more preferably 50 to 150 parts by weight, based on 100 parts by weight of the unsaturated olefin copolymer (A).

There is no specific limitation on the process for preparing the vulcanized product. For example, the following process is employable.

In a mixer such as a Banbury mixer, the unsaturated olefin copolymer (A), and if necessary, the filler (C), the liquid softening agent (D) and other rubber compounding ingredients are kneaded at a temperature of 80 to 170 °C for a period of 3 to 10 minutes. Then, using rolls such as open rolls, the vulcanizing agent (B) and if necessary the vulcanization accelerator are added, and the mixture is kneaded at a roll temperature of 40 to 80 °C for a period of 5 to 30 minutes, followed by rolling, to prepare an unvulcanized compounded rubber in the form of a ribbon or a sheet. When the kneading temperature in the internal mixer is low, the vulcanizing agent (B), the vulcanization accelerator and the foaming agent can be kneaded at the same time.

The unvulcanized compounded rubber is then molded into a desired shape by means of an extrusion molding machine, a calender roll or a press. Simultaneously with the molding, the compounded rubber is heated at a temperature of 150 to 270 °C for a period of 1 to 30 minutes, or after the molding, the molded product is introduced into a vulcanizer and heated at a temperature of 150 to 270 °C for a period of 1 to 30 minutes, to obtain a vulcanized product. In the vulcanization, a mold may be or may not be used. In case where the mold is not used, the vulcanization is generally carried out continuously. For heating to effect the vulcanization, various heating means, such as hot air, glass bead fluidized bed, UHF (ultra high frequency electromagnetic wave) and steam (heating bath), can be employed.

For preparing the vulcanized product utilizing irradiation with electron rays, the following process can be employed. In a mixer such as a Banbury mixer, the unsaturated olefin copolymer (A), and if necessary, the filler (C), the liquid softening agent (D) and other rubber compounding ingredients are kneaded at a temperature of 80 to 170 °C for a period of 3 to 10 minutes. Then, using rolls such as open rolls, the kneadate is further kneaded at a roll temperature of 40 to 80 °C for a period of 5 to 30 minutes, followed by rolling, to prepare an unvulcanized compounded rubber in the form of a ribbon or a sheet. The unvulcanized compounded rubber is then molded into a desired shape by means of an extrusion molding machine, a calender roll or a press, and the molded product is irradiated with electron rays to obtain a vulcanized product. It is desired that the molded product is irradiated with electron rays having energy of 0.1 to 10 MeV (megaelectron volt), preferably 0.3 to 2 MeV, in such a manner that the absorbed dose becomes 0.5 to 35 Mrad (megarad), preferably 0.5 to 10 Mrad.

The vulcanized molded product having a surface decorative layer according to the invention can be obtained by forming a decorative layer on the surface of the vulcanized product obtained above. The decorative layer can be formed by coating the surface of the vulcanized product or combining another member such as a metal or a resin with the vulcanized product using an adhesive. It is also possible that the decorative layer is formed on the unvulcanized compounded rubber and then the compounded rubber is vulcanized to obtain a vulcanized molded product.

As the coatings to coat the surface of the vulcanized product or the unvulcanized compounded rubber, those currently widely used are employable. Examples of such coatings include an acrylic resin coating, an epoxy resin coating, a polyester resin coating, an urethane resin coating, an alkyd resin coating, a melamine resin coating and a silicone resin coating.

The acrylic resin coating is a coating obtained in the following manner. Acrylic acid, methacrylic acid or an ester thereof as a starting material is polymerized singly or in combination or copolymerized with other monomers to prepare a resin which is diluted with a solvent, or one or more of the above acrylic monomers are polymerized optionally together with other monomers by solution or emulsion polymerization to prepare a varnish. The diluted solution or the varnish obtained above is a vehicle with or without addition of additives, such as a plasticizer or a second resin, and can be used as a clear coating. To the vehicle, a pigment can be added to obtain an enemel coating.

The polyester resin coating is such a coating as is hardened by allowing a vinyl compound or the like to act on an unsaturated polyester obtained by polycondensation of a polyhydric alcohol with a polybasic acid. Example of the polyhydric alcohols employable herein include ethylene glycol, diethylene glycol, triethylene glycol and propylene glycol. Examples of the polybasic acids employable herein include phthalic anhydride, maleic anhydride, fumaric acid and adipic acid. Examples of the vinyl compounds employable herein include styrene and methacrylic acid. Of these, propylene glycol, phthalic anhydride and styrene are most frequently used.

The urethane resin coating is a coating which forms a coating film generally by a reaction between a polyisocyanate and a polyol compound. The urethane resin coating includes one-pack type and two-pack type, and further includes a powder coating comprising a blocked isocyanate.

The melamine resin coating is such a coating as is thermoset by combining a butylated melamine resin, which has been etherified with butanol, with a phthalic acid resin or a butylated urea resin. As the phthalic acid resin, one having been modified with a non-drying oil such as castor oil or coconut oil or a semidrying oil is generally employed.

The silicone resin coating is a coating comprising a curable silicone resin or a curable silicone resin having been modified with an alkyd, epoxy, phenol, acryl, melamine or urethane.

Of the above coatings, preferable are the acrylic resin coating, the melamine resin coating, the polyester resin coating, the urethane resin coating and the silicone resin coating, because the resulting coating films have excellent adhesion properties. Particularly preferable are the urethane resin coating and the silicone resin coating, because the resulting coating films have excellent adhesion properties.

Application of the coating can be performed by any of spraying, brushing and roller coating.

There is no specific limitation on the thickness of the coating film, and the thickness can be varied depending on the intended use of the molded product, but in general, the thickness is in the range of usually about 1 to 500 μm.

The vulcanized molded product having a surface decorative layer can be used for automotive industrial parts such as weatherstrips, door glass run channels and window frames, and building materials such as glazing gaskets, joint gaskets and air-tight gaskets. When the vulcanized molded product is a foamed one, it can be used as a heat insulating material, a cushioning material, a sealing material or the like.

The other embodiment of the vulcanized molded product having a surface decorative layer according to the invention is a molded product comprising a vulcanized product of an olefin elastomer composition and a decorative layer provided on a surface of the vulcanized product, said olefin elastomer composition comprising (A) a specific unsaturated olefin copolymer and (E) an ethylene/α-olefin copolymer rubber, or a molded product comprising a vulcanized product of an olefin elastomer composition and a decorative layer provided on a surface of the vulcanized product, said olefin elastomer composition comprising (A) a specific unsaturated olefin copolymer, (E) the ethylene/α-olefin copolymer rubber and at least one compounding ingredient selected from (B) a vulcanizing agent, (C) a reinforcing agent and (D) a liquid softening agent.

First, the components used for forming the vulcanized molded product having a surface decorative layer according to the invention are described.

The unsaturated olefin copolymer (A) for use in the invention is the same as the above-described unsaturated olefin copolymer (A).

When the molar ratio of the constituent units derived from ethylene (i) to the constituent units derived from the α-olefin of 3 to 20 carbon atoms (iv) in the unsaturated olefin copolymer (A) for use in the invention is in the range of 95/5 (ethylene/α-olefin) to 55/45, the resulting vulcanized product has excellent mechanical properties and low-temperature properties. When the proportion of the constituent units derived from the aromatic vinyl compound (ii) is in the aforesaid range, the resulting vulcanized product has excellent coating properties (adhesion to coating film), mechanical properties, low-temperature properties and solvent resistance.

The unsaturated olefin copolymer (A) desirably has an iodine value of usually 1 to 50, preferably 5 to 35, more preferably 10 to 30, still more preferably 15 to 25. When the iodine value of the unsaturated olefin copolymer (A) is in this range, the vulcanization rate is high and the resulting vulcanized product has excellent coating properties, adhesion properties to coating film, mechanical properties and low-temperature properties.

(E) Ethylene/α-olefin copolymer rubber

The ethylene/α-olefin copolymer rubber (E) mainly comprises constituent units derived from ethylene and constituent units derived from an α-olefin, and this rubber may further comprise constituent units derived from a polyene.

The α-olefin used herein is an α-olefin of 3 to 8 carbon atoms, and examples thereof include propylene, 1-butene, 1-pentene, 4-methyl-1-pentene, 1-hexene and 1-octene. Of these, preferable are propylene and 1-butene.

In the ethylene/α-olefin copolymer rubber (E), the molar ratio of the constituent units derived from ethylene to the constituent units derived from the α-olefin is in the range of 50/50 (ethylene/α-olefin) to 95/5, preferably 55/45 to 93/7, more preferably 60/40 to 91/9.

The polyene component usable herein is a non-conjugated polyene, and examples thereof include 1,4-hexadiene, 5-methylene-2-norbornene, 5-ethylidene-2-norbornene, 5-vinyl-2-norbornene, 5-isopropenyl-2-norbornene, dicyclopentadiene, cyclooctadiene and the non-conjugated triene or tetraene (iv) as described above. Of these, preferably used are 5-ethylidene-2-norbornene, dicyclopentadiene, 8-methyl-4-ethylidene-1,7-nonadiene (EMND).

The constituent units derived from the non-conjugated polyene are desirably contained in amounts of 0.1 to 10 % by mol, preferably 0.5 to 7 % by mol, more preferably 1 to 5 % by mol. The ethylene/α-olefin copolymer rubber (E) containing the constituent units derived from the non-conjugated polyene desirably has an iodine value of 1 to 50, preferably 4 to 40, more preferably 6 to 30.

The ethylene/α-olefin copolymer rubber (E) for use in the invention has an intrinsic viscosity [η], as measured in a decalin solvent at 135 °C, of 0.8 to 5 dl/g, preferably 0.9 to 4 dl/g, more preferably 1.0 to 3 dl/g. If the intrinsic viscosity [η] exceeds 5 dl/g, the vulcanization rate of the resulting olefin elastomer composition tends to decrease. If the intrinsic viscosity [η] is less than 0.8 dl/g, strength properties of the vulcanized product tend to be lowered.

The ethylene/α-olefin copolymer rubber (E) desirably has a Mooney viscosity $ML_{1+4}$(100°C) of 10 to 250, preferably 40 to 150.

When the ethylene/α-olefin copolymer rubber (E) is added, low-temperature resistance of the vulcanized product is improved.

As the vulcanizing agent (B), the reinforcing agent (C) and the liquid softening agent (D), those previously described are employed.

Vulcanized product

The vulcanized product for forming the vulcanized molded product having a surface decorative layer according to the invention can be obtained by vulcanizing the olefin elastomer composition comprising the unsaturated olefin copolymer (A) and the ethylene/α-olefin copolymer rubber (E), or by vulcanizing the olefin elastomer composition comprising the unsaturated olefin copolymer (A), the ethylene/α-olefin copolymer rubber (E) and at least one compounding ingredient selected from the vulcanizing agent (B), the reinforcing agent (C) and the liquid softening agent (D).

In the olefin elastomer composition, the weight ratio of the unsaturated olefin copolymer (A) to the ethylene/α-olefin copolymer rubber (E) is in the range of 1/99 ((A)/(E)) to 90/10, preferably 2/98 to 80/20, more preferably 2/98 to 70/30.

When the vulcanizing agent (B) is sulfur or a sulfur compound, it can be used in an amount of usually 0.1 to 10 parts by weight, preferably 0.5 to 5 parts by weight, based on 100 parts by weight of the total amount of the unsaturated olefin copolymer (A) and the ethylene/α-olefin copolymer rubber (E).

When the vulcanizing agent (B) is an organic peroxide, it can be used in an amount of 0.05 to 15 parts by weight, preferably 0.15 to 5 parts by weight, based on 100 parts by weight of the total amount of the unsaturated olefin copolymer (A) and the ethylene/α-olefin copolymer rubber (E).

The reinforcing agent (C) can be used in an amount of usually not more than 300 parts by weight, preferably 10 to 300 parts by weight, more preferably 10 to 200 parts by weight, based on 100 parts by weight of the total amount of the unsaturated olefin copolymer (A) and the ethylene/α-olefin copolymer rubber (E).

The liquid softening agent (D) can be used in an amount of usually not more than 200 parts by weight, preferably 5 to 200 parts by weight, more preferably 10 to 150 parts by weight, still more preferably 10 to 100 parts by weight, based on 100 parts by weight of the total amount of the unsaturated olefin copolymer (A) and the ethylene/α-olefin copolymer rubber (E).

The olefin elastomer composition can be prepared by blending the unsaturated olefin copolymer (A) with the ethylene/α-olefin copolymer rubber (E) and if necessary at least one compounding ingredient selected from the vulcanizing agent (B), the reinforcing agent (C) and the liquid softening agent (D) and kneading them by a conventional method, e.g., using an internal mixer such as a Banbury mixer, a kneader or an intermixer.

For preparing a vulcanized product from the olefin elastomer composition not containing the vulcanizing agent (B), an unvulcanized compounded rubber (olefin elastomer composition) is first prepared, then the compounded rubber is molded into a desired shape, and the molded product is vulcanized, similarly to a conventional manner for vulcanizing common rubbers. In order to vulcanize the molded product, irradiation with electron rays can be used.

For preparing a vulcanized product from the olefin elastomer composition containing the vulcanizing agent (B), an unvulcanized compounded rubber (olefin elastomer composition) is first prepared, then the compounded rubber is molded into a desired shape, and the molded product is vulcanized, similarly to a conventional manner for vulcanizing common rubbers.

In the present invention, to the unvulcanized compounded rubber can be added rubber compounding ingredients, such as vulcanization accelerators, vulcanization aids, fillers, tackifiers, anti-aging agents, foaming agents, processing aids, heat stabilizers, weathering stabilizers, antistatic agents, colorants, lubricants, flame retardants and anti-blooming agents, adhesion improvers to improve adhesion to the surface decorative layer, etc., in addition to the unsaturated olefin copolymer (A), the ethylene/α-olefin copolymer rubber (E), the vulcanizing agent (B), the reinforcing agent (C) and the liquid softening agent (D), within limits not prejudicial to the objects of the present invention.

Examples of the vulcanization accelerators are those as previously described. The vulcanization accelerator can be used in an amount of 1 to 20 parts by weight, preferably 2 to 10 parts by weight, based on 100 parts by weight of the total amount of the unsaturated olefin copolymer (A) and the ethylene/α-olefin copolymer rubber (E).

Examples of the fillers are those as previously described. The filler can be used in an amount of usually not more than 300 parts by weight, preferably 10 to 300 parts by weight, more preferably 10 to 200 parts by weight, based on 100 parts by weight of the total amount of the unsaturated olefin copolymer (A) and the ethylene/α-olefin copolymer rubber (E).

Examples of the foaming agents are those as previously described The foaming agent can be used in an amount of 0.5 to 30 parts by weight, preferably 1 to 20 parts by weight, based on 100 parts by weight of the total amount of the unsaturated olefin copolymer (A) and the ethylene/α-olefin copolymer rubber (E). From the olefin elastomer composition containing the foaming agent in this amount, a foamed product having an apparent specific gravity of 0.03 to 0.8 $g/cm^3$ can be obtained.

A foaming aid can be used in combination with the foaming agent. When the foaming aid is used in combination, various effects such as lowering of decomposition temperature of the foaming agent, acceleration of decomposition thereof and uniformity of the resulting foam can be obtained. Examples of the foaming aids include organic acids, such as salicylic acid, phthalic acid, stearic acid and oxalic acid; and urea or its derivatives. The foaming aid can be used in an amount of 0.01 to 10 parts by weight, preferably 0.1 to 5 parts by weight, based on 100 parts by weight of the total amount of the unsaturated olefin copolymer (A) and the ethylene/α-olefin copolymer rubber (E).

As the processing aids, those generally added to rubbers can be widely employed. Examples of the processing aids include higher fatty acids, such as ricinoleic acid, stearic acid, palmitic acid and lauric acid; salts of higher fatty acids, such as barium stearate, zinc stearate and calcium stearate; and esters of higher fatty acids. The processing aid can be used in an amount of not more than 10 parts by weight, preferably not more than 5 parts by weight, based on 100 parts by weight of the total amount of the unsaturated olefin copolymer (A) and the ethylene/α-olefin copolymer rubber (E).

The adhesion improver serves to improve adhesion properties of the vulcanized product to the decorative layer

such as a coating film, and is, for example, an organotin compound, a tertiary amine compound, a hydroxyl group-containing (co)polymer or a metallic hydroxide.

Examples of organotin compounds are those as previously described. The organotin compound can be used in an amount of 0.01 to 10 parts by weight, preferably 0.1 to 5 parts by weight, based on 100 parts by weight of the total amount of the unsaturated olefin copolymer (A) and the ethylene/α-olefin copolymer rubber (E).

Examples of the tertiary amine compounds are those as previously described. The tertiary amine compound can be used in an amount of 0.01 to 10 parts by weight, preferably 0.05 to 5 parts by weight, based on 100 parts by weight of the total amount of the unsaturated olefin copolymer (A) and the ethylene/α-olefin copolymer rubber (E).

Examples of the hydroxyl group-containing (co)polymers are those as previously described. The hydroxyl group-containing (co)polymer can be used in an amount of 0.5 to 20 parts by weight, preferably 1 to 15 parts by weight, based on 100 parts by weight of the total amount of the unsaturated olefin copolymer (A) and the ethylene/α-olefin copolymer rubber (E).

Examples of the metallic hydroxides are those as previously described. The metallic hydroxide can be used in an amount of 20 to 200 parts by weight, preferably 20 to 150 parts by weight, more preferably 50 to 150 parts by weight, based on 100 parts by weight of the total amount of the unsaturated olefin copolymer (A) and the ethylene/α-olefin copolymer rubber (E).

There is no specific limitation on the process for preparing the vulcanized product. For example, the following process is employable.

In a mixer such as a Banbury mixer, the unsaturated olefin copolymer (A), the ethylene/α-olefin copolymer rubber (E), and if necessary, the filler (C), the liquid softening agent (D) and other rubber compounding ingredients are kneaded at a temperature of 80 to 170 °C for a period of 3 to 10 minutes. Then, using rolls such as open rolls, the vulcanizing agent (B) and if necessary the vulcanization accelerator are added, and the mixture is kneaded at a roll temperature of 40 to 80 °C for a period of 5 to 30 minutes, followed by rolling, to prepare an unvulcanized compounded rubber in the form of a ribbon or a sheet. When the kneading temperature in the internal mixer is low, the vulcanizing agent (B), the vulcanization accelerator and the foaming agent can be kneaded at the same time.

The unvulcanized compounded rubber is then molded into a desired shape by means of an extrusion molding machine, a calender roll or a press. Simultaneously with the molding, the compounded rubber is heated at a temperature of 150 to 270 °C for a period of 1 to 30 minutes, or after the molding, the molded product is introduced into a vulcanizer and heated at a temperature of 150 to 270 °C for a period of 1 to 30 minutes, to obtain a vulcanized product. In the vulcanization, a mold may be or may not be used. In case where the mold is not used, the vulcanization is generally carried out continuously. For heating to effect the vulcanization, various heating means, such as hot air, glass bead fluidized bed, UHF (ultra high frequency electromagnetic wave) and steam (heating bath), can be employed.

For preparing the vulcanized product utilizing irradiation with electron rays, the following process can be employed. In a mixer such as a Banbury mixer, the unsaturated olefin copolymer (A), the ethylene/α-olefin copolymer rubber (E), and if necessary, the filler (C), the liquid softening agent (D) and other rubber compounding ingredients are kneaded at a temperature of 80 to 170 °C for a period of 3 to 10 minutes. Then, using rolls such as open rolls, the kneadate is further kneaded at a roll temperature of 40 to 80 °C for a period of 5 to 30 minutes, followed by rolling, to prepare an unvulcanized compounded rubber in the form of a ribbon or a sheet. The unvulcanized compounded rubber is then molded into a desired shape by means of an extrusion molding machine, a calender roll or a press, and the molded product is irradiated with electron rays to obtain a vulcanized product. It is desired that the molded product is irradiated with electron rays having energy of 0.1 to 10 MeV (megaelectron volt), preferably 0.3 to 2 MeV, in such a manner that the absorbed dose becomes 0.5 to 35 Mrad (megarad), preferably 0.5 to 10 Mrad.

The vulcanized molded product having a surface decorative layer according to the invention can be obtained by forming a decorative layer on the surface of the vulcanized product obtained above. The decorative layer can be formed by coating the surface of the vulcanized product or combining another member such as a metal or a resin with the vulcanized product using an adhesive. It is also possible that the decorative layer is formed on the unvulcanized compounded rubber and then the compounded rubber is vulcanized to obtain a vulcanized molded product.

As the coatings to coat the surface of the vulcanized product or the unvulcanized compounded rubber, those currently widely used are employable. Examples of the coatings include an acrylic resin coating, an epoxy resin coating, a polyester resin coating, an urethane resin coating, an alkyd resin coating, a melamine resin coating and a silicone resin coating.

Of the above coatings, preferable are the acrylic resin coating, the melamine resin coating, the polyester resin coating and the urethane resin coating, because the resulting coating films have excellent adhesion properties. Particularly preferable is the urethane resin coating, because the resulting coating film has excellent adhesion properties.

Application of the coating can be performed by any of spraying, brushing and roller coating.

There is no specific limitation on the thickness of the coating film, and the thickness can be varied depending on the intended use of the molded product, but in general, the thickness is in the range of usually about 1 to 500 μm.

The vulcanized molded product having a surface decorative layer according to the invention can be used for automotive industrial parts such as weatherstrips, door glass run channels and window frames, and building materials such as glazing gaskets, joint gaskets and air-tight gaskets. When the vulcanized molded product is a foamed one, it can be used as a heat insulating material, a cushioning material, a sealing material or the like.

Next, the coated molded product of a thermoplastic resin composition and the coated molded product of an elastomer composition are described.

The coated molded product of a thermoplastic resin composition according to the invention comprises a molded product of a thermoplastic resin composition and a coating film formed on the molded product, said thermoplastic resin composition comprising an ethylene/aromatic vinyl compound random copolymer and another thermoplastic resin. The coated molded product of an elastomer composition according to the invention comprises a molded product of an elastomer composition and a coating film formed on the molded product, said elastomer composition comprising an ethylene/aromatic vinyl compound random copolymer and an elastomer.

Ethylene/aromatic vinyl compound random copolymer

The ethylene/aromatic vinyl compound random copolymer for use in the invention is a random copolymer of ethylene and an aromatic vinyl compound. In the ethylene/aromatic vinyl compound copolymer, the amount of constituent units derived from ethylene is in the range of 50 to 99 % by mol, preferably 60 to 97 % by mol, more preferably 80 to 95 % by mol; and the amount of constituent units derived from the aromatic vinyl compound is in the range of 1 to 50 % by mol, preferably 3 to 40 % by mol, more preferably 5 to 20 % by mol.

When the amount of the constituent units derived from the aromatic vinyl compound is smaller than the lower limit of the above range, adhesion properties of the resulting thermoplastic resin composition or elastomer composition to the coating film may be lowered. When the amount of the constituent units derived from the aromatic vinyl compound is larger than the upper limit of the above range, compatibility with the other thermoplastic resin or the elastomer may be lowered and gasoline resistance of the resulting thermoplastic resin composition or elastomer composition may also be lowered.

Examples of the aromatic vinyl compounds include styrene; mono- or polyalkylstyrenes, such as o-methylstyrene, m-methylstyrene, p-methylstyrene, o,p-dimethylstyrene, o-ethylstyrene, m-ethylstyrene and p-ethylstyrene; functional group-containing styrene derivatives, such as methoxystyrene, ethoxystyrene, vinylbenzoic acid, methyl vinylbenzoate, vinylbenzyl acetate, hydroxystyrene, o-chlorostyrene, p-chlorostyrene and divinylbenzene; and 3-phenylpropylene, 4-phenylbutene, and α-methylstyrene. Of these, styrene is preferable.

In the ethylene/aromatic vinyl compound random copolymer, α-olefins other than ethylene and the aromatic vinyl compound may be copolymerized. Examples of the α-olefins include α-olefins of 3 to 20 carbon atoms, such as propylene, 1-butene, 3-methyl-1-butene, 4-methyl-1-butene, 1-pentene, 1-hexene, 4-methyl-1-pentene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene and 1-eicosene. These α-olefins can be used singly or in combination.

In the ethylene/aromatic vinyl compound random copolymer, the amount of the constituent units derived from the α-olefin of 3 to 20 carbon atoms is desirably in the range of 0 to 30 % by mol, preferably 0.05 to 30 % by mol, with the proviso that the total amount of the constituent units derived from ethylene and the constituent units derived from the α-olefin of 3 to 20 carbon atoms is in the range of 50 to 99 % by mol.

In the ethylene/aromatic vinyl compound random copolymer, other monomers such as non-conjugated dienes may be copolymerized. Examples of the non-conjugated dienes include 1,4-pentadiene, 1,4-hexadiene, 4-methyl-1,5-heptadiene, 5-methylene-2-norbornene, 5-ethylidene-2-norbornene, 5-isopropenyl-2-norbornene, 2,5-norbornadiene, 1,6-cyclooctadiene, 2-ethylene-2,5-norbornadiene, 2-isopropenyl-2,5-norbornadiene, dicyclopentadiene, 1,6-octadiene, 1,7-octadiene, tricyclopentadiene, and esters of dihydrodicyclopentadienyloxyethylene and unsaturated carboxylic acids, e.g., acrylic acid, methacrylic acid, itaconic acid, maleic acid and fumaric acid. These non-conjugated dienes can be used singly or in combination.

The ethylene/aromatic vinyl compound random copolymer desirably has a melt index (MI, 190 °C) of 0.01 to 100 dl/g, preferably 0.1 to 50 dl/g, more preferably 1 to 30 dl/g, a density of 0.87 to 0.98 g/cm$^3$, preferably 0.89 to 0.95 g/cm$^3$, more preferably 0.91 to 0.94 g/cm$^3$, a melting point of not higher than 125 °C, and a crystallinity, measured by X-ray diffractometry, of not more than 40 %. It is preferable that the MI of the ethylene/aromatic vinyl compound random copolymer is higher than the MI of the thermoplastic resin, because the ethylene/aromatic vinyl compound random copolymer is unevenly distributed on the surface of the molded product to improve the coating properties of the molded product.

In the ethylene/aromatic vinyl compound random copolymer for use in the invention, the proportion of the sequences of two constituent units derived from the aromatic vinyl compound to all the constituent units derived from the aromatic vinyl compound is desired to be not more than 1 %, preferably not more than 0.1 %. The proportion of the sequences of two constituent units derived from the aromatic vinyl compound can be determined by means of $^{13}$C-NMR.

Next, the process for preparing the ethylene/aromatic vinyl compound random copolymer is described.

The ethylene/aromatic vinyl compound random copolymer for use in the invention can be prepared by copolymerizing ethylene, the aromatic vinyl compound, and if necessary, an $\alpha$-olefin of 3 to 20 carbon atoms, in the presence of, for example, a metallocene catalyst.

As the metallocene catalyst, various metallocene type catalysts, for example, those as previously described, those conventionally used as single site catalysts and analogues thereof, can be employed without specific limitation. In particular, a catalyst comprising a metallocene compound (a) of a transition metal (transition metal compound) and an organoaluminum oxy-compound (b-1) and/or an ionizing ionic compound (b-2) is preferably employed.

The metallocene compound (a) is, for example, a metallocene compound of a transition metal selected from Group 4 of the periodic table, which is represented by the following formula (1).

$$M^4L^3_x \qquad (1)$$

In the formula (1), $M^4$ is a transition metal selected from elements of Group 4 of the periodic table, e.g., zirconium, titanium or hafnium, and x is a valence of the transition metal.

$L^3$ is a ligand coordinated to the transition metal. At least one ligand $L^3$ is a ligand having a cyclopentadienyl skeleton which may have a substituent.

Examples of the ligands having a cyclopentadienyl skeleton include alkyl or cycloalkyl substituted cyclopentadienyl groups, such as cyclopentadienyl, methylcyclopentadienyl, ethylcyclopentadienyl, n- or i-propylcyclopentadienyl, n-, i-, sec- or t-butylcyclopentadienyl, hexylcyclopentadienyl, octylcyclopentadienyl, dimethylcyclopentadienyl, trimethylcyclopentadienyl, tetramethylcyclopentadienyl, pentamethylcyclopentadienyl, methylethylcyclopentadienyl, methylpropylcyclopentadienyl, methylbutylcyclopentadienyl, methylhexylcyclopentadienyl, methylbenzylcyclopentadienyl, ethylbutylcyclopentadienyl, ethylhexylcyclopentadienyl and methylcyclohexylcyclopentadienyl. Further, an indenyl group, a 4,5,6,7-tetrahydroindenyl group and a fluorenyl group can be also mentioned.

These groups may be substituted with halogen atoms or trialkylsilyl groups.

Of the above ligands, particularly preferred are alkyl substituted cyclopentadienyl groups.

When the compound represented by the formula (1) has two or more ligands $L^3$ having a cyclopentadienyl skeleton, two of the ligands having a cyclopentadienyl skeleton may be bonded to each other to form a bridge type metallocene compound through an alkylene group such as ethylene or propylene, a substituted alkylene group such as isopropylidene and diphenylmethylene, a silylene group, or a substituted silylene group such as dimethylsilylene, diphenylsilylene or methylphenylsilylene.

Examples of $L^3$ other than the ligand having a cyclopentadienyl skeleton include a hydrocarbon group of 1 to 12 carbon atoms, an alkoxyl group, an aryloxy group, a sulfonic acid-containing group ($-SO_3R^a$), a halogen atom or hydrogen atom, where $R^a$ is an alkyl group, an alkyl group substituted with a halogen atom, an aryl group, or an aryl group substituted with a halogen atom or an alkyl group.

Examples of the hydrocarbon groups of 1 to 12 carbon atoms include alkyl groups, cycloalkyl groups, aryl groups and aralkyl groups, more specifically, there can be mentioned:

alkyl groups, such as methyl, ethyl, n-propyl, isopropyl, n-butyl, isobutyl, sec-butyl, t-butyl, pentyl, hexyl, octyl, decyl and dodecyl;
cycloalkyl groups, such as cyclopentyl and cyclohexyl;
aryl groups, such as phenyl and tolyl; and
aralkyl group, such as benzyl and neophyl.

Examples of the alkoxy groups include methoxy, ethoxy, n-propoxy, isopropoxy, n-butoxy, isobutoxy, sec-butoxy, t-butoxy, pentoxy, hexoxy and octoxy.

The aryloxy group is, for example, phenoxy.

Examples of the sulfonic acid-containing group ($SO_3R^a$) include methanesulfonato, p-toluenesulfonato, trifluoromethansulfonate and p-chlorobenzenesulfonato.

Examples of the halogen atoms include fluorine, chlorine, bromine and iodine.

The metallocene compound of the above formula (1) wherein the valence of the transition metal is 4 is more specifically represented by the following formula (2):

$$R^2_K R^3_l R^4_m R^5_n M^4 \qquad (2)$$

wherein $M^4$ is the above-mentioned transition metal, preferably zirconium or titanium, $R^2$ is a group (ligand) having a cyclopentadienyl skeleton, $R^3$, $R^4$ and $R^5$ are the same or different and each a group having a cyclopentadienyl skeleton or the same as $L^3$ other than the ligand having a cyclopentadienyl skeleton in the above formula (1), k is an integer

of not less than 1, and $k+l+m+n = 4$.

The metallocene compound of bridge type is, for example, a metallocene compound represented by any of the aforesaid formulas [A] to [D].

In the present invention, a metallocene compound represented by the following formula (3) is also employable as the metallocene compound (a).

$$L^4M^5Z^1{}_2 \qquad (3)$$

wherein $M^5$ is a metal of Group 4 or lanthanide series of the periodic table;

$L^4$ is a derivative of a delocalized π-bonded group and imparts a restraint geometric shape to the active site of the metal $M^5$; and
each $Z^1$ may be the same or different and is a hydrogen atom, a halogen atom, or a hydrocarbon group, a silyl group or a germyl group having up to 20 carbon, silicon or germanium atoms.

Of the metallocene compounds (a) represented by the formula (3), preferable is a metallocene compound represented by the following formula (4).

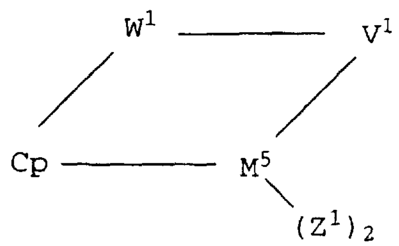

(4)

In the formula (4), $M^5$ is titanium, zirconium or hafnium, and $Z^1$ is the same as above.

Cp is a cyclopentadienyl group, a substituted cyclopentadienyl group or a derivative thereof which is π-bonded to $M^5$ in an $\eta^5$ bonding mode.
$W^1$ is oxygen, sulfur, boron, an element of Group 14 of the periodic table or a group containing any of these elements.
$V^1$ is a ligand containing nitrogen, phosphorus, oxygen or sulfur.
$W^1$ and $V^1$ may form together a condensed ring.

Further, Cp and $W^1$ may form together a condensed ring.

Examples of preferred groups indicated by Cp in the formula (4) include a cyclopentadienyl group, an indenyl group, a fluorenyl group and saturated derivatives thereof which form a ring structure with the metal atom ($M^5$). Each carbon atom in the cyclopentadienyl group may be substituted or unsubstituted with the same or a different group selected from the group consisting of hydrocarbyl groups, substituted-hydrocarbyl groups wherein one or more hydrogen atoms is replaced by a halogen atom, hydrocarbyl-substituted metalloid groups wherein the metalloid is selected from Group 14 of the periodic table. In addition two or more substituents may together form a fused ring system. The preferred hydrocarbyl and substituted-hydrocarbyl groups, which may be substituted for at least one hydrogen atom in the cyclopenttadienyl group, contain 1 to 20 carbon atoms, and include straight and branched alkyl groups, cyclic hydrocarbon groups, alkyl-substituted cyclic hydrocarbon groups, aromatic groups and alkyl-substituted aromatic groups. Examples of the preferred organometalloid groups include mono-, di- and tri-substituted organometalloid groups of Group 14 elements, wherein each of the hydrocarbyl groups contains 1 to 20 carbon atoms. More particularly, the preferred organometalloid groups include trimethylsilyl, triethylsilyl, ethyldimethylsilyl, methyldiethylsilyl, phenyldimethylsilyl, methyldiphenylsilyl, triphenylsilyl, triphenylgermyl and trimethylgermyl.

Examples of the groups indicated by $Z^1$ in the formula (4) include hydride, halo, alkyl, silyl, germyl, aryl, amide, aryloxy, alkoxy, phosphide, sulfide, acyl, pseudo halide such as cyanide, azide, etc., acetylacetonate, etc., and a combination thereof. The groups indicated by $Z^1$ may be the same or different.

As the metallocene compound (a), the metallocene compound represented by the formula (3) is particularly preferable from the viewpoints of polymerization activity as well as transparency, rigidity, heat resistance and impact resistance of the molded product. The metallocene compounds (a) mentioned above may be used singly or in combination.

The metallocene compound (a) for use in the invention may be diluted with a hydrocarbon or a halogenated hydrocarbon prior to use.

Next, the organoaluminum oxy-compound (b-1) and the ionizing ionic compound (b-2), which are used for forming the metallocene catalyst, are described.

The organoaluminum oxy-compound (b-1) for use in the invention may be aluminoxane conventionally known or a benzene-insoluble organoaluminum oxy-compound exemplified in Japanese Patent Laid-Open Publication No. 78687/1990.

The aluminoxane can be prepared by, for example, the following processes, and is generally recovered in the form of a hydrocarbon solvent solution.

(1) An organoaluminum compound such as trialkylaluminum is added to an aromatic hydrocarbon solvent suspension of a compound containing adsorbed water or a salt containing water of crystallization, e.g., magnesium chloride hydrate, copper sulfate hydrate, aluminum sulfate hydrate, nickel sulfate hydrate or cerous chloride hydrate, so as to allow the organoaluminum compound to react with the adsorbed water or the water of crystallization, followed by recovering aluminoxane as its aromatic hydrocarbon solvent solution.

(2) Water, ice or water vapor is allowed to directly act on an organoaluminum compound such as trialkylaluminum in a medium such as benzene, toluene, ethyl ether or tetrahydrofuran, followed by recovering aluminoxane as its aromatic hydrocarbon solvent solution.

(3) An organoaluminum compound such as trialkylaluminum is allowed to react with an organotin oxide such as dimethyltin oxide or dibutyltin oxide in a hydrocarbon medium such as decane, benzene or toluene.

Examples of the ionizing ionic compounds (b-2) includes Lewis acid, ionic compounds, borane compounds and carborane compounds. These ionized ionic compounds (b-2) are described in National Publications of international Patent No. 501950/1989 and No. 502036/1989, Japanese Patent Laid-Open Publications No. 179005/1991, No. 179006/1991, No. 207703/1991 and No. 207704/1991, and U.S. Patent No. 5,321,106.

The Lewis acid used as the ionizing ionic compound (b-2) is, for example, a compound represented by the formula $BR_3$ (where each R is the same or different, and is a phenyl group which may have a substituent such as fluorine, methyl or trifluoromethyl, or fluorine. Examples of such compounds include trifluoroboron, triphenylboron, tris(4-fluorophenyl)boron, tris(3,5-difluorophenyl)boron, tris(4-fluoromethylphenyl)boron and tris(pentafluorophenyl)boron.

The ionic compound used as the ionizing ionic compound (b-2) is a salt comprising a cationic compound and an anionic compound. The anion reacts with the metallocene compound (a) to render the metallocene compound (a) cationic and to form an ion pair, whereby the transition metal cation species is stabilized. Examples of such anions include organoboron compound anion, organoarsenic compound anion and organoaluminum compound anion. Preferable are anions which are relatively bulky and stabilize the transition metal cation species. Examples of the cations include metallic cation, organometallic cation, carbonium cation, tropylium cation, oxonium cation, sulfonium cation, phosphonium cation and ammonium cation. In more detail, there can be mentioned triphenylcarbenium cation, tributylammonium cation, N,N-dimethylammonium cation, ferrocenium cation and the like.

Of these, preferable are the ionic compounds comprising a boron compound as the anionic compound, including for example, trialkyl-substituted ammonium salts, N,N,-dialkylanilinium salts dialkylammonium salts and triarylphosphonium salts thereof.

Examples of the trialkyl-substituted ammonium salts include triethylammoniumtetra(phenyl)boron, tripropylammoniumtetra(phenyl)boron, tri(n-butyl)ammoniumtetra(phenyl)boron and trimethylammoniumtetra(p-tolyl)boron.

Examples of the N,N,-dialkylanilinium salts include N,N-dimethylaniliniumtetra(phenyl)boron.

Examples of the dialkylammonium salts include di(n-propyl)ammoniumtetra(pentafluorophenyl)boron and dicyclohexylammoniumtetra(phenyl)boron.

Examples of the triarylphosphonium salts include triphenylphosphoniumtetra(phenyl)boron, tri(methylphenyl)phosphoniumtetra(phenyl)boron and tri(dimethylphenyl)phosphoniumtetra(phenyl)boron.

Also usable as the ionic compounds are triphenylcarbeniumtetrakis(pentafluorophenyl)borate, N,N-dimethylaniliniumtetrakis(pentafluorophenyl)borate and ferroceniumtetrakis(pentafluorophenyl)borate.

Examples of the borane compounds used as the ionizing ionic compound (b-2) include:

decaborane(14);
salts of anions, such as bis[tri(n-butyl)ammonium]nonaborate and bis[tri(n-butyl)ammonium]decaborate; and
salts of metallic borane anions, such as tri(n-butyl)ammoniumbis(dodecahydridododecaborate)cobaltate(III) and bis[tri(n-butyl)ammonium]bis(dodecahydridododecaborate)-nickelate(III).

Examples of the carborane compounds used as the ionized ionic compound (b-2) include:

salts of anions, such as 4-carbanonaborane(14) and 1,3-dicarbanonaborane(13); and

salts of metallic carborane anions, such as tri(n-butyl)ammoniumbis(nonahydrido-1,3-dicarbanonaborate)cobaltate(III) and tri(n-butyl)ammoniumbis(undecahydrido-7,8-dicarbaundecaborate)ferrate(III).

The ionizing ionic compounds (b-2) mentioned above can be used singly or in combination.

The metallocene catalyst (a) for use in the invention may further comprise, in addition to the above components, the following organoaluminum compound (c) if desired.

The organoaluminum compound (c), optionally used, is for example, an organoaluminum compound represented by the following formula (5):

$$(R^6)_nAlX_{3-n} \qquad (5)$$

wherein $R^6$ is a hydrocarbon group of 1 to 15 carbon atoms, preferably a hydrocarbon group of 1 to 4 carbon atoms, X is a halogen atom or a hydrogen atom, and n is 1 to 3.

The hydrocarbon group of 1 to 15 carbon atoms is, for example, an alkyl group, a cycloalkyl group or an aryl group. Examples of such groups include methyl, ethyl, n-propyl, isopropyl and isobutyl.

Examples of the organoaluminum compounds include:

trialkylaluminums, such as trimethylaluminum, triethylaluminum, triisopropylaluminum, tri-n-butylaluminum, triisobutylaluminum and tri-sec-butylaluminum;
alkenylaluminums represented by the formula

$$(i\text{-}C_4H_9)_xAl_y(C_5H_{10})_z$$

wherein x, y and z are each a positive number, and $z \geq 2x$, such as isoprenylaluminum;
dialkylaluminum halides, such as dimethylaluminum chloride and diisobutylaluminum chloride; dialkylaluminum hydrides, such as diisobutylaluminum hydride;
dialkylaluminum alkoxides, such as dimethylaluminum methoxide; and dialkylaluminum aryloxides, such as diethylaluminum phenoxide.

Copolymerization of ethylene, the aromatic vinyl compound, and if desired, the α-olefin of 3 to 20 carbon atoms may be carried out by any of batchwise and continuous processes. When the copolymerization is carried out continuously, each catalyst component is used in the following concentration.

The concentration of the metallocene compound (a) in the polymerization system is in the range of usually 0.00005 to 1.0 mmol/liter (polymerization volume), preferably 0.0001 to 0.5 mmol/liter.

The organoaluminum oxy-compound (b-1) is fed in such an amount that the ratio of the aluminum atom in the organoaluminum oxy-compound to the transition metal in the metallocene compound (a) in the polymerization system (Al/transition metal) is in the range of 0.1 to 10,000, preferably 1 to 5,000.

The ionizing ionic compound (b-2) is used in such an amount that the molar ratio of the ionizing ionic compound (b-2) to the metallocene compound (a) in the polymerization system (ionizing ionic compound (b-2)/metallocene compound (a)) is in the range of 0.1 to 20, preferably 1 to 10.

The organoaluminum compound (c) is used in such an amount that the concentration of the organoaluminum compound (c) is in the range of usually about 0 to 5 mmol/liter (polymerization volume), preferably about 0 to 2 mmol/liter.

The copolymerization reaction to prepare the ethylene/aromatic vinyl compound random copolymer is carried out under the conditions of a temperature of usually -30 to +250 °C, preferably 0 to 200 °C, and a pressure of usually more than 0 and not more than 80 kg/cm$^2$ (gauge pressure), preferably more than 0 and not more than 50 kg/cm$^2$ (gauge pressure).

The reaction time (average residence time in case of continuous copolymerization) is in the range of usually 5 minutes to 3 hours, preferably 10 minutes to 1.5 hours, though it varies depending on the reaction conditions such as catalyst concentration and polymerization temperature.

In the preparation of the ethylene/aromatic vinyl compound random copolymer, ethylene, the aromatic vinyl compound and optionally the α-olefin of 3 to 20 carbon atoms are fed to the polymerization system in such amounts that the copolymer of the aforesaid specific monomer composition can be obtained. In the copolymerization, a molecular weight modifier such as hydrogen can be employed.

When ethylene, the aromatic vinyl compound and optionally the α-olefin of 3 to 20 carbon atoms are copolymerized as described above, the ethylene/aromatic vinyl compound random copolymer is generally obtained as a polymerization solution containing it. The polymerization solution is treated in a conventional manner, whereby the ethylene/aromatic vinyl compound random copolymer is obtained.

The ethylene/aromatic vinyl compound random copolymer for use in the invention may be graft-modified with an unsaturated compound having a carboxyl group or an acid anhydride group in the molecule to improve adhesion properties to coatings, particularly urethane resin coatings.

Examples of the unsaturated compounds having a carboxyl group or an acid anhydride group in the molecule include α,β-unsaturated carboxylic acids, such as acrylic acid, methacrylic acid, α-ethylacrylic acid, maleic acid, fumaric acid, itaconic acid, citraconic acid, tetrahydrophthalic acid and methyltetrahydrophthalic acid; α,β-unsaturated carboxylic anhydrides, such as maleic anhydride, itaconic anhydride, citraconic anhydride and tetrahydrophthalic anhydride; and anhydrides of unsaturated carboxylic acids such as bicyclo[2.2.1]hepto-2-ene-5,6-dicarboxylic acid. Of these, preferable are acrylic acid, maleic acid, itaconic acid, maleic anhydride and itaconic anhydride.

In general, the unsaturated compound is grafted on the ethylene/aromatic vinyl compound random copolymer by, for example, heating the ethylene/aromatic vinyl compound random copolymer and the unsaturated compound having a carboxyl group or an acid anhydride group in the molecule in the presence of a radical initiator to perform graft reaction.

The radical initiator employable herein is, for example, an organic peroxide or an azo compound.

Examples of the organic peroxides include peroxy ketals, such as 1,1-bis(t-butylperoxy)-3,5,5-trimethylcyclohexane, 1,1-bis(t-butylperoxy)cyclohexane, 2,2-bis(1-butylperoxy)octane, n-butyl-4,4-bis(t-butylperoxy)valerate and 2,2-bis(t-butylperoxy)butane; dialkyl peroxides, such as di-t-butyl peroxide, dicumyl peroxide, t-butylcumyl peroxide, α,α'-bis(t-butylperoxy-m-isopropyl)benzene, 2,5-dimethyl-2,5-di(t-butylperoxy)hexane and 2,5-dimethyl-2,5-di(t-butylperoxy)hexyne-3; acyl peroxides, such as acetyl peroxide, isobutyryl peroxide, octanoyl peroxide, decanoyl peroxide, lauroyl peroxide, 3,5,5-trimethylhexanoyl peroxide, benzoyl peroxide, 2,4-dichlorobenzoyl peroxide and m-toluoyl peroxide; peroxy esters, such as t-butyl peroxyacetate, t-butyl peroxyisobutyrate, t-butyl peroxy-2-ethyl hexanoate, t-butyl peroxylaurate, t-butyl peroxybenzoate, di-t-butyl peroxyisophthalate, 2,5-dimethyl-2,5-di(benzoylperoxy)hexane, t-butylperoxymaleic acid, t-butyl peroxyisopropyl carbonate and cumyl peroxyoctate; and hydroperoxides, such as t-butyl hydroperoxide, cumene hydroperoxide, diisopropylbenzene hydroperoxide, 2,5-dimethylhexane-2,5-dihydroperoxide, 1,1,3,3-tetramethylbutyl hydroperoxde.

Of these, preferable are 1,1-bis(t-butylperoxy)-3,5,5-trimethylcyclohexane, di-t-butyl peroxide, dicumyl peroxide, 2,5-dimethyl-2,5-bis(t-butylperoxy)hexane, 2,5-dimethyl-2,5-bis(t-butylperoxy)hexyne-3, benzoyl peroxide, 2,4-dichlorobenzoyl peroxide, m-toluoyl peroxide and t-butyl peroxy-2-ethyl hexanonate.

The azo compound is, for example, azoisobutyronitrile. The radical initiators mentioned above can be used singly or in combination.

The unsaturated compound having a carboxyl group or an acid anhydride group in the molecule is used in an amount of usually 0.01 to 50 parts by weight, preferably 0.1 to 40 parts by weight, based on 100 parts by weight of the ethylene/aromatic vinyl compound random copolymer.

The radical initiator is used in an amount of 0.01 to 10 parts by weight, preferably 0.05 to 8 parts by weight, based on 100 parts by weight of the ethylene/aromatic vinyl compound random copolymer.

The graft modification can be carried out by known processes, for example, the following processes.

(i) The ethylene/aromatic vinyl compound random copolymer and the unsaturated compound having a carboxyl group or an acid anhydride group in the molecule are melt kneaded by a kneading machine such as an intensive mixer or an extruder in the presence of the radical initiator. The kneading operation is preferably carried out in an atmosphere of an inert gas such as nitrogen. The kneading temperature is a temperature, at which the half-life period of the radical initiator used is one minute, of usually 150 to 280 °C, preferably 170 to 240 °C. The kneading time is usually 30 seconds to 20 minutes, preferably 1 to 10 minutes.

(ii) The ethylene/aromatic vinyl compound random copolymer in a molten state is mixed with the unsaturated compound having a carboxylic group or an acid anhydride group in the molecule and the radical initiator in a reactor with stirring. The stirring operation is preferably carried out in an atmosphere of an inert gas such as nitrogen. The stirring temperature is a temperature, at which the half-life period of the radical initiator used is one minute, of usually 150 to 280 °C, preferably 170 to 240 °C. The mixing time is usually 0.5 to 10 hours, preferably 1 to 5 hours. The unsaturated compound having a carboxyl group or an acid anhydride group in the molecule and the radical initiator may be introduced together when the ethylene/aromatic vinyl compound random copolymer is melted, or they may be dropwise added separately to the molten ethylene/vinyl compound random copolymer.

(iii) To an organic solvent solution of the ethylene/aromatic vinyl compound random copolymer, the unsaturated compound having a carboxyl group or an acid anhydride group in the molecule and the radical initiator are added, and they are heated. The heating operation is preferably carried out in an atmosphere of an inert gas such as nitrogen. The heating temperature is a temperature, at which the half-life period of the radical initiator used is one minute, of usually 100 to 200 °C, preferably 120 to 180 °C. The heating time is usually 0.5 to 10 hours, preferably 1 to 5 hours. The unsaturated compound having a carboxyl group or an acid anhydride group in the molecule and the radical initiator may be introduced together when the ethylene/aromatic vinyl compound random copolymer is

dissolved in an organic solvent, or they may be dropwise added separately to the organic solvent solution of the ethylene/vinyl compound random copolymer. Examples of the organic solvents employable herein include aromatic hydrocarbons, such as benzene, toluene and xylene; alicyclic hydrocarbons, such as cyclohexane and methylcyclohexane; and chlorinated hydrocarbons, such as chlorobenzene and dichlorobenzene.

(iv) To an aqueous dispersion of the ethylene/aromatic vinyl compound random copolymer, the unsaturated compound having a carboxyl group or an acid anhydride group in the molecule and the radical initiator are added, and they are heated. The heating operation is preferably carried out in an atmosphere of an inert gas such as nitrogen. The heating temperature is usually 60 to 150 °C, preferably 80 to 100 °C. The heating time is usually 0.5 to 10 hours, preferably 1 to 5 hours. The unsaturated compound having a carboxyl group or an acid anhydride group in the molecule and the radical initiator may be introduced together when the ethylene/aromatic vinyl compound random copolymer is dispersed in water, or they may be dropwise added separately to the aqueous dispersion of the ethylene/vinyl compound random copolymer. Besides the above-mentioned radical initiators, water-soluble persulfates such as potassium persulfate and ammonium persulfate are also employable as the radical initiators.

(v) The ethylene/aromatic vinyl compound random copolymer and the unsaturated compound having a carboxyl group or an acid anhydride group in the molecule are heated at a temperature of not higher than the melting point of the ethylene/aromatic vinyl compound random copolymer, e.g., a temperature of not higher than 140 °C, in the presence of the radical initiator. The heating operation is preferably carried out in an atmosphere of an inert gas such as nitrogen. The heating time is usually 0.5 to 10 hours, preferably 1 to 5 hours. The unsaturated compound having a carboxyl group or an acid anhydride group in the molecule and the radical initiator may be introduced together when the ethylene/aromatic vinyl compound random copolymer is heated, or they may be dropwise added separately to the heated ethylene/aromatic vinyl compound random copolymer.

Thermoplastic resin

Thermoplastic resins usable in accordance with the present invention include, for example, polyolefin resins, polyvinyl chloride resins, polyamide resins, polycarbonate resins, polyoxymethylene resins, polyphenylene oxide resins, polysulfon resins and polyacrylate resins. Of these, polyolefin resins are preferred.

Elastomer

Elastomers usable in accordance with the present invention include, for example, polyolefin elastomers, polyamide elastomers and polyester elastomers. Of these, polyolefin elastomers are preferred.

Polyolefin resin

Polyolefin resins preferred to use in the present invention include homopolymers and copolymers of α-olefins having 2 to 20 carbon atoms. Specific examples of α-olefins are ethylene, propylene, 1-butene, 4-methyl-1-pentene, 1-hexene and 1-octene. Specific examples of polyolefin resins are following (co)polymers.

(1) Ethylene homopolymers (including those prepared by low pressure method and high pressure method).
(2) Copolymers of ethylene with up to 10 % by mol of an α-olefin or a vinyl monomer such as vinyl acetate and ethyl acrylate.
(3) Propylene homopolymers.
(4) Random copolymers of propylene with up to 10 % by mol of an other α-olefin.
(5) Block copolymers of propylene with up to 40 % by mol of an other α-olefin.
(6) 1-Butene homopolymers.
(7) Random copolymers of 1-butene with up to 10 % by mol of an other α-olefin.
(8) 4-Methyl-1-pentene homopolymers.
(9) Random copolymers of 4-methyl-1-pentene with up to 20 % by mol of an other α-olefin.

Polyolefin resins particularly preferred to use in the present invention are polypropylene resins including (3) propylene homopolymers, (4) random copolymers of propylene with up to 10 % by mol of an other α-olefin and (5) block copolymers of propylene with up to 40 % by mol of an other α-olefin.

Preferred thermoplastic resin compositions (polypropylene resin compositions) of the present invention comprise

(i) the above-mentioned ethylene/styrene random copolymer,
(ii) the polypropylene resin and
(iii) the olefin elastomer,

in a specific proportion, for example,

(i) 1 to 50 % by weight, preferably 5 to 30 % by weight, of the above-mentioned ethylene/styrene random copolymer,
(ii) 40 to 99 % by weight, preferably 50 to 80 % by weight, of the polypropylene resin and
(iii) 1 to 30 % by weight, preferably 5 to 20 % by weight, of the olefin elastomer.

The polypropylene resins (ii) usable in the polypropylene resin compositions are propylene homopolymers and copolymers of propylene with an other $\alpha$-olefin. The $\alpha$-olefins other than propylene include, for example, those having 2 to 20 carbon atoms such as ethylene, 1-butene, 1-pentene, 2-methyl-1-butene, 3-methyl-1-butene, 1-hexene, 3-methyl-1-pentene, 4-methyl-1-pentene, 3,3-dimethyl-1-butene, 1-heptene, methyl-1-hexenes, dimethyl-1-pentenes, trimethyl-1-butenes, ethyl-1-pentenes, 1-octene, methyl-1-pentenes, dimethyl-1-hexenes, trimethyl-1-pentenes, ethyl-1-hexenes, methylethyl-1-pentenes, diethyl-1-butenes, propyl-1-pentenes, 1-decene, methyl-1-nonenes, dimethyl-1-octenes, trimethyl-1-heptenes, ethyl-1-octenes, methylethyl-1-heptenes, diethyl-1-hexenes, 1-dodecene and hexadecene. These $\alpha$-olefins may be copolymerized with propylene to form random copolymers and block copolymers. The polypropylene resins preferably used in the present invention include propylene homopolymers, crystalline propylen/ethylene block copolymers containing 2 to 40 % by mol of ethylene and crystalline propylen/ethylene random copolymers containing 0.5 to 10 % by mol of ethylene.

It is desired that the polypropylene resins have a melt flow rate (MFR; ASTM D 1238, 230 °C, 2.16 kg load) in the range of 0.05 to 200 g/ 10 min, preferably 0.05 to 100 g/ 10 min, more preferably 0.5 to 60 g/ 10 min. By the use of polypropylene resins having such MFR, good properties and moldability can be ensured. It is also desired that the polypropylene resins generally have a density in the range of 0.89 to 0.92 g/cm$^3$.

The olefin elastomers (iii) usable in the polypropylene resin compositions are copolymers of $\alpha$-olefins such as ethylene, propylene, 1-butene, 1-pentene, 1-hexene and 1-octene, or copolymers of these $\alpha$-olefins with non-conjugated dienes such as cyclohexadiene, dicyclopentadiene, 1,4-pentadiene, 1,4-hexadiene, dicyclooctadiene, methylnorbornene, 5-ethylidene-2-norbornene.

Specifically, the olefin elastomers (iii) are amorphous elastic copolymers comprising olefins, for example, ethylene/propylene copolymer rubbers, ethylene/1-butene copolymer rubbers, ethylene/1-octene copolymer rubbers, ethylene/propylene/1-butene copolymer rubbers, ethylene/propylene/non-conjugated diene copolymer rubbers, ethylene/1-butene/non-conjugated diene copolymer rubbers and ethylene/propylene/1-butene/non-conjugated diene copolymer rubbers.

The olefin elastomers (iii) have a Mooney viscosity [$ML_{1+4}$(100 °C; JIS K 6300)] in the range of 10 to 150, preferably 40 to 120. It is preferred that the olefin elastomers have an iodine value (unsaturation degree) of not more than 16.

In the polypropylene resin compositions, the polypropylene resin (ii) is used in an amount of 50 to 99 parts by weight, preferably 55 to 95 parts by weight, more preferably 60 to 80 parts by weight, based on 100 parts by weight of the total of the ethylene/styrene random copolymer (i), the polypropylene resin (ii) and the olefin elastomer (iii).

The thermoplastic resin composition and the elastomer compositions according to the present invention can contain fillers to improve strength and coating properties of the compositions. Specific examples of fillers usable in the invention are calcium carbonate light, calcium carbonate heavy, basic calcium carbonate, aluminum hydroxide, magnesium hydroxide, magnesium oxide, kaolin, clay, pyrophyllite, sericite, talc, calcium silicate (wollastonite, xonotlite, petaloid calcium silicate), diatomaceous earth, aluminum silicate, silicic acid anhydride, hydrous silicic acid, mica, magnesium silicate (asbestos, PFM (Processed Mineral Oil), sepiolite), potassium titanate, ellestadite and gypsum fibers; glass balloons, silica balloons, fly ash balloons, shirasu balloons and carbon balloons; organic balloons such as phenolic resin, urea resin, styrene resin and saran resin balloons; silica, alumina, barium sulfate, aluminum sulfate, calcium sulfate, magnesium sulfate, molybdenum dioxide, graphite, glass fibers (chopped glass strands, rovings, milled glass fibers, glass flakes etc.), cut fibers, rock fibers, microfibers, carbon fibers, aromatic polyamide fibers and potassium titanate fibers. Of these, talc is preferred.

To the thermoplastic resin compositions or the elastomer compositions, can optionally be added other thermoplastic resins and additives such as softening agents, pigments, stabilizers, flame retardants, lubricants, antistatic agents and electrical property modifiers, so far as physical properties and coating properties of the compositions are not deteriorated.

In the present invention, colorants can also be added to the thermoplastic resin compositions or the elastomer compositions. Specific examples of colorants include carbon black, titanium oxide, zinc white, red oxide, ultramarine blue, Berlin blue, azo pigments, nitroso pigments, lake pigments and phthalocyanine pigments.

Further, known heat stabilizers, aging inhibitors, weathering stabilizers, antistatic agents, lubricants such as metallic soaps and waxes can be mixed in the compositions of the present invention in an amount conventionally used in known olefin plastics or olefin copolymer rubbers.

Furthermore, to the thermoplastic resin compositions or the elastomer compositions, polymers comprising styrene

as a major monomer (styrene polymers) can be added. The addition of such polymers can further improve coating properties of the compositions.

As the styrene polymers, any polymers can be used, for example those obtained by mass, solution, suspension and emulsion polymerization processes through radical polymerization reactions or ionic polymerization reactions. Examples of the styrene polymers include homopolymers and copolymers of styrene monomers such as styrene, α-methyl styrene and chlorostyrene, copolymers of styrene monomers with vinyl monomers (e.g. unsaturated nitriles such as acrylonitrile, α,β-monoolefinically unsaturated carboxylic acids or anhydrides thereof such as (meth)acrylic acid, (meth)acrylates and maleic anhydride), high impact polystyrenes (HIPS) and high impact styrene resins.

The high impact polystyrenes can be obtained by addition of polystyrenes to diene rubber elastomers or by graft polymerization of diene rubber elastomers with styrene monomers. The high impact styrene resins can be obtained by graft copolymerization of polymers, for example, diene rubber elastomers such as polybutadiene, unsaturated group containing acryl rubbers, chlorinated polyethylenes, ethylene/vinyl acetate copolymers and ethylene/propylene rubbers, with styrene monomers together with vinyl monomers (such as acrylonitrile or methyl methacrylate).

Preferred styrene polymers include, for example, polystyrenes (GPPS), styrene/(meth)acrylic acid copolymers, styrene/(meth)acrylate copolymers such as methyl methacrylate/styrene copolymers (MAS resins), styrene/maleic anhydride copolymers, styrene/acrylonitrile copolymers (AS resins), high impact polystyrenes, high impact styrene resins (such as ABS resins obtained by graft copolymerization of polybutadiene with styrene and acrylonitrile, AAS resins obtained by graft copolymerization of acryl rubbers with styrene and acrylonitrile, ACS resins obtained by graft copolymerization of chlorinated polyethylenes with styrene and acrylonitrile, polymers obtained by graft copolymerization of ethylene/vinyl acetate copolymers with styrene and acrylonitrile, polymers obtained by graft copolymerization of ethylene/propylene rubbers with styrene and acrylonitrile and MBS resins obtained by graft copolymerization of polybutadienes with styrene and methyl methacrylate. These styrene polymers may be used singly or in combination.

Of these, particularly preferred styrene polymers are those exhibiting high transparency, for example, polystyrenes, styrene/(meth)acrylic acid copolymers such as Ryulex™ available from Dainippon Ink K.K), styrene/(meth)acrylate copolymers such as styrene/methyl methacrylate copolymers (e.g. MS resins available from Shinnittetsu Chemicals K.K.) and styrene/acrylonitrile compolymers; and high impact polystyrenes, high impact styrene resins and styrene/maleic anhydride copolymers (e.g. Dailark™ available from Sekisui Chemicals K.K.).

The above-mentioned styrene polymers generally have a molecular weight of, for example, about $1 \times 10^4$ to $5 \times 10^5$, preferably $5 \times 10^4$ to $4 \times 10^5$, more preferably $1 \times 10^5$ to $3 \times 10^5$.

It is desired that the styrene polymers are generally contained in an amount of 0.1 to 20 parts by weight, preferably 1 to 15 parts by weight, more preferably 5 to 10 parts by weight, based on 100 parts by weight of the total thermoplastic composition.

Polyolefin elastomer

Polyolefin elastomers preferably used in the present invention are, for example, ethylene/propylene rubbers (EPR), ethylene/butene rubbers (EBR), ethylene/propylene/butene rubbers (EPBR) and ethylene/propylene/diene rubbers (EPDM).

These polyolefin elastomers may contain polyolefin resins in a small amount such as up to equal amount. The polyolefin resins usable herein include, for example, low density polyethylenes, high density polyethylenes, linear low density polyethylenes, polypropylenes, ethylene/propylene block copolymers and ethylene/propylene random copolymers, and mixtures thereof.

The polyolefin elastomers may comprise copolymerized dienes or polyenes. Examples of the dienes include 1,4-pentadiene, 1,4-hexadiene, cyclohexadiene, dicyclopoentadiene and 5-ethylidene-2-norbornene.

In the present invention, partially crosslinked elastomer compositions can be prepared in such a manner that the olefin elastomers are mixed with peroxide-decomposing polyolefin resins or peroxide-crosslinking hydrocarbon rubbers and then the mixtures are dynamically heat treated in the presence of organic peroxides. More specifically, the partially crosslinked elastomer compositions can be prepared by dynamically heat treating a mixture from

1 to 50 % by weight of an ethylene/aromatic vinyl compound random copolymer,
20 to 80 % by weight of a peroxide-crosslinking hydrocarbon rubber,
10 to 60 % by weight of a peroxide-decomposing polyolefin resin and
0 to 30 % by weight of a peroxide-noncrosslinking hydrocarbon rubber

in the presence of an organic peroxide.

The rubber components comprising a partially crosslinked ethylene/aromatic vinyl compound random copolymer are composed of a partially crosslinked ethylene/aromatic vinyl compound random copolymer and/or an uncrosslinked ethylene/aromatic vinyl compound random copolymer and a partially crosslinked rubber. The elastomer compositions

comprising a partially crosslinked ethylene/aromatic vinyl compound random copolymer can be prepared by known processes. For example, a polyolefin resin, a peroxide-crosslinking hydrocarbon rubber and an ethylene/aromatic vinyl compound random copolymer can be dynamically heat treated in the presence of an organic peroxide to obtain a partially crosslinked composition comprising the polyolefin resin, the hydrocarbon rubber and the ethylene/aromatic vinyl compound random copolymer.

The peroxide-crosslinking hydrocarbon rubbers used herein are copolymers of ethylene as a major monomer with α-olefins such as propylene, 1-butene, 1-hexene and 1-octene, or with non-conjugated dienes including, for example, cyclohexadiene, dicyclopoentadiene, 1,4-pentadiene, 1,4-hexadiene, dicyclooctadiene, methylenenorbornene and 5-ethylidene-2-norbornene.

Specifically, the peroxide-crosslinking hydrocarbon rubbers are amorphous elastic copolymers comprising olefins, for example, ethylene/propylene copolymer rubbers, ethylene/1-butene copolymer rubbers, ethylene/1-octene copolymer rubbers, ethylene/propylene/1-butene copolymer rubbers, ethylene/propylene/non-conjugated diene copolymer rubbers, ethylene/1-butene/non-conjugated diene copolymer rubbers and ethylene/propylene/1-butene/non-conjugated diene copolymer rubbers.

The peroxide-crosslinking polyolefin rubbers have a Mooney viscosity [$ML_{1+4}$ (100 °C; JIS K 6300)] in the range of 10 to 150, preferably 40 to 120. It is also preferred that the peroxide-crosslinking polyolefin rubbers have an iodine value (unsaturation degree) of not more than 16.

The peroxide-noncrosslinking hydrocarbon rubber used in the partially crosslinked polyolefin elastomer compositions means a hydrocarbon based rubbery substance which does not crosslink when it is dynamically heat treated in the presence of a peroxide (organic peroxide) at a temperature higher than its decomposition temperatures so that the flowability does not reduced. Specific examples thereof include butyl rubbers, polyisoprene rubbers, propylene/ethylene copolymer rubbers comprising at least 50 % by mol of propylene and propylene/ethylene/1-butene copolymer rubbers. Of these, butyl rubbers and isobutylene rubbers are preferably used. By the addition of these peroxide-noncrosslinking hydrocarbon rubbers, partially crosslinked polyolefin elastomer compositions exhibiting more excellent moldability and appearance of molded products can be obtained.

The polyolefin elastomers of the present invention can be mixed with softening agents. Various softening agents such as those conventionally added to known rubbers can be used. Specific examples of softening agents include petroleum based materials such as process oils, lubricating oils, paraffin, liquid paraffin, petroleum asphalt and vaseline, coal tar materials such as coal tar and coal tar pitch, fatty oils such as castor oil, linseed oil, colza oil, soybean oil and coconut oil, waxes such as tall oil, beeswax, carnauba wax and lanolin, fatty acids such as ricinoleic acid, parmitic acid and stearic acid or metallic salts thereof, synthetic resins such as petroleum resins, cumarone/indene resins and atactic polypropylenes, ester plasticizers such as dioctyl phthalate, dioctyl adipate and dioctyl sebacate, and further microcrystalline waxes, liquid polybutadienes or modified products or hydrogenated products thereof and liquid thiokols.

By the addition of softening agents, elastomer compositions excellent in flowability upon molding can be obtained, but excessive addition thereof may reduce the mechanical properties of the resulting compositions.

Examples of organic peroxides usable in the present invention include dicumyl peroxide, di-tert-butyl peroxide, 2,5-dimethyl-2,5-di-(tert-butylperoxy)hexane, 2,5-dimethyl-2,5-di-(tert-butylperoxy)hexyne-3, 1,3-bis(tert-butylperoxyisopropyl)benzene, 1,1-bis(tert-butylperoxy)-3,3,5-trimethylcyclohexane, n-butyl-4,4-bis(tert-butylperoxy) valerate, benzoyl peroxide, p-chlorobenzoyl peroxide, 2,4-dichlorobenzoyl peroxide, tert-butylperbenzoate, tert-butylperoxyisopropyl carbonate, diacetyl peroxide, lauroyl peroxide and tert-butylcumyl peroxide.

Of these, preferred are, with respect to odor and scorch stability, 2,5-dimethyl-2,5-di-(tert-butylperoxy)hexane, 2,5-dimethyl-2,5-di-(tert-butylperoxy)hexyne-3 and 1,3-bis(tert-butylperoxyisopropyl)benzene, in particular, most preferred is 2,5-dimethyl-2,5-di-(tert-butylperoxy)hexane. In the present invention, the organic peroxides are used in an amount of 0.05 to 2 % by weight, preferably 0.1 to 1.6 % by weight, based on 100 % by weight of the total of the peroxide-decomposing polyolefin resin, the ethylene/aromatic vinyl compound random copolymer, the peroxide-crosslinking hydrocarbon rubber and the peroxide-noncrosslinking hydrocarbon rubber, as major components of the composition to be subject to crosslinking treatment.

In the present invention, when the above-mentioned components are dynamically heat treated in the presence of an organic peroxide, auxiliary agents for peroxide-crosslinking such as sulfur, p-quinone oxime, p,p'-dibenzoylquinone dioxime, N-methyl-N-4-dinitrosoaniline, nitrobenzene, diphenylguanidine and trimethylolpropane-N,N'-m-phenylene dimaleimide, or polyfunctional acrylate monomers such as triallyl cyanurate, ethylene glycol dimethacrylate, diethylene glycol dimethacrylate, polyethylene glycol dimethacrylate, trimethylolpropane trimethacrylate and allyl methacrylate, and polyfunctional vinyl monomers such as divinylbenzene, vinyl butyrate and vinyl stearate can be added. These compounds can serve to uniform and moderate crosslinking reaction.

Of the above-mentioned compounds, most preferred is divinylbenzene due to the following reasons: Divinylbenzene can be easily handled, has good compatibility with the peroxide-decomposing polyolefin resin, the ethylene/aromatic vinyl compound random copolymer, the peroxide-crosslinking hydrocarbon rubber and the peroxide-noncrosslinking hydrocarbon rubber, as major components of the composition to be subject to crosslinking treatment,

and has a solubilizing action on the organic peroxide to function as a dispersing agent for the organic peroxide, whereby crosslinking reaction can be performed uniformly to yield polyolefin elastomer compositions having good balance between flowability and physical properties.

It is preferred to use the peroxide-crosslinking auxiliary agent, the polyfunctional acrylate monomer and polyfunctional vinyl monomer in an amount of 0.05 to 3 % by weight, in particular 0.1 to 2 % by weight, based on the total amount of the composition to be subject to crosslinking treatment. The use of more than 3 % by weight of the peroxide-crosslinking auxiliary agent, the polyfunctional acrylate monomer and polyfunctional vinyl monomer may cause disadvantages. For example, when the organic peroxide is used in a larger amount, the crosslinking reaction may proceed too fast to result in crosslinked polyolefin elastomer compositions having poor flowability. On the other hand, when the organic peroxide is used in a smaller amount, the peroxide-crosslinking auxiliary agent, the polyfunctional acrylate monomer and polyfunctional vinyl monomer may remain unreacted in partially crosslinked polyolefin elastomer compositions so that the partially crosslinked compositions may undergo changes in properties through heat history in processing and molding the compositions. Therefore, the peroxide-crosslinking auxiliary agent, the polyfunctional acrylate monomer and polyfunctional vinyl monomer should not be used in excess.

It is preferred that the dynamic heat treatment of the compositions is carried out in a non-open type apparatus and in an atmosphere of an inert gas such as nitrogen, at a temperature generally in the range of from a melting point of the thermoplastic resin to 300 °C, for 1 to 10 minutes, at shearing rate in the range of 500 to 10,000 $sec^{-1}$. Non-open type apparatuses preferably used include mixing rolls, intensive mixers such as Banbury mixers and kneaders, and single screw or twin screw extruders

The thermoplastic polyolefin elastomer composition according to the present invention can further comprise the above-mentioned styrene polymer generally in an amount of 1 to 15 parts by weight, preferably 5 to 10 parts by weight, based on 100 parts by weight of the elastomer composition. Because of its improving effect in coating properties, the use of the styrene polymer is preferred.

It is important in the present invention that the amount of the ethylene/aromatic vinyl compound random copolymer in the above-mentioned thermoplastic resin composition or elastomer composition is in the range of 1 to 70 % by weight, preferably 3 to 50 % by weight, more preferably 5 to 40 % by weight, particularly preferably 10 to 30 % by weight. When the ethylene/aromatic vinyl compound random copolymer is less than the above range, the composition may have insufficient coating properties, and when the copolymer is more than the above range, the composition may have insufficient strength, heat resistance or chemical resistance.

The above-mentioned thermoplastic resin composition and elastomer composition according to the present invention can be prepared by blending the above-mentioned components using a mixer such as a tumbling mixer, a ribbon blender and a Henshel mixer and then melt kneading. Usable apparatuses for kneading include mixing rolls, intensive mixers (such as Banbury mixers and kneaders) and single screw or twin screw extruders and non-open type apparatuses are preferred.

The kneading can generally be carried out at a temperature of 150 to 280 °C, preferably 170 to 240 °C, for 1 to 10 minutes. The thermoplastic resin composition and elastomer composition thus obtained are usually pelletized and then molded into molded products of desired shapes by molding processes conventionally employed in the art of thermoplastic resin and elastomer compositions, for example by injection molding, extrusion molding, blow molding and calender molding. It is preferred to employ injection molding. The thermoplastic resin composition and elastomer composition of the present invention exhibit excellent moldability.

Molded products prepared from the thermoplastic resin composition and elastomer composition according to the present invention exhibit excellent coating properties with urethane resin coatings and amino resin coatings. The urethane resin coatings, which form coating films generally by reactions between polyisocyanates and polyol compounds, include one-pack and two-pack type coatings and also powder coatings comprising blocked isocyanates. The molded products formed from the thermoplastic resin composition and elastomer composition of the present invention have good compatibility with any one of these urethane resin coatings.

The amino resin coatings include melamine resin, benzoguanamine resin and urea resin coatings. From these coatings, coating films are formed in such a way that an amino group containing starting material is reacted with an aldehyde compound to prepare a highly reactive monomer which is subjected to addition-condensation reaction to produce methylol groups which in turn react with hydroxy groups of alcohols. The amino resin coatings can be used in combination with oil modified plastic alkyd resins, oil-free alkyd resins, oil varnishes, acrylic resins, epoxy resins or epoxy/ester resins.

These coatings or other surface treating agents can be applied by conventionally employed coating methods, for example using spry guns, blushes and roll coaters. The thickness of coating films may vary depending on purposes of molded products without any particular limitation and is generally in the range of 1 μm to 500 μm after drying.

From among the above-mentioned coatings, by way of example using the urethane resin coating, it can be applied in such a manner as illustrated below. An molded product formed from the thermoplastic resin composition and elastomer composition according to the present invention is washed with water and with a common industrial detergent,

each at least one time, and then further washed with water, followed by drying with heat. Namely, it is noted that in order to apply the coating to the molded product formed from the thermoplastic resin composition and elastomer composition according to the present invention, the washing (surface treatment) of the molded product with vapor of an chlorinated solvent conventionally required is not always necessary. After drying the molded product, the urethane resin coating can be applied thereto, if necessary, followed by heating, to form a coating film of the urethane resin. The resulting coating film has very good adhesion to the molded product even though the chlorinated solvent vapor washing is omitted.

Although all the molded products obtained from the elastomer composition have not always sufficient abrasion resistance and scratch resistance, their appearance and physical properties of their surfaces can extremely be improved by application of the coating thereto so that coated products variously designed can be obtained.

The coated products of the thermoplastic resin composition and the coated products of the elastomer composition according to the present invention can widely be used for various purposes desired to be coated, for example automobile parts, motorbike parts, electric equipment parts, products for daily use, civil engineering and construction materials, general engineering materials, business and information processing machines, packaging materials, sports goods, and medical equipments and instruments.

## EFFECT OF THE INVENTION

The vulcanized molded product having a surface decorative layer according to the present invention exhibits excellent adhesion to the surface decorative layer and also excellent mechanical strength.

The coated product of the thermoplastic resin composition molded product and the coated product of the elastomer composition molded product according to the present invention exhibits excellent adhesion between the molded product and the coating film.

## EXAMPLE

The present invention is further described with reference to the following examples, but it should be construed that invention is in no way limited to those examples.

The following measuring method were used in Examples and Comparative Examples.

(For Examples 1-16 and Comparative Examples 1-4)

### Tensile Test

A vulcanized sheet was punched out to prepare dumbbell specimens of No. 3 type of JIS K 6301 (1989). According to the method described in JIS K 6301, Section 3, the tensile test was carried out under the test conditions of a temperature of 25 °C and a stress rate of 500 mm/min to measure tensile strength (TB) and tensile elongation at break (EB).

### Hardness Test

According to JIS K 6301, spring hardness (HS: JIS A hardness) was measured.

### Adhesion Test of Coating Film

Two vulcanized plate specimens having a coating film of an about 100 μm thickness were prepared. Both specimens were bonded with an instant adhesive such that the rubber surface of one specimen was opposed to the coated surface of the other, and then strips of a 10 mm width were cut out from the bonded specimen. The peel strength was measured using a tensile tester by peeling in the direction of 90 degrees at a rate of 200 mm/min.

### Compression Set Test

The compression set (CS) was measured for specimens which were heat aged at 100 °C for 22 hours according to JIS K 6301.

(For Examples 17-27 and Comparative Examples 5-8)

### Cross-Cut Test

On the surface of a coated specimen, 11 lines parallel to one another were drawn with a single-edged razor at intervals of 2 mm and, at right angles to these lines, further 11 lines parallel to one another were drawn at intervals of 2 mm to form 100 cross cuts. An adhesive tape (JIS Z 1522) was put on the cross cuts with pressure to adhere well thereto. After the tape was peeled off upward at a dash, the state of the cross cuts was inspected and the number of cross cuts remaining on the specimen without peeled off were counted.

Preparation Example 1

To a 1.5-liter autoclave thoroughly purged with nitrogen, 430 ml of toluene, 75 ml of styrene and 5 ml of 4-ethylidene-8-methyl-1,7-nonadiene (EMND) were introduced, followed by feeding propylene so that the pressure became 3.2 kg/cm$^2$. The system in the autoclave was then heated to 50 °C while stirring and ethylene was fed so that the pressure became 10 kg/cm$^2$. Separately, 9.2 mmol of methyl aluminoxane (Toso Aczo, 3 % by weight solution in toluene) and 0.018 mmol of (dimethyl(tert-butylamide)(tetramethyl-$\eta^5$-cyclopentadienyl)silane)dichloride titanium synthesized by a known method were stirred in another reactor for 15 minutes to prepare a mixed solution which was then introduced to the autoclave to initiate the polymerization. The polymerization was performed for 30 minutes by continuously feeding ethylene to keep the pressure of polymerization system at 10 kg/cm$^2$. The polymerization was terminated by adding 5 ml of methanol. After the end of polymerization, 1 liter of methanol was added to the polymer solution to precipitate a polymer which was washed twice with 1 liter of methanol, followed by drying at 130 °C for 12 hours under reduced pressure. An ethylene/propylene/styrene/EMND copolymer (Copolymer (a)) was obtained in a yield of 24 g, in which the molar ratio of constituent units from ethylene to constituent units from propylene (ethylene/propylene) was 73/27 and the molar ratio of the total of constituent units from ethylene and from propylene to constituent units from styrene (ethylene + propylene/styrene) was 90/10. The copolymer had an iodine value of 15 and an intrinsic viscosity [η] of 2.8 dl/g as measured in decline at 135 °C.

Preparation Example 2

To a 1.5-liter autoclave thoroughly purged with nitrogen, 430 ml of toluene, 40 ml of styrene and 4.5 ml of EMND were introduced, followed by feeding 1-butene so that the pressure became 2.0 kg/cm$^2$. The system in the autoclave was then heated to 50 °C while stirring and ethylene was fed so that the pressure became 10 kg/cm$^2$.

The polymerization was performed in the same manner as in Preparation Example 1, except that ethylene was continuously fed to keep the pressure of polymerization system at 10 kg/cm$^2$. An ethylene/1-butene/styrene/EMND copolymer (Copolymer (b)) was obtained in a yield of 23 g, in which the molar ratio of constituent units from ethylene to constituent units from 1-butene (ethylene/1-butene) was 80/20 and the molar ratio of the total of constituent units from ethylene and from 1-butene to constituent units from styrene (ethylene + 1-butene/styrene) was 94/6. The copolymer had an iodine value of 13 and an intrinsic viscosity [η] of 2.7 dl/g as measured in decline at 135 °C.

Preparation Example 3

To a 1.5-liter autoclave thoroughly purged with nitrogen, 430 ml of toluene, 50 ml of styrene, 40 ml of 1-octene and 4.5 ml of EMND were introduced. The system in the autoclave was then heated to 60 °C while stirring and ethylene was fed so that the pressure became 10 kg/cm$^2$.

The polymerization was performed in the same manner as in Preparation Example 1, except that ethylene was continuously fed to keep the pressure of polymerization system at 10 kg/cm$^2$. An ethylene/1-octene/styrene/EMND copolymer (Copolymer (c)) was obtained in a yield of 20 g, in which the molar ratio of constituent units from ethylene to constituent units from 1-octene (ethylene/1-octene) was 83/17 and the molar ratio of the total of constituent units from ethylene and from 1-octene to constituent units from styrene (ethylene + 1-octene/styrene) was 93/7. The copolymer had an iodine value of 12 and an intrinsic viscosity [η] of 2.6 dl/g as measured in decalin at 135 °C.

Preparation Example 4

To a 1.5-liter autoclave thoroughly purged with nitrogen, 430 ml of toluene, 40 ml of styrene and 8 ml of EMND were introduced, followed by feeding propylene so that the pressure became 3.0 kg/cm$^2$. The system in the autoclave was then heated to 50 °C while stirring and ethylene was fed so that the pressure became 10 kg/cm$^2$.

The polymerization was performed in the same manner as in Preparation Example 1, except that ethylene was continuously fed to keep the pressure of polymerization system at 10 kg/cm$^2$. An ethylene/propylene/styrene/EMND copolymer (Copolymer (d)) was obtained in a yield of 21 g, in which the molar ratio of constituent units from ethylene to constituent units from propylene (ethylene/propylene) was 75/25 and the molar ratio of the total of constituent units from ethylene and from 1-octene to constituent units from styrene (ethylene + propylene/styrene) was 93/7. The copolymer had an iodine value of 24 and an intrinsic viscosity [η] of 2.7 dl/g as measured in decalin at 135 °C.

Preparation Example 5

To a 1.5-liter autoclave thoroughly purged with nitrogen, 430 ml of toluene, 60 ml of styrene and 7.5 ml of EMND were introduced, followed by feeding 1-butene so that the pressure became 2.0 kg/cm$^2$. The system in the autoclave was then heated to 50 °C while stirring and ethylene was fed so that the pressure became 10 kg/cm$^2$.

The polymerization was performed in the same manner as in Preparation Example 1, except that ethylene was continuously fed to keep the pressure of polymerization system at 10 kg/cm$^2$. An ethylene/1-butene/styrene/EMND copolymer (Copolymer (e)) was obtained in a yield of 18 g, in which the molar ratio of constituent units from ethylene to constituent units from 1-butene (ethylene/1-butene) was 78/22 and the molar ratio of the total of constituent units from ethylene and from 1-butene to constituent units from styrene (ethylene + 1-butene/styrene) was 92/8. The copolymer had an iodine value of 22 and an intrinsic viscosity [η] of 2.4 dl/g as measured in decalin at 135 °C.

Preparation Example 6

An ethylene/propylene/styrene/EMND copolymer (Copolymer (h)) was obtained in the same manner as in Preparation Example 1, except that the (dimethyl(tert-butylamide)(tetramethyl-$\eta^5$- cyclopentadienyl)silane)dichloride titanium was replaced by isopropylidene-bis(indenyl)zirconium dichloride synthesized by a known method. In the resulting ethylene/propylene/styrene/EMND copolymer (Copolymer (h)), the molar ratio of constituent units from ethylene to constituent units from propylene (ethylene/propylene) was 75/25 and the molar ratio of the total of constituent units from ethylene and from propylene to constituent units from styrene (ethylene + propylene/styrene) was 89/11. The copolymer had an iodine value of 16 and an intrinsic viscosity [η] of 2.1 dl/g as measured in decalin at 135 °C.

Example 1

Copolymer (a) prepared in Preparation Example 1, FEF carbon black (Asahi 60HG™, Asahi Carbon K.K.), paraffin oil (PS-430™, Idemitsu Kosan K.K), stearic acid, zinc white, calcium carbonate heavy (Whiton SB™, Shiroisi Kogyo K.K.) and calcium oxide (Besta BS™, Inoue Sekitan K.K.) were kneaded by means of a 4.3-liter Banbury mixer (Kobe Seikosho K.K.) for 6 minutes. The kneadate was fed to a 14-inch open roll mill (front/back rolls: 50/50 °C), and further kneaded together with sulfur, 2-mercaptobenzothiazole, dipentamethylenethiuram disulfide and tetrabutylthiuram disulfide, followed by gaging to obtain a compound rubber.

| | | |
|---|---|---|
| Copolymer (a): | 100 | parts by weight |
| FEF carbon black: | 160 | parts by weight |

| | | |
|---|---|---|
| paraffin oil: | 90 | parts by weight |
| stearic acid: | 1 | part by weight |
| zinc white: | 5 | parts by weight |
| calcium carbonate heavy: | 35 | parts by weight |
| calcium oxide: | 5 | parts by weight |
| sulfur: | 0.8 | part by weight |
| 2-mercaptobenzothiazole: | 1.0 | part by weight |
| dipentamethylenethiuram disulfide: | 0.4 | part by weight |
| tetrabutylthiuram disulfide: | 0.4 | part by weight |

The thus obtained compound rubber was heated for 10 minutes by means of a press heated at 160 °C to produce a vulcanized sheet having a thickness of 2 mm, for which tensile test and hardness test were carried out.

Further, the compound rubber was extruded by means of a 50-mm ∅ extruder equipped with a flat die (width: 50 mm, gap size: 2 mm) under the conditions of a die temperature of 80 °C and a cylinder temperature of 60 °C to form a flat plate. Subsequently, the plate was roll coated thereon with an urethane resin coating (Mitsui Toatsu K.K.: Orestar Q173/Orestar NP1100 (100/88)) and then vulcanized in a hot air vulcanizer at 210 °C for 6 minutes to obtain an urethane coated rubber plate, for which adhesion strength of the coating film was measured. The results obtained are shown in Table 1.

Example 2

Example 1 was repeated, except that the compound rubber further contained 0.6 part by weight of a dioctyltin maleate polymer and 4 parts by weight of a hydroxy-containing polybutadiene (Polyether H™, Mitsubishi Chemicals K.K.). The results are shown in Table 1.

Example 3

Example 2 was repeated, except that 40 parts by weight of magnesium hydroxide was used instead of calcium carbonate heavy. The results are shown in Table 1.

Example 4

Example 1 was repeated, except that Copolymer (b) obtained in Preparation Example 2 was used instead of Copolymer (a). The results are shown in Table 1.

Example 5

Example 1 was repeated, except that Copolymer (c) obtained in Preparation Example 3 was used instead of Copolymer (a). The results are shown in Table 1.

Comparative Example 1

Example 1 was repeated, except that an ethylene/propylene/EMND copolymer (ethylene/propylene (molar ratio) = 72/28, iodine value = 12, intrinsic viscosity [η] (measured in decalin at 135 °C) = 2.7 dl/g, Copolymer (f)) was used

instead of Copolymer (a). The results are shown in Table 1.

Example 6

Copolymer (d) obtained in Preparation Example 4, SRF-H carbon black (Asahi #6™, Asahi Carbon K.K.), paraffin process oil (PW-380™, Idemitsu Kosan K.K), polyethylene glycol, stearic acid and zinc white were kneaded by means of a 1.7-liter Banbury mixer (Kobe Seikosho K.K.) for 6 minutes. The kneadate was further kneaded in a 8-inch open roll mill (front/back rolls: 50/50 °C) together with sulfur, 2-mercaptobenzothiazole, 2-(4'-morpholinodithio)benzothiazole, zinc di-n-butylthiocarbamate, 2-mercaptoimidazoline, p,p'-oxybisbenzenesulfonylhydrazide and calcium oxide to obtain a compound rubber.

| | | |
|---|---|---|
| Copolymer (d): | 100 | parts by weight |
| SRF-H carbon black: | 90 | parts by weight |
| paraffin process oil: | 70 | parts by weight |
| polyethylene glycol: | 1 | parts by weight |
| stearic acid: | 2 | part by weight |
| zinc white: | 5 | parts by weight |
| sulfur: | 1.5 | parts by weight |
| calcium oxide: | 5 | parts by weight |
| 2-mercaptobenzothiazole: | 0.8 | part by weight |
| 2-(4'-morpholinodithio)-benzothiazole: | 1.2 | parts by weight |
| zinc di-n-butylthiocarbamate: | 2.0 | parts by weight |
| 2-mercaptoimidazoline: | 1.0 | part by weight |
| p,p'-oxybisbenzene-sulfonylhydrazide: | 3.5 | parts by weight |

The thus obtained compound rubber was extruded by means of a 50-mm ∅ extruder equipped with a circular die having an inner diameter of 10 mm and a gap size of 1 mm under the conditions of a die temperature of 80 °C and a cylinder temperature of 60 °C to form a tube. The molded tube was vulcanized in a hot air vulcatizer at 210 °C for 6 minutes to obtain a spongy rubber plate, for which specific gravity measurment, tansile test and compression set test were carried out.

Further, in the forgoing manner using the same extruder equipped with a flat die having a width of 25 mm and a gap size of 2 mm instead of the circular die, a flat vulcanized molded product was obtaind. The resulting molded product was heated at 220 °C for 6 minutes to obtain a spongy rubber plate. Thereafter, an urethane coated spongy rubber plate was obtained in the same manner as in Example 1, except that the heating was carried out at 200 °C for 6 minutes. For the resulting urethane coated spongy rubber plate, adhesion strength of the coating film and so on were measured. The

results are shown in Table 1.

Example 7

Example 6 was repeated, except that Copolymer (e) obtained in Preparation Example 5 was used instead of Copolymer (d). The results are shown in Table 1.

Comparative Example 2

Example 6 was repeated, except that an ethylene/propylene/EMND copolymer (ethylene/propylene (molar ratio) = 70/30, iodine value = 22, intrinsic viscosity [η] (measured in decaline at 135 °C) = 2.6 dl/g, Copolymer (g)) was used instead of Copolymer (d). The results are shown in Table 1.

Example 8

Example 1 was repeated, except that Copolymer (h) obtained in Preparation Example 6 was used instead of Copolymer (a). The results are shown in Table 1.

It can be seen from Table 1 that the vulcanized molded products having a decorative surface layer (coating film) according to the present invention exhibit improved adhesive (bond) strength of the decorative surface layer in spite of omitting surface treatment prior to the coating.

Table 1

| | Ex. 1 | Ex. 2 | Ex. 3 | Comp. Ex. 1 | Ex. 4 |
|---|---|---|---|---|---|
| Unsaturated olefin copolymer (pbw) | (a) | (a) | (a) | (f) | (b) |
| Properties | | | | | |
| TB (MPa) | 12 | 11 | 10 | 12 | 12 |
| EB (%) | 310 | 320 | 290 | 300 | 300 |
| HS (JIS A) | 72 | 71 | 70 | 71 | 70 |
| Coating film adhesive Strength*1 | ○ | ○ | ○ | X | ○ |
| Coating film adhesive strength (N/cm) | 42 | 54 | 62 | 15 | 48 |
| CS (%) | - | - | - | - | - |
| Density (kg/cm$^3$) | - | - | - | - | - |

Table 1 (continued)

| | Ex. 5 | Ex. 6 | Ex. 7 | Comp. Ex. 2 | Ex. 8 |
|---|---|---|---|---|---|
| Unsaturated olefin copolymer (pbw) | (c) | (d) | (e) | (g) | (h) |
| Properties | | | | | |
| TB (MPa) | 13 | 2.8 | 2.9 | 2.6 | 11 |
| EB (%) | 350 | 300 | 300 | 280 | 290 |
| HS (JIS A) | 73 | - | - | - | 67 |
| Coating film adhesive Strength*1 | O | O | O | X | O |
| Coating film adhesive strength (N/cm) | 52 | | | | 40 |
| CS (%) | - | 18 | 19 | 20 | - |
| Density ($kg/cm^3$) | - | 550 | 560 | 540 | - |

*1 O: Substrate breaking

X: Interfacial peeling

Preparation Example 7

To a 1.5-liter autoclave thoroughly purged with nitrogen, 430 ml of toluene, 50 ml of styrene and 6 ml of 4-ethylidene-8-methyl-1,7-nonadiene (EMND) were introduced. The system in the autoclave was then heated to 50 °C while stirring and ethylene was fed so that the pressure became 7 $kg/cm^2$. Separately, 9.2 mmol of methyl aluminoxane (Toso Aczo, 3 % by weight solution in toluene) and 0.018 mmol of (dimethyl(tert-butylamide)(tetramethyl-$\eta^5$-cyclopentadienyl)silane)dichloride titanium synthesized by a known method were stirred in another reactor for 15 minutes to prepare a mixed solution which was then introduced to the autoclave to initiate the polymerization. The polymerization was performed for 30 minutes by continuously feeding ethylene to keep the pressure of polymerization system at 7 $kg/cm^2$. The polymerization was terminated by adding 5 ml of methanol. After the end of polymerization, 1 liter of methanol was added to the polymer solution to precipitate a polymer which was washed twice with 1 liter of methanol, followed by drying at 130 °C for 12 hours under reduced pressure. An ethylene/styrene/EMND copolymer (Copolymer (i)) was obtained in a yield of 25 g, in which the molar ratio of constituent units from ethylene to constituent units from styrene (ethylene/styrene) was 88/12. The copolymer had an iodine value of 17 and an intrinsic viscosity [$\eta$] of 2.0 dl/g as measured in decalin at 135 °C.

Preparation Example 8

To a 1.5-liter autoclave thoroughly purged with nitrogen, 430 ml of toluene, 75 ml of styrene and 7 ml of EMND were introduced, followed by feeding propylene so that the pressure became 3.2 $kg/cm^2$. The system in the autoclave was then heated to 50 °C while stirring and ethylene was fed so that the pressure became 10 $kg/cm^2$.

The polymerization was performed in the same manner as in Preparation Example 7, except that ethylene was continuously fed to keep the pressure of polymerization system at 10 kg/cm$^2$. An ethylene/prolylene/styrene/EMND copolymer (Copolymer (j)) was obtained in a yield of 20 g, in which the molar ratio of constituent units from ethylene to constituent units from propylene (ethylene/propylene) was 73/27 and the molar ratio of the total of constituent units from ethylene and from propylene to constituent units from styrene (ethylene + propylene/styrene) was 90/10. The copolymer had an iodine value of 20 and an intrinsic viscosity [η] of 2.5 dl/g as measured in decalin at 135 °C.

Preparation Example 9

An ethylene/styrene/EMND copolymer (Copolymer (k)) was obtained in the same manner as in Preparation Example 7, except that the (dimethyl(tert-butylamide)(tetramethyl-$\eta^5$-cyclopentadienyl)silane)dichloride titanium was replaced by isopropylidene-bis(indenyl)zirconium dichloride synthesized by a known method. In the resulting ethylene/styrene/EMND copolymer (Copolymer (k)), the molar ratio of constituent units from ethylene to constituent units from styrene (ethylene/styrene) was 89/11. The copolymer had an iodine value of 16 and an intrinsic viscosity [η] of 1.7 dl/g as measured in decalin at 135 °C.

Example 9

Copolymer (i) prepared in Preparation Example 7, an ethylene/propylene copolymer rubber (ethylene/propylene = 72/28, iodine value = 12, intrinsic viscosity [η] (measured in decalin at 135 °C) = 2.7 dl/g, Copolymer (p)), FEF carbon black (Asahi 60HG™, Asahi Carbon K.K.), paraffin oil (PS-430™, Idemitsu Kosan K.K), stearic acid, zinc white, calcium carbonate heavy (Whiton SB™, Shiroisi Kogyo K.K.) and calcium oxide (Besta BS™, Inoue Sekitan K.K.) were kneaded by means of a 1.7-liter Banbury mixer (Kobe Seikosho K.K.) for 6 minutes. To a 8-inch open roll mill (front/back rolls: 50/50 °C), the kneadate was fed and further sulfur, 2-mercaptobenzothiazole, dipentamethylenethiuram disulfide and tetrabutylthiuram disulfide were added and kneaded to obtain a compound rubber.

| | | |
|---|---|---|
| Copolymer (i): | 100 | parts by weight |
| Copolymer (p): | 100 | parts by weight |
| FEF carbon black: | 160 | parts by weight |
| paraffin oil: | 90 | parts by weight |
| stearic acid: | 1 | part by weight |
| zinc white: | 5 | parts by weight |
| calcium carbonate heavy: | 35 | parts by weight |
| calcium oxide: | 5 | parts by weight |
| sulfur: | 0.8 | part by weight |
| 2-mercaptobenzothiazole: | 1.0 | part by weight |
| dipentamethylenethiuram disulfide: | 0.4 | part by weight |
| tetrabutylthiuram disulfide: | 0.4 | part by weight |

The thus obtained compound rubber was heated for 10 minutes by means of a press heated at 160 °C to produce a vulcanized sheet having a thickness of 2 mm, for which tensile test and hardness test were carried out.

Further, the compound rubber was extruded by means of a 50-mm ∅ extruder equipped with a flat die (width: 50

mm, gap size: 2 mm) under the conditions of a die temperature of 80 °C and a cylinder temperature of 60 °C to form a flat plate. Subsequently, the plate was roll coated thereon with an urethane resin coating (Mitsui Toatsu K.K.: Orestar Q173/Orestar NP1100 (100/88)) and then vulcanized in a hot air vulcanizer at 210 °C for 6 minutes to obtain an urethane coated rubber plate, for which adhesive strength of the coating film was measured. The results are shown in Table 2.

Example 10

Example 9 was repeated, except that the amounts of Copolymer (i) and Copolymer (p) were changed to 50 parts by weight, respectively. The results are shown in Table 2.

Example 11

Example 9 was repeated, except that the amounts of Copolymer (i) and Copolymer (p) were changed to 30 parts by weight and 70 parts by weight, respectively. The results are shown in Table 2.

Comparative Example 3

Example 9 was repeated, except that Copolymer (i) was omitted and 100 parts by weight of Copolymer (p) was used. The results are shown in Table 2.

Example 12

Example 9 was repeated, except that magnesium hydroxide was used instead of calcium carbonate heavy. The results are shown in Table 2.

Example 13

Example 12 was repeated, except that the compound rubber further contained 0.6 part by weight of a dioctyltin maleate polymer and 4 parts by weight of a hydroxy-containing polybutadiene (Polyether H™ , Mitsubishi Chemicals K.K.). The results are shown in Table 2.

Example 14

Copolymer (i) prepared in Preparation Example 7, an ethylene/propylene copolymer rubber (ethylene/propylene = 70/30, iodine value = 22, intrinsic viscosity [η] (measured in decalin at 135 °C) = 2.6 dl/g, Copolymer (q)), SRF-H carbon black (Asahi #50H™, Asahi Carbon K.K.), paraffin oil (PW-380™, Idemitsu Kosan K.K), polyethylene glycol, stearic acid, zinc white and calcium oxide were kneaded by means of a 1.7-liter Banbury mixer (Kobe Seikosho K.K.) for 6 minutes. The kneadate was fed to a 8-inch open roll mill (front/back rolls: 50/50 °C), and sulfur, 2-mercaptobenzothiazole, 2-(4'-morpholinodithio)benzothiazole, zinc di-n-butylthiocarbamate, 2-mercaptoimidazoline, p,p'-oxybisbenzenesulfonylhydrazide and calcium oxide to obtain a compound rubber.

| | | |
|---|---|---|
| Copolymer (i): | 60 | parts by weight |
| Copolymer (q): | 40 | parts by weight |
| SRF-H carbon black: | 90 | parts by weight |
| paraffin process oil: | 70 | parts by weight |
| polyethylene glycol: | 1 | parts by weight |
| stearic acid: | 2 | part by weight |
| zinc white: | 5 | parts by weight |
| sulfur: | 1.5 | parts by weight |
| calcium oxide: | 5 | parts by weight |
| 2-mercaptobenzothiazole: | 0.8 | part by weight |
| 2-(4'-morpholinodithio)-benzothiazole: | 1.2 | parts by weight |
| inc di-n-butylthiocarbamate: | 2.0 | parts by weight |
| 2-mercaptoimidazoline: | 1.0 | part by weight |
| p,p'-oxybisbenzene-sulfonylhydrazide: | 3.5 | parts by weight |

The thus obtained compound rubber was extruded by means of a 50-mm ∅ extruder equipped with a circular die having an inner diameter of 10 mm and a gap size of 1 mm under the conditions of a die temperature of 80 °C and a cylinder temperature of 60 °C to form a tube. The molded tube was vulcanized in a hot air vulcanizer at 220 °C for 6 minutes to obtain a spongy rubber plate, for which specific gravity measurement, tensile test and compression set test were carried out.

Further, in the forgoing manner using the same extruder equipped with a flat die having a width of 25 mm and a gap size of 2 mm instead of the circular die, a flat vulcanized formed product was obtained. The resulting formed product was heated at 220 °C for 6 minutes to obtain a spongy rubber plate. Thereafter, an urethane coated spongy rubber plate was obtained in the same manner as in Example 9, except that the heating was carried out at 200 °C for 6 minutes. For the resulting urethane coated spongy rubber plate, adhesive strength of the coating film and so on were measured. The results are shown in Table 2.

Example 15

Example 14 was repeated, except that Copolymer (j) obtained in Preparation Example 8 was used instead of Copolymer (i). The results are shown in Table 2.

Comparative Example 4

Example 14 was repeated, except that Copolymer (i) was omitted and 100 parts by weight of Copolymer (q) was used. The results are shown in Table 2.

Example 16

Example 9 was repeated, except that Copolymer (k) prepared in Preparation Example 9 was used instead of Copolymer (i). The results are shown in Table 2.

It can be seen from Table 2 that the vulcanized molded products having a decorative surface layer (coating film) according to the present invention exhibit improved adhesive strength of the decorative surface layer (bond strength of the coating film) in spite of omitting surface treatment prior to the coating.

Table 2

| | Ex. 9 | Ex. 10 | Ex. 11 | Comp. Ex. 3 | Ex. 12 |
|---|---|---|---|---|---|
| Unsaturated olefin copolymer (pbw) | (a) 70 | (a) 50 | (a) 30 | - 0 | (a) 70 |
| Ethylene/α-olefin copolymer rubber (pbw) | (p) 30 | (p) 50 | (p) 70 | (p) 100 | (p) 30 |
| Properties | | | | | |
| TB (MPa) | 12 | 11 | 12 | 11 | 11 |
| EB (%) | 340 | 350 | 330 | 290 | 320 |
| HS (JIS A) | 72 | 70 | 70 | 68 | 70 |
| Coating film adhesive Strength*1 | O | O | O | X | O |
| Coating film adhesive strength (N/cm) | 51 | 40 | 32 | 15 | 58 |
| CS (%) | - | - | - | - | - |
| Density ($kg/cm^3$) | - | - | - | - | - |

Table 2 (continued)

| | Ex. 13 | Ex. 14 | Ex. 15 | Comp. Ex. 4 | Ex. 16 |
|---|---|---|---|---|---|
| Unsaturated olefin copolymer (pbw) | (a) 70 | (a) 60 | (b) 80 | - 0 | (c) 70 |
| Ethylene/α-olefin copolymer rubber (pbw) | (p) 30 | (q) 40 | (q) 20 | (q) 100 | (p) 30 |
| Properties | | | | | |
| TB (MPa) | 12 | 2.7 | 2.6 | 2.6 | 11 |
| EB (%) | 350 | 310 | 320 | 290 | 300 |
| HS (JIS A) | 69 | - | - | - | 68 |
| Coating film adhesive Strength*1 | ○ | ○ | ○ | X | ○ |
| Coating film adhesive strength (N/cm) | 66 | | | | 45 |
| CS (%) | - | 18 | 19 | 19 | - |
| Density ($kg/cm^3$) | - | 520 | 500 | 530 | - |

*1 ○: Substrate breaking

X: Interfacial peeling

Preparation Example 10

Preparation of ethylene/styrene random copolymer (E-St (1))

A 1-liter glass reactor equipped with a condenser and a stirrer was thoroughly purged with nitrogen and 460 ml of toluene and 40 ml of styrene were introduced thereto, followed by saturating with ethylene with stirring. After the temperature of the system was elevated to 35 °C, 4.5 mmol of methyl aluminoxane (Toso Aczo, 10 % by weight solution in toluene) and 0.045 mmol of (tert-butylamide)dimethyl(tetramethyl-$\eta^5$-cyclopentadienyl)silane titanium dichloride (0.01 mM solution in toluene) were added. Ethylene was continuously fed at a rate of 100 Nl/hr to perform the polymerization at 40 °C for 60 minutes.

After the end of polymerization, the reaction mixture was stirred together with 250 ml of isobutyl alcohol and 10 ml of an aqueous hydrochloric acid for 30 minutes with heating at 80 °C. The isobutyl alcohol phase was transferred to a separatory funnel and washed twice with 250 ml of water to separate aqueous and organic phases. The organic phase was introduced into 3 liters of methanol to precipitate a polymer which was vacuum dried at 130 °C for 12 hours. A polymer (E-St (1)) containing 85 % by mol of ethylene and 15 % by mol of styrene was obtained in a yield of 15 g. The polymer (E-St (1)) had an intrinsic viscosity [η] of 1.8 dl/g as measured in decalin at 135 °C.

Preparation Example 11

Preparation of ethylene/styrene random copolymer (E-St (2))

A 1-liter glass reactor equipped with a condenser and a stirrer was thoroughly purged with nitrogen and 465 ml of toluene and 35 ml of styrene were introduced thereto, followed by saturating with ethylene with stirring. After the temperature of the system was elevated to 35 °C, 4.5 mmol of methyl aluminoxane (Toso Aczo, 10 % by weight solution in toluene) and 0.045 mmol of (tert-butylamide)dimethyl(tetramethyl-$\eta^5$-cyclopentadienyl)silane titanium dichloride (0.01 mM solution in toluene) were added. Ethylene was continuously fed at a rate of 100 Nl/hr to perform the polymerization at 40 °C for 60 minutes.

After the end of polymerization, the reaction mixture was stirred together with 250 ml of isobutyl alcohol and 10 ml of an aqueous hydrochloric acid for 30 minutes with heating at 80 °C. The isobutyl alcohol phase was transferred to a separatory funnel and washed twice with 250 ml of water to separate aqueous and organic phases. The organic phase was introduced into 3 liters of methanol to precipitate a polymer which was vacuum dried at 130 °C for 12 hours. A polymer (E-St (2)) containing 90 % by mol of ethylene and 10 % by mol of styrene was obtained in a yield of 20 g. The polymer (E-St (2)) had an intrinsic viscosity [η] of 2.1 dl/g as measured in decalin at 135 °C.

Preparation Example 12

Preparation of ethylene/styrene random copolymer (E-St (3))

To a 2-liter autoclave thoroughly purged with nitrogen, 360 ml of toluene, 190 ml of styrene and 50 ml of 1-octene were introduced. The system in the autoclave was then heated to 90 °C while stirring and ethylene was fed so that the pressure became 16 kg/cm$^2$. Separately, 5.0 mmol of methyl aluminoxane (Toso Aczo, 3 % by weight solution in toluene) and 0.005 mmol of (tert-butylamide)dimethyl(tetramethyl-$\eta^5$-cyclopentadienyl)silane titanium dichloride synthesized by a known method were stirred in another reactor for 20 minutes to prepare a mixed solution which was then introduced to the autoclave to initiate the polymerization. The polymerization was performed for 30 minutes by continuously feeding ethylene to keep the pressure of polymerization system at 16 kg/cm$^2$. The polymerization was terminated by adding 5 ml of methanol.

After the end of polymerization, 1 liter of methanol was added to the polymer solution to precipitate a polymer which was washed twice with 1 liter of methanol, followed by drying at 130 °C for 12 hours under reduced pressure. A polymer (E-St (3)) containing 85.2 % by mol of ethylene, 5.3 % by mol of 1-octene and 9.5 % by mol of styrene was obtained in a yield of 40 g. The polymer (E-St (3)) had an intrinsic viscosity [η] of 1.9 dl/g as measured in decalin at 135 °C.

Preparation Example 13

Preparation of modified ethylene/styrene random copolymer (E-St (4))

To a 1-liter glass autoclave thoroughly purged with nitrogen, 190 ml of toluene and 30 g of ethylene/styrene random copolymer (E-St (2)) prepared in Preparation Example 11 were introduced, followed by heating to 140 °C with stirring. In another vessel, 5.3 g of maleic anhydride and 6.9 g of dicumyl peroxide were dissolved in 40 ml of toluene to prepare a solution. The solution was added dropwise to the autoclave over 3.5 hours at a uniform rate and then the mixture was stirred for further 3 hours. In the course of dropwise addition, the temperature was elevated gradually to 160 °C. After the end of reaction, the reaction mixture was cooled to 70 °C and poured into 1 liter of methanol to precipitate a polymer which was washed with 1 liter of acetone and dried at 130 °C for 12 hours under reduced pressure. A graft modified ethylene/styrene random copolymer (E-St (4)) was obtained. The resulting (E-St (4)) was graft modified with 2.2 % by weight of maleic anhydride as determined by infrared absorption spectral analysis and had an intrinsic viscosity [η] of 2.0 dl/g as measured in decalin at 135 °C.

Preparation Example 14

Preparation of ethylene/styrene random copolymer (E-St (5))

An ethylene/styrene random copolymer (E-St (5)) was obtained in a yield of 24 g in the same manner as in Preparation Example 11, except that (tert-butylamide)dimethyl(tetramethyl-$\eta^5$-cyclopentadienyl)silane titanium dichloride was

replaced by isopropylidene-bis(indenyl)zirconium dichloride synthesized by a known method. An ethylene/styrene random copolymer (E-St (5)) containing 88 % by mol of ethylene and 12 % by mol of styrene was obtained in a yield of 24 g. The copolymer (E-St (5)) had an intrinsic viscosity [η] of 1.7 dl/g as measured in decalin at 135 °C.

Examples 17 to 23 and Comparative Examples 5 and 6

Polyolefin resin
PP-1: Propylene/ethylene block copolymer having a melt flow rate (ASTM D1238, 230 °C, 2.16 kg load) of 10 g/10 min and an ethylene content of 10 % by mol.
Talc
Talc having an average particle size of 2.0 μm.
EOR
Ethylene/octene random copolymer having a melt flow rate (190 °C, 2.16 kg load) of 1.0 g/10 min and a density of 0.87 g/cm$^3$.
Polystyrene (PSt)
Topolex 525-61™ (Mitsui Toatsu K.K.) having a melt flow rate (200 °C, 5 kg load) of 10 g/10 min.

Components as shown in Table 3 were melt kneaded in proportions as given in the same by means of a twin screw extruder provided with a vent (screw diameter: 30 mm, L/D = 42) at a cylinder set temperature of 200 °C to prepare thermoplastic resin compositions. Each of the compositions was injection molded to produce a flat plate which was subjected to coating and then to cross-cut peeling test. The results are shown in Table 3.

Example 24

Example 18 was repeated, except that the copolymer (E-St (5)) prepared in preparation Example 14 was used instead of the copolymer (E-St(2)). The results are shown in Table 3.

Table 3

| | Composition (parts by weight) | | | | | | | | | Cross-cut test |
|---|---|---|---|---|---|---|---|---|---|---|
| | PP-1 | E-St(1) | E-St(2) | E-St(3) | E-St(4) | E-St(5) | EOR | Talc | PSt | |
| Ex. 17 | 70 | 25 | - | - | - | - | - | 5 | - | 60 |
| Ex. 18 | 70 | - | 25 | - | - | - | - | 5 | - | 50 |
| Ex. 19 | 70 | - | - | 25 | - | - | - | 5 | - | 50 |
| Ex. 20 | 70 | 15 | - | - | - | - | 10 | 5 | - | 40 |
| Ex. 21 | 70 | - | 15 | - | - | - | 10 | - | - | 80 |
| Ex. 22 | 70 | - | - | - | 15 | - | 10 | - | - | 100 |
| Ex. 23 | 70 | - | - | - | 10 | - | 10 | 5 | 5 | 100 |
| Ex. 24 | - | - | - | - | - | 25 | - | - | 5 | 60 |
| Comp. Ex. 5 | 70 | - | - | - | - | - | 25 | 5 | - | 0 |
| Comp. Ex. 6 | 70 | - | - | - | - | - | 20 | 5 | 5 | 0 |

E-ST(1): Ethylene/styrene random copolymer (ethylene content: 85 mol%, styrene content: 15 mol%)

E-ST(2): Ethylene/styrene random copolymer (ethylene content: 90 mol%, styrene content: 10 mol%)

E-ST(3): Ethylene/styrene random copolymer (ethylene content: 85 mol%, styrene content: 10 mol%, 1-octen content: 5 mol%)

E-ST(4): E-St(1) graft modified with MAH

E-ST(5): Ethylene/styrene random copolymer (ethylene content: 88 mol%, styrene content: 12 mol%)

Examples 25 to 27 and Comparative Examples 7 and 8

Polyolefin resin
PP-2: Propylene/ethylene block copolymer having a melt flow rate (ASTM D1238, 230 °C, 2.16 kg load) of 12 g/10 min and an ethylene content of 10 % by mol.
Ethylene/styrene random copolymer
E-St (1)
E-St (2)
Ethylene/α-olefin/non-conjugated diene copolymer
EPR: Ethylene/propylene/5-ethylidene-2-norbornene copolymer rubber having an ethylene content of 73 % by mol, an iodine value of 18 and a Mooney viscosity $ML_{1+4}$(100 °C) of 80.
Hydrocarbon rubber non-vulcanizable with peroxide
Butyl rubber having an unsaturation degree of 0.75 % by mol and a Mooney viscosity $ML_{1+8}$(100 °C) of 45.
Softner
Mineral oil based process oil (Idemitsu Kosan K.K., PW-380).

The above-mentioned components were compounded in amounts (parts by weight) as shown in Table 4 and kneaded by means of a Banbury mixer in a nitrogen atmosphere at 180 °C for 5 minutes. Each of the kneadates was then rolled to form a sheet which was cut by a sheet cutter into square pellets. These square pellets were compounded with 0.3 part by weight of divinylbenzene and 0.3 part by weight of 2,5-dimethyl-2,5-(tert-butylperoxy)hexane and mixed in a Henschel mixer with stirring. The resulting mixture was extruded by means of a twine screw extruder (L/D = 40, screw diameter: 50 mm) in a nitrogen atmosphere at 220 °C to obtain an elastomer composition. Further, the elastomer composition was extruded into a flat plate by means of a single screw extruder (screw diameter: 50 mm) equipped with a die for ASTM-A method (Garvey die) under the following conditions, in order to evaluate coating properties of the composition.

Conditions of extrusion molding

Set temperature: C1/C2/C3/C4/C5/H/D = 160/180/200/220/220/220/200 °C.
Screw revolution: 45 rpm.
Screen mesh: 40/80/40 mesh.

Table 4

| | Composition (parts by weight) | | | | | | Cross-cut test |
|---|---|---|---|---|---|---|---|
| | PP-2 | E-St(1) | E-St(2) | EPR | Butyl Rubber | Oil | |
| Ex. 25 | 20 | 20 | - | 50 | 5 | 5 | 60 |
| Ex. 26 | 20 | 30 | - | 40 | 5 | 5 | 50 |
| Ex. 27 | 20 | - | 20 | 50 | 5 | 5 | 40 |
| Comp. Ex. 7 | 20 | - | - | 70 | 5 | 5 | 0 |
| Comp. Ex. 8 | 20 | - | - | 65 | 5 | 5 | 0 |

E-ST(1): Ethylene/styrene random copolymer (ethylene content: 85 mol%, styrene content: 15 mol%)

E-ST(2): Ethylene/styrene random copolymer (ethylene content: 90 mol%, styrene content: 10 mol%)

## Claims

1. A vulcanized molded product having a surface decorative layer, comprising a vulcanized product of (A) an unsaturated olefin copolymer and a decorative layer provided on a surface of the vulcanized product, wherein the unsaturated olefin copolymer (A) is obtained from:

   (i) ethylene,
   (ii) an aromatic vinyl compound represented by the following formula (I),
   (iii) a non-conjugated polyene,
   and optionally
   (iv) an $\alpha$-olefin of 3 to 20 carbon atoms;

   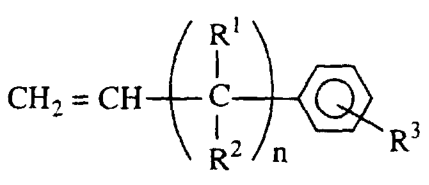

   (I)

   wherein $R^1$, $R^2$ and $R^3$ may be the same or different and are each a hydrogen atom or an alkyl group of 1 to 8 carbon atoms, and n is an integer of 0 to 5.

**2.** A vulcanized molded product having a surface decorative layer, comprising a vulcanized product of an unsaturated olefin copolymer composition and a decorative layer provided on a surface of the vulcanized product, wherein the unsaturated olefin copolymer composition comprises:

(A) the unsaturated olefin copolymer as claimed in claim 1, and
(B) a vulcanizing agent.

**3.** A vulcanized molded product having a surface decorative layer, comprising a vulcanized product of an unsaturated olefin copolymer composition and a decorative layer provided on a surface of the vulcanized product, wherein the unsaturated olefin copolymer composition comprises:

(A) the unsaturated olefin copolymer as claimed in claim 1,
(B) a vulcanizing agent, and
(C) a reinforcing agent.

**4.** A vulcanized molded product having a surface decorative layer, comprising a vulcanized product of an unsaturated olefin copolymer composition and a decorative layer provided on a surface of the vulcanized product, wherein the unsaturated olefin copolymer composition comprises:

(A) the unsaturated olefin copolymer as claimed in claim 1,
(B) a vulcanizing agent, and
(D) a liquid softening agent.

**5.** A vulcanized molded product having a surface decorative layer, comprising a vulcanized product of an unsaturated olefin copolymer composition and a decorative layer provided on a surface of the vulcanized product, wherein the unsaturated olefin copolymer composition comprises:

(A) the unsaturated olefin copolymer as claimed in claim 1,
(B) a vulcanizing agent,
(C) a reinforcing agent, and
(D) a liquid softening agent.

**6.** The vulcanized molded product having a surface decorative layer as claimed in any one of claims 1 to 5, wherein, in the unsaturated olefin copolymer, the molar ratio of constituent units derived from ethylene (i) to constituent units derived from the $\alpha$-olefin of 3 to 20 carbon atoms (iv) is in the range of 100/0 (ethylene/$\alpha$-olefin) to 40/60, and the molar ratio of the total of constituent units derived from ethylene (i) and constituent units derived from the $\alpha$-olefin of 3 to 20 carbon atoms (iv) to constituent units derived from the aromatic vinyl compound (ii) is in the range of 99.5/0.5 (ethylene+$\alpha$-olefin/aromatic vinyl compound) to 60/40.

**7.** The vulcanized molded product having a surface decorative layer as claimed in any one of claims 1 to 6, wherein the unsaturated olefin copolymer has an intrinsic viscosity [$\eta$], as measured in decalin at 135 °C, of 0.8 to 5.0 dl/g.

**8.** The vulcanized molded product having a surface decorative layer as claimed in any one of claims 1 to 7, wherein the decorative layer is a coating film formed from a coating selected from an acrylic resin coating, an epoxy resin coating, a polyester resin coating, an urethane resin coating and an alkyd resin coating.

**9.** A vulcanized molded product having a surface decorative layer, comprising a vulcanized product of an olefin elastomer composition and a decorative layer provided on a surface of the vulcanized product, wherein the olefin elastomer composition comprises (A) an unsaturated olefin copolymer and (E) an ethylene/$\alpha$-olefin copolymer rubber, said unsaturated olefin copolymer (A) being obtained from:

(i) ethylene,
(ii) an aromatic vinyl compound represented by the following formula (I),
(iii) a non-conjugated polyene,
and optionally
(iv) an $\alpha$-olefin of 3 to 20 carbon atoms;
the weight ratio of said unsaturated olefin copolymer (A) to said ethylene/$\alpha$-olefin copolymer rubber (E) being in the range of 1/99 ((A)/(E)) to 99/1;

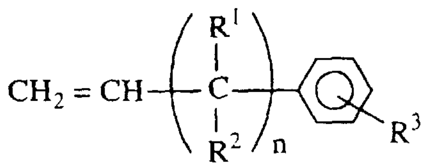

(I)

wherein $R^1$, $R^2$ and $R^3$ may be the same or different and are each a hydrogen atom or an alkyl group of 1 to 8 carbon atoms, and n is an integer of 0 to 5.

**10.** The vulcanized molded product having a surface decorative layer as claimed in claim 9, wherein the olefin elastomer composition further comprises (B) a vulcanizing agent in addition to the unsaturated olefin copolymer (A) and the ethylene/α-olefin copolymer rubber (E).

**11.** The vulcanized molded product having a surface decorative layer as claimed in claim 9, wherein the olefin elastomer composition further comprises (B) a vulcanizing agent and (C) a reinforcing agent in addition to the unsaturated olefin copolymer (A) and the ethylene/α-olefin copolymer rubber (E).

**12.** The vulcanized molded product having a surface decorative layer as claimed in claim 9, wherein the olefin elastomer composition further comprises (B) a vulcanizing agent and (D) a liquid softening agent in addition to the unsaturated olefin copolymer (A) and the ethylene/α-olefin copolymer rubber (E).

**13.** The vulcanized molded product having a surface decorative layer as claimed in claim 9, wherein the olefin elastomer composition further comprises (B) a vulcanizing agent, (C) a reinforcing agent and (D) a liquid softening agent in addition to the unsaturated olefin copolymer (A) and the ethylene/α-olefin copolymer rubber (E).

**14.** The vulcanized molded product having a surface decorative layer as claimed in any one of claims 9 to 13, wherein, in the unsaturated olefin copolymer, the molar ratio of constituent units derived from ethylene (i) to constituent units derived from the α-olefin of 3 to 20 carbon atoms (iv) is in the range of 100/0 (ethylene/α-olefin) to 40/60, and the molar ratio of the total of constituent units derived from ethylene (i) and constituent units derived from the α-olefin of 3 to 20 carbon atoms (iv) to constituent units derived from the aromatic vinyl compound (ii) is in the range of 99.5/0.5 (ethylene+α-olefin/aromatic vinyl compound) to 60/40.

**15.** The vulcanized molded product having a surface decorative layer as claimed in any one of claims 9 to 14, wherein the unsaturated olefin copolymer (A) has an intrinsic viscosity [η], as measured in decalin at 135 °C, of 0.8 to 5.0 dl/g.

**16.** The vulcanized molded product having a surface decorative layer as claimed in any one of claims 9 to 15, wherein the unsaturated olefin copolymer (A) has an iodine value of 1 to 50.

**17.** The vulcanized molded product having a surface decorative layer as claimed in any one of claims 9 to 16, wherein the decorative layer is a coating film formed from a coating selected from an acrylic resin coating, an epoxy resin coating, a polyester resin coating, an urethane resin coating and an alkyd resin coating.

**18.** A coated molded product of a thermoplastic resin composition, comprising a molded product of a thermoplastic resin composition and a coating film formed on the molded product, said thermoplastic resin composition comprising an ethylene/aromatic vinyl compound random copolymer and another thermoplastic resin.

**19.** The coated molded product of a thermoplastic resin composition as claimed in claim 18, wherein the ethylene/aromatic vinyl compound random copolymer has an aromatic vinyl compound content of 1 to 50 % by mol.

**20.** The coated molded product of a thermoplastic resin composition as claimed in claim 18 or claim 19, wherein, in the ethylene/aromatic vinyl compound random copolymer, a small amount of an α-olefin is further copolymerized.

**21.** The coated molded product of a thermoplastic resin composition as claimed in any one of claims 18 to 20, wherein

the thermoplastic resin is a polyolefin resin.

**22.** The coated molded product of a thermoplastic resin composition as claimed in claim 21, wherein the polyolefin resin is a polypropylene resin which contains propylene as its main component.

**23.** The coated molded product of a thermoplastic resin composition as claimed in any one of claims 18 to 20, wherein the thermoplastic resin composition comprises the ethylene/aromatic vinyl compound random copolymer, a polypropylene resin, an ethylene/$\alpha$-olefin copolymer rubber and talc.

**24.** The coated molded product of a thermoplastic resin composition as claimed in any one of claims 18 to 23, wherein the thermoplastic resin composition further comprises a polymer which contains styrene as its main component.

**25.** The coated molded product of a thermoplastic resin composition as claimed in any one of claims 18 to 24, wherein the coating film is a coating film formed from an urethane resin coating.

**26.** A coated molded product of an elastomer composition, comprising a molded product of an elastomer composition and a coating film formed on the molded product, said elastomer composition comprising an ethylene/aromatic vinyl compound random copolymer and an elastomer.

**27.** The coated molded product of an elastomer composition as claimed in claim 26, wherein the ethylene/aromatic vinyl compound random copolymer has an aromatic vinyl compound content of 1 to 50 % by mol.

**28.** The coated molded product of an elastomer composition as claimed in claim 26 or claim 27, wherein, in the ethylene/aromatic vinyl compound random copolymer, a small amount of an $\alpha$-olefin is further copolymerized.

**29.** The coated molded product of an elastomer composition as claimed in any one of claims 26 to 28, wherein the elastomer is a polyolefin elastomer.

**30.** The coated molded product of an elastomer composition as claimed in any one of claims 26 to 28, wherein the elastomer composition comprises the ethylene/aromatic vinyl compound random copolymer, an ethylene/$\alpha$-olefin copolymer rubber and a polypropylene resin.

**31.** The coated molded product of an elastomer composition as claimed in any one of claims 26 to 30, wherein the elastomer composition is a partially crosslinked elastomer composition.

**32.** The coated molded product of an elastomer composition as claimed in any one of claims 26 to 31, wherein the elastomer composition further comprises a polymer which contains styrene as its main component.

**33.** The coated molded product of an elastomer composition as claimed in any one of claims 26 to 32, wherein the coating film is a coating film formed from an urethane resin coating.

## INTERNATIONAL SEARCH REPORT

International application No.
PCT/JP98/00215

A. CLASSIFICATION OF SUBJECT MATTER
Int.Cl⁶ B32B25/14, B32B27/28, C08J7/04

According to International Patent Classification (IPC) or to both national classification and IPC

B. FIELDS SEARCHED

Minimum documentation searched (classification system followed by classification symbols)
Int.Cl⁶ B32B25/14, B32B27/28, C08J7/04, C08J5/00-5/18, C08L25/08, C08L47/00, C08L23/08

Documentation searched other than minimum documentation to the extent that such documents are included in the fields searched

Jitsuyo Shinan Koho 1926-1996 Jitsuyo Shinan Toroku Koho 1996-1998
Kokai Jitsuyo Shinan Koho 1971-1998 Toroku Jitsuyo Shinan Koho 1994-1998

Electronic data base consulted during the international search (name of data base and, where practicable, search terms used)
WPI/L

C. DOCUMENTS CONSIDERED TO BE RELEVANT

| Category* | Citation of document, with indication, where appropriate, of the relevant passages | Relevant to claim No. |
|---|---|---|
| X | JP, 8-143712, A (Tosoh Corp.), June 4, 1996 (04. 06. 96) (Family: none) | 1-33 |
| X | JP, 8-134140, A (Tosoh Corp.), May 28, 1996 (28. 05. 96) (Family: none) | 1-33 |
| X | JP, 8-216343, A (Tosoh Corp.), August 27, 1996 (27. 08. 96) (Family: none) | 1-7, 9-16 |
| Y | | 8, 17-33 |
| Y | JP, 4-28750, A (Mitsubishi Petrochemical Co., Ltd.), January 31, 1992 (31. 01. 92) (Family: none) | 8, 17-33 |

☐ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| April 20, 1998 (20. 04. 98) | April 28, 1998 (28. 04. 98) |
| Name and mailing address of the ISA/ Japanese Patent Office | Authorized officer |
| Facsimile No. | Telephone No. |

Form PCT/ISA/210 (second sheet) (July 1992)